# EUROPEAN PATENT APPLICATION

(11) **EP 4 386 495 A1**
(43) Date of publication of application: **19.06.2024**
(21) Application number: 22875026.1
(22) Date of filing: 28.09.2022
(51) Int. Cl.: G05B 15/02

(54) **DEVICE CONTROL METHOD, RELATED APPARATUS, AND COMMUNICATION SYSTEM**

(30) Priority: 30.09.2021 CN 202111166936
(71) Applicant: Huawei Technologies Co., Ltd., Shenzhen, Guangdong 518129 (CN)
(72) Inventor: MI, Yuhao, Shenzhen, Guangdong 518129 (CN); YAN, Guoqi, Shenzhen, Guangdong 518129 (CN); ZHANG, Ting, Shenzhen, Guangdong 518129 (CN); LUO, Guorong, Shenzhen, Guangdong 518129 (CN); XIANG, Xingyu, Shenzhen, Guangdong 518129 (CN); CHEN, Danmei, Shenzhen, Guangdong 518129 (CN)
(74) Representative: Thun, Clemens
(86) International application number: PCT/CN2022/122299
(87) International publication number: WO 2023/051643

(57) **Abstract**

This application provides a device control method, a related apparatus, and a communication system. In the method, an electronic device may classify home devices into one or more device groups based on a spatial attribute of the home device and a function that can be provided by the home device. One device group may include all home devices that are in one space and that can provide one function. The electronic device may provide a control used to control all home devices in one device group by one tap. The foregoing method can meet a requirement of a user for controlling home devices, in different spaces, of different types, and simplify a user operation of controlling the home devices in batches by the user.

## Description

This application claims priority to Chinese Patent Application No. 202111166936.8, filed with the China National Intellectual Property Administration on September 30, 2021 and entitled "DEVICE CONTROL METHOD, RELATED APPARATUS, AND COMMUNICATION SYSTEM", which is incorporated herein by reference in its entirety.

### TECHNICAL FIELD

This application relates to the field of terminal technologies, and in particular, to a device control method, a related apparatus, and a communication system.

### BACKGROUND

With development of internet of things technologies, smart home devices are increasingly widely used. A user may control a smart home device by using a smart home application (application, APP) in an electronic device like a mobile phone or a tablet computer. In a scenario in which a plurality of smart home devices at home need to be controlled, the user needs to separately operate, in the smart home app, a plurality of controls used to control the smart home devices. In the foregoing process of controlling the smart home device, user operations are complex.

### SUMMARY

This application provides a device control method, a related apparatus, and a communication system. The device control method can meet a requirement of a user for controlling home devices, in different spaces, of different types, and simplify a user operation of controlling the home devices in batches by the user

According to a first aspect, this application provides a device control method. In the method, the electronic device may display a first control. The first control is associated with a first device group. The first device group may include X home devices that are in a first space and that can provide a first function, and the first device group is classified by the electronic device based on a spatial attribute of the home device and a function that can be provided by the home device. X is a positive integer. The electronic device receives a first user operation performed on the first control, and may send a first control instruction to the X home devices in the first device group. The first control instruction enables a home device that receives the first control instruction to perform an operation indicated by the first control instruction.

The X home devices may be all home devices that are in the first space and that can provide the first function.

It can be learned from the foregoing method that a user may not manually group the home devices. After the electronic device groups the home devices based on the function and/or the spatial attribute of the home device, the user may control a plurality of home devices in batches. The plurality of home devices may be home devices that are in one space and that can provide one function. This not only reduces difficulty in controlling the home devices in batches by the user, but also simplifies a user operation of controlling the home devices by the user

With reference to the first aspect, in some embodiments, the electronic device may display a second control. The electronic device receives a second user operation performed on the second control, and displays a first user interface. The first user interface may include device information of Y home devices in the first space, and device information of one home device in the device information of the Y home devices includes one or more of the following: a control used to control the one home device, a working status of the one home device, and data monitored by the one home device. Y is a positive integer greater than or equal to X. The Y home devices include the X home devices.

The Y home devices may be all home devices in the first space.

It can be learned from the foregoing embodiments that the user may view home devices in a space through the second control, and control the home devices in the space in batches or separately. This can simplify the user operation of controlling the home devices by the user.

With reference to the first aspect, in some embodiments, there are a plurality of home devices in the first device group. The electronic device displays a third control. The electronic device receives a third user operation performed on the third control, and displays a second user interface. The second user interface includes device information of the X home devices, and device information of one home device in the device information of the X home devices includes one or more of the following: a control used to control the one home device, a working status of the one home device, and data monitored by the one home device.

With reference to the first aspect, in some embodiments, the electronic device may obtain data monitored by a home device managed by the electronic device. The electronic device determines, based on a function that can be provided by the home device, a category of the data monitored by the home device. The category of the data monitored by the home device includes one or more of the following: environment monitoring data, network data, water use data, and security protection data. The electronic device displays a third user interface. The third user interface includes one component or a plurality of components, and one component displays one category of data monitored by the home device.

It can be learned from the foregoing embodiments that the electronic device may classify, based on the categories such as the environment monitoring data, the network data, the water use data, and the security protection data, the data monitored by the home device, and separately present the data to the user. In this way, the user can quickly view a status of a home environment, a home network, home security protection, home water use, and the like, and does not need to separately view corresponding home device data on a display interface of each smart home device.

With reference to the first aspect, in some embodiments, the electronic device may display a fourth control. The fourth control may be associated with a second device group. The second device group includes Z home devices that are in the first space and that can provide a second function, and the second device group is classified by the electronic device based on a spatial attribute of the home device and a function that can be provided by the home device. Z is a positive integer. The Z home devices are included in the Y home devices. The electronic device receives a fourth user operation performed on the fourth control, and sends a second control instruction to the Z home devices in the second device group. The second control instruction enables a home device that receives the second control instruction to perform an operation indicated by the second control instruction.

The Z home devices may be all home devices that are in the first space and that can provide the second function.

With reference to the first aspect, in some embodiments, the electronic device receives a fifth user operation, and combines the first control and the fourth control into a fifth control. The electronic device displays the fifth control. The fifth control is associated with the first device group and the second device group. The electronic device receives a sixth user operation performed on the fifth control, sends the first control instruction to the X home devices in the first device group, and sends the second control instruction to the Z home devices in the second device group.

It can be learned from the foregoing embodiments that the user may manually modify a group of home devices that are already classified by the electronic device, for example, combine a plurality of home devices that are in one space and that can provide different functions into one device group. The electronic device may provide a control used to control, by one tap, a home device that is in one space and that can provide a plurality of functions. In this way, a control used to control home devices included in one device group can better meet a user requirement, and a user operation of controlling a plurality of home devices by a user can be simplified.

With reference to the first aspect, in some embodiments, the electronic device receives a seventh user operation performed on the fifth control, and separates the fifth control into the first control and the fourth control. The sixth user operation and the seventh user operation are user operations performed on the fifth control in different manners.

It can be learned from the foregoing embodiments that the electronic device may provide one control used to control a plurality of home devices that can provide a plurality of functions. The user may adjust a home device that can be controlled by the one control. For example, the one control is changed to a plurality of controls used to respectively control all home devices that can provide each of the plurality of functions. In this way, the user can adjust, based on a preference and an operation habit of the user, a home device that can be controlled by the control, to meet a requirement for controlling home devices, in different spaces, of different types.

With reference to the first aspect, in some embodiments, the first control and the second control may be displayed on a first card. The electronic device may further display a second card. A sixth control and a seventh control are displayed on the second card. The sixth control is associated with a third device group. The third device group includes M home devices that are in a second space and that can provide the first function, and the third device group is classified by the electronic device based on a spatial attribute of the home device and a function that can be provided by the home device. M is a positive integer. The sixth control is used to trigger the electronic device to send a third control instruction to the M home devices in the third device group, and the third control instruction enables a home device that receives the third control instruction to perform an operation indicated by the third control instruction. The seventh control is used to trigger the electronic device to display a fourth user interface. The fourth user interface includes device information of W home devices in the second space. Device information of one home device in the device information of the W home devices includes one or more of the following: a control used to control the one home device, a working status of the one home device, and data monitored by the one home device.

The M home devices may be all home devices that are in the second space and that can provide the first function.

With reference to the first aspect, in some embodiments, the first electronic device receives an eighth user operation, and may combine the first card and the second card into a third card. The electronic device displays the third card. An eighth control is displayed on the third card. The eighth control is associated with the first device group and the third device group. The electronic device receives a ninth user operation performed on the eighth control, sends the first control instruction to the X home devices in the first device group, and sends the third control instruction to the M home devices in the third device group.

It can be learned from the foregoing embodiments that the user may manually modify a group of home devices that are already classified by the electronic device, for example, combine home devices in a plurality of spaces. In this case, the plurality of spaces may be equivalent to one space after the combination. One device group may include home devices in the plurality of spaces. The electronic device may provide a control for controlling, by one tap, all home devices that are in the plurality of spaces and that provide one function. For example, the user may turn on all lights in a living room and a primary bedroom by one tap, or turn off all lights in the living room and the primary bedroom by one tap. In this way, a control used to control home devices included in one device group can better meet a user requirement, and a user operation of controlling a plurality of home devices by a user can be simplified.

With reference to the first aspect, in some embodiments, a ninth control is further displayed on the third card. The electronic device receives a tenth user operation performed on the ninth control, and displays a fifth user interface. The fifth user interface includes the device information of the Y home devices in the first space and the device information of the W home devices in the second space.

With reference to the first aspect, in some embodiments, the electronic device receives an eleventh user operation performed on the eighth control, and sends the first control instruction to the X home devices in the first device group. The electronic device receives a twelfth user operation performed on the eighth control, and sends the third control instruction to the M home devices in the third device group. The ninth user operation, the eleventh user operation, and the twelfth user operation are user operations performed on the eighth control in different manners.

It can be learned from the foregoing embodiments that, the user may control, by using different user operations performed on the controls used to control the plurality of home devices in the plurality of spaces by one tap, a home device that is located in one space and that is in the plurality of home devices. In the foregoing embodiments, after the home devices in the plurality of spaces are combined, a requirement of the user for separately controlling a home device in one of the spaces can be met.

With reference to the first aspect, in some embodiments, the electronic device receives a thirteenth user operation performed on the eighth control, and separates the eighth control into a ninth control and a tenth control. The ninth control is used to trigger the electronic device to send the first control instruction to the X home devices in the first device group. The tenth control is used to trigger the electronic device to send the third control instruction to the M home devices in the third device group.

It can be learned from the foregoing embodiments that, after combining the home devices in the plurality of spaces, the electronic device may provide, based on a user operation of separating a device group, a control used to control all home devices that are in one space and that can provide one function. In this way, after the home devices in the plurality of spaces are combined, the user can still separately control all home devices that are in one of the spaces and that can provide one function. In the foregoing embodiments, the user operation of controlling the plurality of home devices by the user can be simplified, and a requirement of the user for separately controlling some of the home devices can be met.

With reference to the first aspect, in some embodiments, the electronic device receives a fourteenth user operation performed on the third card, and may separate the third card into the first card and the second card.

With reference to the first aspect, in some embodiments, the electronic device receives a fifteenth user operation. The fifteenth user operation is used to add a first home device as a home device managed by the electronic device. The first home device is a home device that is in the first space and that can provide the first function. The electronic device receives a sixteenth user operation performed on the first control, and sends the first control instruction to the X home devices in the first device group and the first home device. The first device group includes the first home device.

It can be learned from the foregoing embodiments that, for a home device that is newly added to a home, the electronic device may integrate the home device and another home device that can provide a same function into a device group, and provide a control used to control all home devices in the device group. In this way, the user may not need to group a newly added home device each time after newly adding the home device. This can help the user control the home device more efficiently, and simplify the user operation of controlling the plurality of home devices.

With reference to the first aspect, in some embodiments, before displaying the first control, the electronic device may display an eleventh control. The eleventh control is associated with a fourth device group. The fourth device group includes X+1 home devices that are in the first space and that can provide the first function, and the fourth device group is classified by the electronic device based on a spatial attribute of the home device and a function that can be provided by the home device. The X+1 home devices include the X home devices and a second home device. The eleventh control is used to trigger the electronic device to send the first control instruction to the X+1 home devices in the fourth device group. The electronic device receives a seventeenth user operation, and removes the second home device from the fourth device group, to obtain the first device group.

It may be understood that the first control and the eleventh control may be represented as a same control on a user interface.

It can be learned from the foregoing embodiments that the user may manually modify a group of home devices that are already classified by the electronic device, for example, remove a home device from a device group. In this case, a control used to control home devices included in the device group may no longer be used to control the removed home device. In the foregoing embodiments, a control used to control home devices included in one device group can better meet the user requirement, and the user operation of controlling the plurality of home devices by the user can be simplified.

According to a second aspect, this application provides an electronic device. The electronic device includes a communication apparatus, a memory, and a processor. The memory may be configured to store a computer program, and the processor may be configured to invoke the computer program, so that the electronic device performs the method according to any one of the possible implementations of the first aspect.

According to a third aspect, this application provides a chip. The chip is used in an electronic device. The chip includes one or more processors. The processor is configured to invoke computer instructions, so that the electronic device performs any one of the possible implementations of the first aspect.

According to a fourth aspect, this application provides a computer program product including instructions. When the computer program product runs on an electronic device, the electronic device is enabled to perform the method according to any one of the possible implementations of the first aspect.

According to a fifth aspect, this application provides a computer-readable storage medium, including instructions. When the instructions are run on an electronic device, the electronic device is enabled to perform the method according to any one of the possible implementations of the first aspect.

It may be understood that the electronic device according to the second aspect, the chip according to the third aspect, the computer program product according to the fourth aspect, and the computer-readable storage medium according to the fifth aspect are all configured to perform the method provided in embodiments of this application. Therefore, for beneficial effects that can be achieved by the method, refer to beneficial effects in the corresponding method. Details are not described herein again.

### BRIEF DESCRIPTION OF DRAWINGS

FIG. 1 is a schematic diagram of a structure of a communication system according to an embodiment of this application;
FIG. 2A is a schematic diagram of a structure of an electronic device 100 according to an embodiment of this application;
FIG. 2B is a schematic diagram of another structure of an electronic device 100 according to an embodiment of this application;
FIG. 3A to FIG. 3M are schematic diagrams of some scenarios in which an electronic device 100 provides a control interface for a smart home device and presents home device data according to an embodiment of this application;
FIG. 4A to FIG. 4C are schematic diagrams of a scenario in which all lights in a kitchen are turned on by one tap according to an embodiment of this application;
FIG. 5A to FIG. 5D are schematic diagrams of some scenarios of viewing a smart home device in a kitchen according to an embodiment of this application;
FIG. 6A to FIG. 6D are schematic diagrams of some scenarios of controlling a smart home device according to an embodiment of this application;
FIG. 7A and FIG. 7B are schematic diagrams of some scenarios of controlling a smart home device according to an embodiment of this application;
FIG. 8A to FIG. 8F are schematic diagrams of some scenarios of integrating smart home devices according to an embodiment of this application;
FIG. 9A to FIG. 9D are schematic diagrams of some scenarios of modifying a group of a smart home device according to an embodiment of this application;
FIG. 10A to FIG. 10C are schematic diagrams of some scenarios of modifying a group of a smart home device according to an embodiment of this application;
FIG. 11A and FIG. 11B are schematic diagrams of some scenarios of modifying a group of a smart home device according to an embodiment of this application;
FIG. 12A to FIG. 12D are schematic diagrams of some scenarios of modifying a group of a smart home device according to an embodiment of this application;
FIG. 13A to FIG. 13D are schematic diagrams of some scenarios of modifying a group of a smart home device according to an embodiment of this application;
FIG. 14A to FIG. 14C are schematic diagrams of some scenarios of controlling a smart home device according to an embodiment of this application;
FIG. 15A to FIG. 15C are schematic diagrams of some scenarios of controlling a smart home device according to an embodiment of this application;
FIG. 16A to FIG. 16C are schematic diagrams of some scenarios of modifying a group of a smart home device according to an embodiment of this application;
FIG. 17A to FIG. 17D are schematic diagrams of some scenarios of modifying a group of a smart home device according to an embodiment of this application;
FIG. 18A to FIG. 18C are schematic diagrams of some scenarios of modifying a group of a smart home device according to an embodiment of this application;
FIG. 19 is a schematic diagram of a scenario in which an electronic device 100 displays data preview of a plurality of types of home devices according to an embodiment of this application;
FIG. 20A to FIG. 20C are schematic diagrams of a scenario in which an electronic device 100 displays detailed content of home environment data according to an embodiment of this application;
FIG. 21 is a schematic diagram of a scenario in which an electronic device 100 displays detailed content of home network data according to an embodiment of this application;
FIG. 22A and FIG. 22B are schematic diagrams of a scenario in which an electronic device 100 displays detailed content of home security protection data according to an embodiment of this application;
FIG. 23 is a schematic diagram of a scenario in which an electronic device 100 displays detailed content of home water use data according to an embodiment of this application;
FIG. 24 is a schematic diagram of a structure of another communication system according to an embodiment of this application; and
FIG. 25A to FIG. 25C are a flowchart of a device control method according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

Wide application of smart home devices can provide people with a more comfortable, secure, and convenient home life. However, an increase of smart home devices at home also brings troubles to a user in controlling the smart home devices. For example, when a plurality of smart home devices such as a light and an air conditioner in a living room need to be turned on, the user usually needs to separately tap a plurality of turn-on controls of the plurality of smart home devices in a smart home app. The foregoing complex user operations are inconvenient for the user to efficiently control the smart home device.

In a possible implementation, a smart home app in an electronic device (for example, a mobile phone or a tablet computer) may classify a plurality of smart home devices of a same type in smart home devices into one device group based on a user operation, and provide a control used to control all smart home devices in the one device group by one tap. The same type may include a lighting type, a temperature control type, or the like. For example, in response to a user operation of classifying five lights into one light group, the smart home app may combine the five lights into one light group, and provide a turn-on control and a turn-off control. The turn-on control may be used to trigger the electronic device to turn on all the five lights in the light group. The turn-off control may be used to trigger the electronic device to turn off all the five lights.

It can be learned that, when the plurality of smart home devices need to be controlled, the user may not separately operate a plurality of controls used to control the plurality of smart home devices. In the foregoing method, a user operation performed when the user controls the plurality of smart home devices can be simplified. However, in the foregoing method, the user needs to manually classify the plurality of smart home devices into one device group, and only smart home devices of a same type can be classified into one device group. The user needs to understand and learn rules for classifying the device group. This brings difficulties to the user in controlling the smart home devices. In addition, when the user needs to control different types of smart home devices, the user still needs to tap corresponding controls for a plurality of times. Consequently, user operations are still complex.

In another possible implementation, the smart home app in the electronic device may determine, based on a user operation, a trigger condition and a trigger result that are used to control a plurality of smart home devices of a same type or different types in the smart home devices. The trigger condition may include that a user operation of manually tapping a control by the user is received, data monitored by the smart home device meets preset data, and the like. The trigger result may include an identifier of a smart home device to be triggered by the trigger condition, a manner of triggering the smart home device, and the like. For example, in response to a user operation of setting the trigger condition and the trigger result to returning home and turning on a light and an air conditioner in a living room, the smart home app may classify the light and the air conditioner in the living room into a device group, and provide a control that indicates returning home. In response to a user operation performed on the control that indicates returning home, the electronic device may send a turn-on instruction to the light and the air conditioner in the living room, to turn on the light and the air conditioner in the living room.

It can be learned that, in the foregoing method, the user can control a plurality of smart home devices of a same type or different types in batches. This simplifies a user operation performed when the user controls the plurality of smart home devices. However, in the foregoing method, the user needs to manually set the trigger condition and the trigger result. To be specific, the user needs to first learn a meaning expressed by each trigger condition, and orchestrate the trigger result based on an ability of each smart home device. The user still has great difficulties in a specific operation process.

This application provides a device control method. The method can help a user control a smart home device efficiently and conveniently. The electronic device may classify a plurality of smart home devices into one or more device groups based on types and abilities of the smart home devices, and provide a control used to control all smart home devices in one device group by one tap. One device group may include a smart home device that may be configured to provide one or more functions.

Types of the foregoing functions may include a lighting function, a sunshade function, an environment monitoring function, a security protection function, a network function, a water use function, and the like. The electronic device may determine, based on a type and an ability of the smart home device, a specific function that is implemented by the smart home device.

In some embodiments, the electronic device may alternatively classify the smart home device based on a spatial attribute of the smart home device. The spatial attribute of the smart home device may indicate a location of the smart home device. For example, if the spatial attribute of the smart home device is a kitchen, it may indicate that the smart home device is located in the kitchen. Based on the spatial attribute of the smart home device, the electronic device 100 may classify a plurality of smart home devices into device groups corresponding to various spaces. For example, one device group may include a plurality of smart home devices having a same spatial attribute. The electronic device may provide a control used to control all smart home devices in one device group by one tap, for example, turn on smart home devices such as a light and an air conditioner in a living room by one tap.

Optionally, the electronic device may classify the smart home devices into one or more device groups based on the spatial attribute of the smart home device and a function that can be provided by the smart home device, and provide the control used to control all smart home devices in one device group by one tap. For example, one device group may include all smart home devices that are in one control and that can provide one function.

It can be learned that, in the foregoing method, the user may not manually group the smart home devices. After the electronic device groups the smart home devices based on the function and/or the spatial attribute of the smart home device, the user may control a plurality of smart home devices in batches. The plurality of smart home devices may be devices of a same type or different types. The plurality of smart home devices may also be devices located in a same space or different spaces. In the foregoing method, the control that is provided by the electronic device and that is used to control the smart home device can meet a requirement of the user for controlling smart home devices, in different spaces, of different types. This not only reduces difficulty in controlling the smart home devices in batches by the user, but also simplifies a user operation of controlling the smart home devices by the user

The space may represent a specific location. In different scenarios, the space may be classified in different manners.

For example, different locations in a home may have different purposes. In the home, a space can be a location with a purpose. The space in the home may include an entry way, a living room, a kitchen, a primary bedroom, a secondary bedroom, a study, a balcony, a bathroom, and the like. For another example, a house has different floors. A space in the house may be classified by floor. The space in the house may include a first floor, a second floor, a third floor, and the like. For another example, a house has different rooms. Different rooms are separated by physical objects (such as walls). A space in the house can be classified based on a unit of the room separated by physical objects. The space in the house may include a room A, a room B, a room C, and the like. For another example, different locations in an exhibition region may be used to exhibit different articles. The regions for exhibiting different articles are not separated by physical objects. A space in the exhibition region may be classified based on a unit of the region for exhibiting different articles. The space in the exhibition region may include an article A exhibition region, an article B exhibition region, an article C exhibition region, and the like.

Not limited to the foregoing one-level classification manner, the space may further include a multi-level classification manner. In other words, the spatial attribute of the smart home device may have a plurality of levels.

For example, a house has different floors (for example, a first floor, a second floor, and a third floor). Each floor has a plurality of rooms (for example, a room 301 and a room 302 on the third floor). One room includes regions with different purposes (for example, a bedroom and a bathroom in the room 302). A smart home device is located in the bedroom in the room 302 on the third floor of the house. In this case, a spatial attribute of the smart home device may be third floor-room 302-bedroom.

It may be understood that, when the spatial attribute of the smart home device has a plurality of levels, the control that is provided by the electronic device and that is used to control the smart home device may also have a plurality of levels. For example, the electronic device may provide a control used to control all smart home devices on the third floor of the foregoing house, a control used to control all smart home devices in a room on the third floor, and a control used to control all smart home devices included in regions with different purposes in a room.

A space classification manner is not limited in embodiments of this application.

For ease of understanding, some concepts related to the device control method in this application are specifically described herein.

### 1. Control intent

The control intent may indicate a manner in which a user may control a smart home device. The control intent may be determined based on a type (device type) and an ability (ability) of the smart home device. For example, a control intent of the user on a light may include turning on the light, turning off the light, adjusting brightness, and adjusting a color temperature. A control intent of the user on an air conditioner may include turning on the air conditioner, turning off the air conditioner, and adjusting a temperature. A control intent of the user on a curtain may include opening the curtain, closing the curtain, and adjusting an opening degree of the curtain.

### 2. Function (function)

The function may include a combination of different control intents. In other words, different control intents of the user on the smart home device may be combined to provide one function. One function can meet one type of requirement of a user. A type of the function may include a lighting function, a sunshade function, an environment monitoring function, a security protection function, a network function, a water use function, and the like.

For example, a control intent in the lighting function may include turning on a light, turning off the light, adjusting brightness, and adjusting a color temperature. In other words, a smart home device (for example, a light) that has abilities of brightness adjustment, color temperature adjustment, and the like may be configured to provide the lighting function. The lighting function can meet a requirement of the user for lighting.

A control intent in the sunshade function may include opening a curtain, closing the curtain, and adjusting an opening degree of the curtain. In other words, a curtain that has abilities of adjusting the opening degree of the curtain and the like can be configured to provide the sunshade function. The sunshade function can meet a requirement of the user for sunshade.

A control intent in the environment monitoring function may include turning on or off an air quality monitor, turning on or off an air purifier, adjusting an air purification mode, turning on or off a temperature monitor, turning on or off an air conditioner, adjusting a temperature, turning on or off a humidity monitor, turning on or off a humidifier, and turning on or off a dehumidifier. In other words, a smart home device that has abilities of air quality monitoring, air purification, temperature monitoring, temperature adjustment, humidity monitoring, humidity adjustment, and the like may be configured to provide the environment monitoring function. The environment monitoring function meets requirements of the user for air purification, temperature adjustment, and humidity adjustment.

A control intent in the security protection function may include turning on or off a camera, turning on or off a door lock, turning on or off a human body movement sensor, and turning on or off a buzzer. In other words, a smart home device that has photographing, video recording, alert, and alarm light abilities may be configured to provide the security protection function. The security protection function can meet requirements of the user for monitoring and protecting home security.

A control intent in the network function may include enabling or disabling a network access device, network acceleration, and managing a device that accesses the network access device. In other words, a smart home device (for example, a router) that has abilities of network acceleration, network access device management, and the like may be configured to provide the network function. The network function can meet a requirement of the user for Internet access.

A control intent in the water use function may include turning on or off a water quality monitor, turning on or off a water heater, adjusting a water temperature, and turning on or off a water quantity monitor. In other words, a smart home device that has abilities of water quality monitoring, water quantity monitoring, and water temperature adjustment may be configured to provide the water use function. The water use function can meet a requirement of the user for water.

It can be learned from the foregoing concepts of the control intent and the function that the control intent describes a control manner of the smart home device. The foregoing functions describe user requirements that can be met by the smart home device. According to the device control method in this application, the smart home device can be grouped based on the type of the function, and a control interface can be provided for the user based on the control intent. The control interface may include a control for turning on a plurality of smart home devices in one device group by one tap, a control for adjusting an operating mode of a plurality of smart home devices in one device group by one tap, and the like.

It may be understood that the smart home device is classified based on a requirement level of the user. In this way, in the method for controlling the smart home device, a residential requirement of the user can be better met, and a user operation of controlling the smart home device by the user can be simplified.

### 3. Skill (skill)

The skill can be used to provide an intelligent service for the user through linkage between the plurality of home devices based on the function (function) that can be provided by smart home device. An electronic device or a cloud server may determine smart home devices equipped at user's home, and obtain user data, environment data at home, and status data of the smart home devices. Based on the user data, the environment data at home, and the status data of the smart home device, the electronic device or the cloud server may implement one or more skills through linkage between the plurality of smart home devices. The user data may include a rhythmic habit, time for leaving home, time for returning home, and the like. The environment data at home may include ambient brightness, an ambient temperature, ambient humidity, air quality, water quality, a gas use status, and the like. The status data of the smart home device may include an on or off state, a working mode, and the like.

The skill may include adjusting brightness and/or a color temperature of the light based on the rhythmic habit of the user, adjusting a temperature of the air conditioner based on a change of the ambient temperature, controlling a working status of the air purifier based on a change of the air quality, adjusting the brightness of the light based on a change of the ambient brightness, controlling, based on whether the user is at home and a status of the user at home, a working status of the smart home device that provides the security protection function, and the like.

Herein, an example in which the cloud server is used as a control center to create and implement the skill is used for description.

For example, the cloud server may determine that the smart home device that can provide the lighting function is equipped at the user's home. The cloud server may provide the lighting function for the user based on the rhythmic habit (for example, a habit of getting up or falling asleep) of the user. For example, the cloud server may turn on the light when determining that the user gets up, and turn off the light or increase the brightness of the light when determining that the user falls asleep.

The cloud server may determine that the smart home device that can provide the environment monitoring function is equipped at the user's home. The smart home device that provides the environment monitoring function includes the air quality monitor and the air purifier. When the air quality monitor detects that air quality at home is poor (for example, PM2.5 is lower than a preset air quality threshold), the cloud server may turn on the air purifier to purify the air quality at home.

The cloud server may determine that the smart home device that can provide the security protection function is equipped at the user's home. The smart home device that provides the security protection function includes the camera and the buzzer. The cloud server may determine, based on image or video data collected by the camera, whether a person stays at a door, and when determining that a person stays at the door, trigger the buzzer to ring to give an alarm.

It can be learned that the foregoing skill describes intelligent linkage between the smart home devices. In an implementation process of a skill, a smart home device involved in the skill may be triggered to enter a state indicated by the skill. The electronic device or the cloud server creates and implements the skill, so that the smart home device can provide an intelligent and personalized service for the user, and a user operation of controlling the smart home device by the user can be simplified.

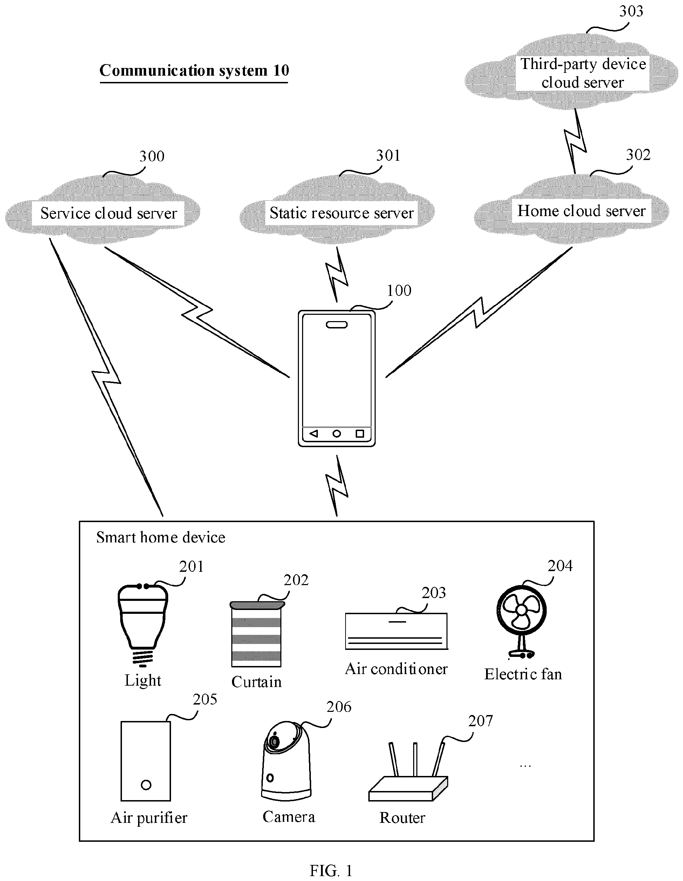

**FIG. 1** **is an example of a schematic diagram of a structure of a communication system 10 according to an embodiment of this application.**

The communication system 10 may include an electronic device 100, one or more smart home devices, a service cloud server 300, a static resource server 301, a home cloud server 302, and a third-party device cloud server 303. The one or more smart home devices may include a light 201, a curtain 202, an air conditioner 203, an electric fan 204, an air purifier 205, a camera 206, and a router 207. Not limited to the smart home device shown in FIG. 1, the communication system 10 may further include more or fewer smart home devices.

The electronic device 100 may be used by a user to control the smart home device, and view an operating status of the smart home device and data monitored by the smart home device. An app (for example, a smart home app) used to control the smart home device is installed in the electronic device 100. The electronic device 100 may provide, by using the smart home app, a control interface used to control the smart home device. The control interface may be configured to control the smart home device. A manner in which one control interface controls the smart home device may be determined based on the foregoing control intent. A smart home device that can be controlled by one control interface may be a smart home device included in one or more device groups obtained after the smart home devices are grouped based on the type of the function in the foregoing embodiment. In other words, in response to a user operation performed on one control interface, the electronic device 100 may send, to a smart home device that can be controlled by the one control interface, a control instruction (for example, a turn-on instruction) corresponding to a control manner indicated by the one control interface.

In a possible implementation, the electronic device 100 and all smart home devices other than the router 207 are connected to the router 207. The router 207 may provide a network access service for a device connected to the router 207. The electronic device 100 may send a control instruction to the smart home device through the router 207, to control the smart home device. In a possible implementation, a short-range communication connection like a Bluetooth connection/a ZigBee communication connection/a wireless local area network (wireless local area network, WLAN) direct connection is established between the electronic device 100 and the smart home device. The electronic device 100 may send the control instruction to the smart home device through the short-range communication connection, to control the smart home device. In another possible implementation, a smart home device other than the smart router 207 is connected to the router 207, to access a network. The service cloud server 300 may send a control instruction to the smart home device that accesses the network. In this case, the electronic device 100 may send a control instruction to the smart home device by using the service cloud server 300, to remotely control the smart home device.

The electronic device 100 may be a portable electronic device using Harmony^{®}, iOS^{®}, Android^{®}, Microsoft^{®}, or another operating system, for example, a mobile phone, a tablet computer, a smartwatch, a smart band, or the like, or may be a non-portable electronic device, for example, a laptop computer (Laptop) with a touch-sensitive surface or a touch panel, a desktop computer with a touch-sensitive surface or a touch panel, or the like. A type of the electronic device 100 is not limited in embodiments of this application.

The smart home device may be a home device having a networking function. In addition to the smart home device shown in FIG. 1, the smart home device may further include a door lock, a sound box, a robotic vacuum cleaner, a socket, a body fat scale, a table lamp, a refrigerator, a washing machine, a water heater, a microwave oven, a television, a set-top box, a humidifier, a dehumidifier, a water purifier, a buzzer, a human body movement sensor, an air quality monitor, a gas monitor, a water leakage detector, a smoke alarm, a valve monitor, and the like. The smart home device may be connected to the network through a network access device (for example, the router 207).

The smart home devices may be manufactured by manufacturers of one or more smart home devices. The manufacturers of the one or more smart home devices may include a manufacturer of the electronic device 100.

The service cloud server 300 may be configured to execute various services related to the smart home device, for example, manage a relationship between the electronic device 100 and the smart home device, create and implement a skill, maintain a status of the skill and data generated in an implementation process, obtain an operating status of the smart home device and data monitored the smart home device, send the operating status of the smart home device and the data monitored by the smart home device to the electronic device 100, send a control instruction to the smart home device, and process a sharing visibility problem of the smart home devices in different spaces.

The service cloud server 300 may be an application server corresponding to the app used to control the smart home device.

In a possible implementation, the electronic device 100 may establish a binding relationship with a plurality of smart home devices. The binding relationship may be established between the electronic device 100 and the smart home device by using an account. In other words, a logged-in account on the app that is in the electronic device 100 and that is used to control the smart home device is the same as a logged-in account on the smart home device. Optionally, the electronic device 100 and the smart home device may further establish a binding relationship in a manner of scanning a two-dimensional code, Bluetooth pairing, or the like. A method for establishing the binding relationship between the electronic device 100 and the smart home device is not specifically limited in embodiments of this application.

The service cloud server 300 may store the binding relationship between the electronic device 100 and the smart home device. In this way, the service cloud server 300 may be used as an intermediate device to send the control instruction of the electronic device 100 to the smart home device that establishes the binding relationship with the electronic device 100, and send the operating status of the smart home device and the data monitored by the smart home device to the electronic device 100 that establishes the binding relationship with the smart home device.

The static resource server 301 may be configured to store a relationship between the smart home device and the control intent, the function, and the skill, that is, a manner in which the smart home device can be controlled, a function that can be provided by the smart home device, and a linkage rule when the smart home device provides the skill. The static resource server 301 may be further configured to update the relationship between the smart home device and the control intent, the function, and the skill.

The service cloud server 300 may obtain, from the static resource server 301, the relationship between the smart home device and the control intent, the function, and the skill, determine a function that can be provided by a smart home device at user's home, and create a skill.

The electronic device 100 may obtain, from the service cloud server 300, the function that can be provided by the smart home device (namely, the smart home device at the user's home) that establishes the binding relationship with the electronic device 100, to provide, for the user based on the foregoing function, a control interface for controlling a plurality of smart home devices by one tap. The electronic device 100 may further obtain the foregoing skill from the service cloud server 300, and indicate the smart home device at the user's home to implement the skill. Optionally, the foregoing skill may alternatively be implemented by the smart home device under indication of the service cloud server 300.

Optionally, the electronic device 100 may alternatively obtain, from the service cloud server 300, a list of smart home devices that establish the binding relationship with the electronic device 100. Based on the foregoing list of smart home devices, the electronic device 100 may determine the function that can be provided by the smart home device at the user's home, and provide, for the user based on the foregoing function, the control interface for controlling the plurality of smart home devices by one tap.

The third-party device cloud server 303 may be a cloud server of the manufacturer of the smart home device. If there are a plurality of manufacturers of the smart home devices, the third-party device cloud server 303 may include cloud servers of the plurality of manufacturers of the smart home devices. A cloud server of a manufacturer of one smart home device may be configured to manage a smart home device produced by the manufacturer of the one smart home device, and store data generated in a use process of the smart home device produced by the manufacturer of the one smart home device, for example, multimedia data (for example, a picture or a video), user account data, and the like.

The home cloud server 302 may be configured to establish a communication connection to the third-party device cloud server 303, and obtain data like multimedia data from the third-party device cloud server 303. The home cloud server 302 may send, to the service cloud server 300 and/or the electronic device 100, the data obtained from the third-party device cloud server 303.

In a process in which the home cloud server 302 obtains the data from the third-party device cloud server 303, security authentication and authorization may be first performed on the home cloud server 302 and the third-party device cloud server 303. When security authentication and authorization of the home cloud server 302 succeed, the third-party device cloud server 303 may send the data requested by the home cloud server 302 to the home cloud server 302.

In some embodiments, the service cloud server 300 and the static resource server 301 may be a same server. Optionally, the service cloud server 300 and the home cloud server 302 may be a same server. Optionally, the static resource server 301 and the home cloud server 302 may be a same server. Optionally, the service cloud server 300, the static resource server 301, and the home cloud server 302 may be a same server. Existence forms of the service cloud server 300, the static resource server 301, and the home cloud server 302 are not limited in embodiments of this application. The three servers may be separate server entities. Alternatively, a plurality of servers in the three servers may be different modules in one server

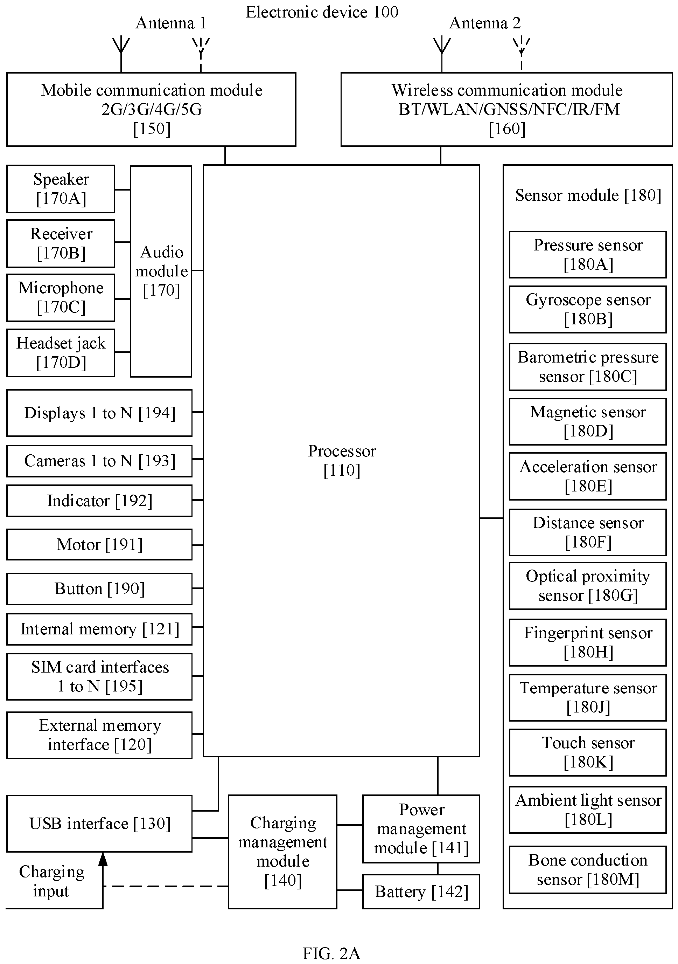

**FIG. 2A** **is an example of a schematic diagram of a structure of an electronic device 100 according to an embodiment of this application.**

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may be further configured to connect to another electronic device, for example, an AR device.

The charging management module 140 is configured to receive a charging input from a charger. The charger may be a wireless charger or a wired charger. When charging the battery 142, the charging management module 140 may further supply power to the electronic device by using the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function by using the camera 193, the ISP, the video codec, the GPU, the display 194, the application processor and the like.

The ISP is configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) created during use of the electronic device 100, and the like. In addition, the internal memory 121 may include a high-speed random access memory, or may include a nonvolatile memory such as at least one disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to: code and decode the audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A.

The gyroscope sensor 180B may be configured to determine a moving posture of the electronic device 100. In some embodiments, an angular velocity of the electronic device 100 around three axes (namely, x, y, and z axes) may be determined by using the gyroscope sensor 180B.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100. When the electronic device 100 is still, the acceleration sensor 180E may detect a magnitude and a direction of gravity. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED), and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during image shooting. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. Visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, a mobile operating system is used as an example to describe a software structure of the electronic device 100.

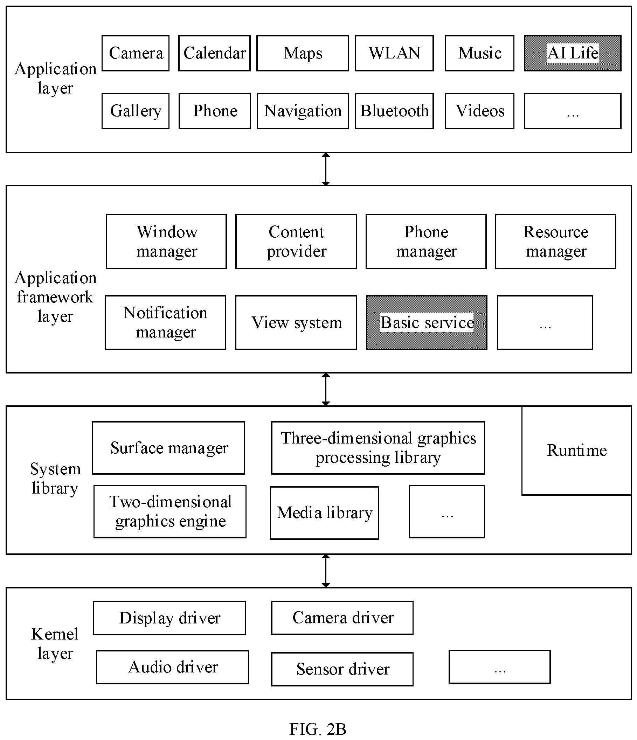

**FIG. 2B** **is a block diagram of a software structure of the electronic device according to an embodiment of this application.**

In a layered architecture, software is divided into several layers, and each layer has a clear role and task. The layers communicate with each other through a software interface. In some embodiments, the mobile operating system is divided into four layers: an application layer, an application framework layer, a system library and runtime, and a kernel layer from top to bottom.

The application layer may include a series of application packages.

As shown in FIG. 2B, the application packages may include applications such as Camera, Gallery, Calendar, Phone, Maps, Navigation, WLAN, Bluetooth, Music, Videos, and AI Life.

The AI Life app may be the app used to control the smart home device in the foregoing embodiment. A name of the app used to control the smart home device is not limited in embodiments of this application. In subsequent embodiments of this application, the AI Life app is specifically used as an example for description.

The AI Life app may include a control interface used to control the smart home device. A manner in which one control interface controls the smart home device may be determined based on the foregoing control intent. A smart home device that can be controlled by one control interface may be a smart home device included in one or more device groups obtained after the smart home devices are grouped based on the type of the function in the foregoing embodiment. The control interface may be presented on a user interface of the AI Life app in a form of a card, a control, a component, or the like.

The AI Life app may further display home device data like an operating status of the smart home device and data monitored by the smart home device.

The application package of the AI Life app may include a kit used to generate the control interface and a home device data presentation component.

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, a basic service, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The basic service may be used to determine, based on a relationship that is between the smart home device and a control intent, a function, and a skill and that is from the static resource server 301, a function that can be provided by the smart home device bound to the electronic device 100. The foregoing process of determining the function that can be provided by the smart home device bound to the electronic device 100 is a process of abstracting the function from the control intent of the user on the smart home device. In this way, the basic service can group the smart home device based on the smart home device included in each function.

The basic service may include a kit interface. The basic service may expose, through the kit interface, the abstracted function and the grouping of the smart home device to the application (for example, the AI Life app) with the kit. The foregoing kit may represent a kit used to generate the foregoing control interface and the home device data presentation component. In other words, based on the function abstracted by the basic service and the grouping of the smart home, the AI Life app may generate the control interface and the home device data presentation component by using the foregoing kit. In this way, the user can view the home device data and control the smart home device.

When detecting a user operation that is performed on the control interface to implement a function, the AI Life app may send a notification to the basic service. The basic service may trigger, based on the notification, the electronic device 100 to send a control instruction to a corresponding smart home device, to implement a corresponding function. In some embodiments, when the basic service determines, based on the relationship between the smart home device and the skill, that the basic service may trigger the electronic device 100 to send the control instruction to the corresponding smart home device when a condition for implementing the skill is met, to implement the corresponding skill.

The runtime may be all code libraries, frameworks, and the like required for program running. For example, for a C language, the runtime includes a series of function libraries required for running a C program. For a Java language, in addition to a core library, the runtime includes a virtual machine required for running a Java program. The core library may include a function that needs to be invoked in the Java language.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

**The following describes, based on the communication system 10 shown in** **FIG. 1** **and the electronic device 100 shown in** **FIG. 2A** **and** **FIG. 2B****, a scenario in which the electronic device 100 provides a control interface for a smart home device and presents home device data.**

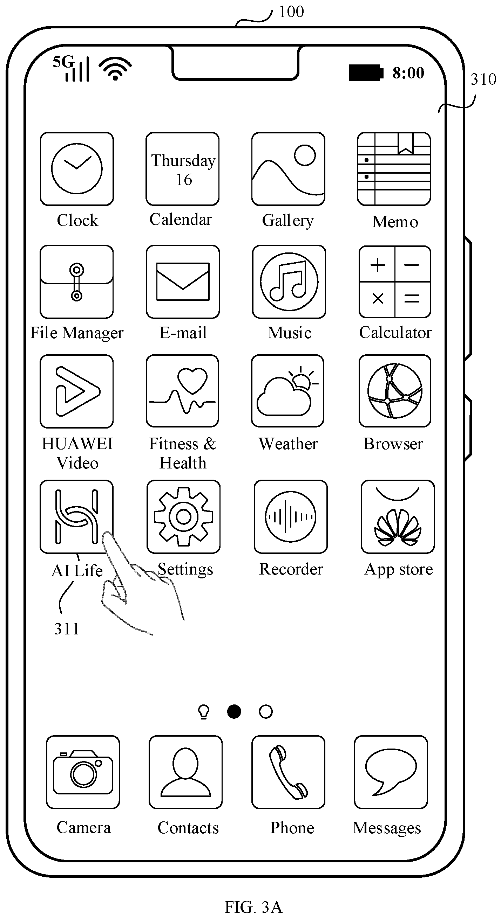

FIG. 3A to FIG. 3M are examples of schematic diagrams of the scenario in which the electronic device 100 provides the control interface for the smart home device and presents the home device data.

Refer to FIG. 3A. The electronic device 100 may display a user interface 310. The user interface 310 displays a page on which an application icon is placed. The page may include a plurality of application icons (for example, a Clock application icon, a Calendar application icon, a Gallery application icon, and an AI Life application icon 311). A page indicator may be further displayed below the plurality of application icons, to indicate a location relationship between the currently displayed page and another page. There are a plurality of tray icons (for example, a Camera application icon, a Contacts application icon, a Phone application icon, and a Messages application icon) below the page indicator. The tray icons remain displayed during page switching. Content displayed on the user interface 310 is not limited in embodiments of this application. In response to a user operation performed on the application icon or the tray icon, for example, a touch operation, the electronic device 100 may start an application corresponding to the application icon or the tray icon.

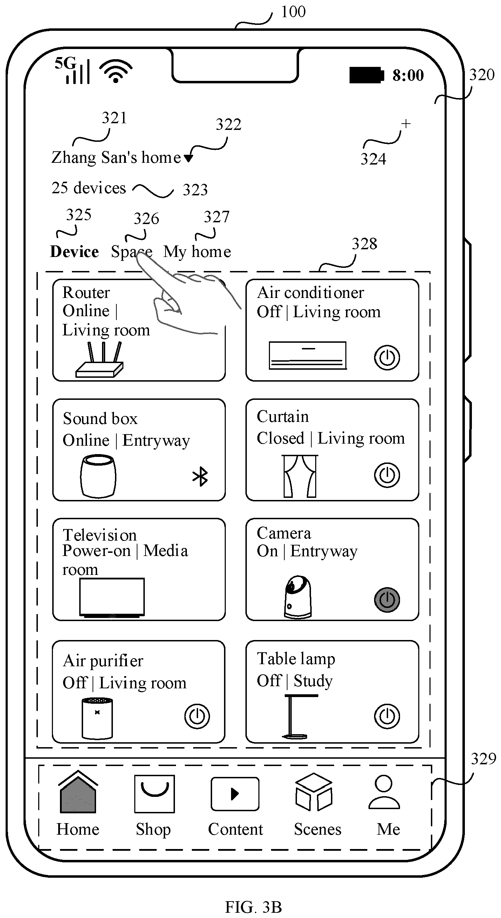

In response to a user operation performed on the AI Life application icon 311, the electronic device 100 may start the AI Life app, and display a user interface 320 shown in FIG. 3B. The user interface 320 may include a home name 321, a home management control 322, a device quantity 323, an add control 324, a Device option 325, a Space option 326, a My home option 327, a device card display region 328, and a page option display region 329.

The page option display region 329 may include a plurality of page options. The plurality of page options may include a Home option, a Malls option, a Content option, a Scenario option, and a Me option. The plurality of page options may be used to switch content presented on the user interface of the AI Life app. For example, when the home option is in a selected state shown in FIG. 3B, the content presented on the user interface of the AI Life app may include the home device data and the control interface of the smart home device that establishes the binding relationship with the electronic device 100. The page option included in the page option display region 329 is not limited in embodiments of this application.

In other words, the user may view the smart home device at the user's home under the Home option in the page option display region 329, and control the smart home device.

The home name 321 may indicate a name of a home. The name of a home may be set by the user. For example, the home name 321 may be "Zhang San's home". A home may have one or more smart home devices. When the home name 321 is "Zhang San's home" shown in FIG. 3B, the user interface of the AI Life app may present a control interface and home device data of a smart home device in a home named "Zhang San's home".

The home management control 322 may be used to manage a home in the AI Life app. The foregoing management may include modifying a home name, switching a home displayed on the user interface of the AI Life app, deleting a home, creating a new home, adding or deleting a member in a home, and the like. A manner of managing a home in the AI Life app is not limited in embodiments of this application.

The device quantity 323 may indicate a quantity of smart home devices in a home. For example, there are 25 smart home devices in the home named "Zhang San's Home".

The add control 324 may be used to add a smart home device to a home.

The Device option 325 may be used to trigger the electronic device 100 to display smart home devices included in a home. As shown in FIG. 3B, when the Device option 325 is in a selected state, the electronic device 100 may display, in the device card display region 328, device cards corresponding to the smart home devices, for example, a router card, an air conditioner card, a sound box card, a curtain card, a television card, a camera card, an air purifier card, and a table lamp card. The device card may include a space in which the smart home device is located at home, a network-connected status of the smart home device, a working status of the smart home device, a control used to turn on or turn off the smart home device, and the like. In response to a user operation performed on one device card, the electronic device 100 may display more detailed information (for example, a battery level and an operating mode) of a smart home device indicated by the one device card and more function controls (for example, a temperature adjustment control and a brightness adjustment control).

The smart home device indicated by the device card in the device card display region 328 may be a smart home device in the home named "Zhang San's home". In a possible implementation, in response to a sliding-upward user operation performed on the user interface 320, the electronic device 100 may display more cards corresponding to the smart home devices.

In other words, the user may view the smart home device at the user's home under the Device option 325, and separately control each smart home device.

The My home option 327 may be used to trigger the electronic device 100 to display a case in which smart home devices included in a home are classified based on functions. In other words, the user may view, under the My home option 327, home device data of a smart home device that provides one function (for example, an environment monitoring function). A specific description of content displayed by the electronic device 100 in response to a user operation performed on the My home option 327 is provided in subsequent embodiments. Details are not described herein.

The Space option 326 may be used to trigger the electronic device 100 to display a case in which smart home devices included in a home are classified based on spaces, and a control used to control all smart home devices that can provide one function in one space. The foregoing method for controlling the smart home device by the control may be determined by a control intent of the user on the smart home device.

The foregoing space may represent different regions in a home. The space may include an entryway, a living room, a kitchen, a primary bedroom, a secondary bedroom, a study, a balcony, a bathroom, a media room, a wine cellar, and the like. A specific manner of classifying different regions in a home is not limited in embodiments of this application. Each smart home device may have a spatial attribute. The spatial attribute may be set by the user for a smart home device when the user adds the smart home device.

In a possible implementation, the electronic device 100 may first determine, based on the spatial attribute of the smart home device, a smart home device included in each space of a home. Then, the electronic device 100 may determine, based on function classification, smart home devices that can provide one function in one space, and control intents of the user on the smart home devices that can provide one function. Based on the control intent of the user on the smart home device that can provide one function, the electronic device 100 may provide a control used to control all smart home devices that can provide one function in one space. The foregoing method for providing, based on the control intent and the function, a control for controlling a plurality of smart home devices by one tap is described in subsequent embodiments. Details are not described herein.

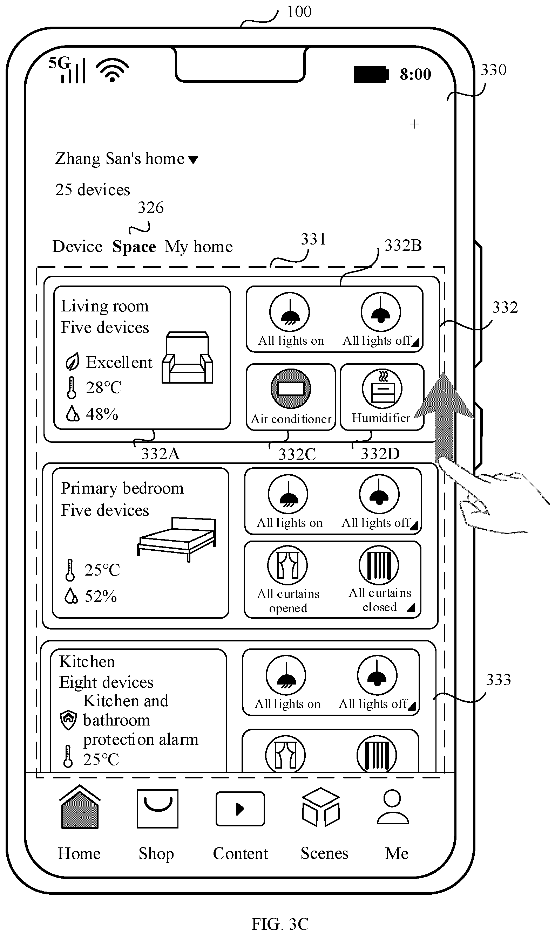

As shown in FIG. 3B, in response to a user operation performed on the Space option 326, the electronic device 100 may display a user interface 330 shown in FIG. 3C.

As shown in FIG. 3C, when the Space option 326 is in a selected state, the electronic device 100 may display a space card display region 331 on the user interface 330. The space card display region 331 may include space cards corresponding to all spaces in a home, for example, a living room card 332, a primary bedroom card, a kitchen card 333, and the like.

Herein, the living room card 332 corresponding to the living room is used as an example to describe the space card.

The living room card 332 may include a living room component 332A, a light component 332B, an air conditioner component 332C, and a humidifier component 332D. The living room component 332A may include a name of the space (for example, "Living room"), a quantity of smart home devices (for example, five devices) in the living room, and data monitored by the smart home devices in the living room. The data monitored by the smart home device in the living room may include air quality (for example, "Excellent"), a temperature (for example, 28°C), and humidity (for example, 48%). The data monitored by the smart home device in the living room may reflect an environment of the living room. In this way, the user can quickly view the air quality, the temperature, and the humidity of the living room by using the living room component 332A.

In addition to the foregoing air quality, temperature, and humidity, data monitored by more or fewer smart home devices may be presented in a space component (for example, the living room component 332A, the primary bedroom component, or the kitchen component) in one space card. A type of the data monitored by the smart home device and presented in the space component may be determined based on a type of a smart home device included in a space corresponding to the space component. For example, when the living room includes an air quality monitor, a temperature monitor, and a humidity monitor, the air quality, the temperature, and the humidity may be presented in the living room component 332A. When the primary bedroom includes a temperature monitor and a humidity monitor, the temperature and the humidity may be presented in the primary bedroom component.

The living room component 332A may be further used to trigger the electronic device 100 to display more detailed information about the smart home device and more operation controls in the living room.

The light component 332B may include an all-lights-on control and an all-lights-off control. In some embodiments, there are a plurality of lights in the living room. The all-lights-on control may be used to turn on all lights in the living room. The all-lights-off control may be used to turn off all lights in the living room. All the lights in the living room may be all lights whose spatial attributes are the living room in a home (for example, Zhang San's home).

The air conditioner component 332C may include an air conditioner turn-on/off control. The air conditioner turn-on/off control may be used to turn on or off an air conditioner in the living room. In some embodiments, there is one air conditioner in the living room. If the air conditioner turn-on/off control is in an on state shown in FIG. 3C, it may indicate that the air conditioner in the living room is turned on. When the air conditioner turn-on/off control is in the on state, in response to a user operation performed on the air conditioner turn-on/off control, the electronic device 100 may indicate the air conditioner in the living room to be turned off, and change the air conditioner turn-on/off control to an off state. When the air conditioner turn-on/off control is in the off state, in response to the user operation performed on the air conditioner turn-on/off control, the electronic device 100 may indicate the air conditioner in the living room to be turned on, and change the air conditioner turn-on/off control to the on state.

The humidifier component 332D may include a humidifier turn-on/off control. The humidifier turn-on/off control may be used to turn on or off a humidifier in the living room. For a method for turning on or off the humidifier in the living room by the humidifier turn-on/off control, refer to the foregoing method for turning on or off the air conditioner in the living room by the air conditioner turn-on/off control.

It can be learned that, when there are a plurality of smart home devices that can provide one function in one space, the electronic device 100 may provide a control for controlling, by one tap, the plurality of smart home devices that can provide one function. For example, a plurality of lights of a same type or different types in the living room may provide a lighting function. The all-lights-on control and the all-lights-off control in the light component 332B may be convenient for the user to control (for example, turn on or off), by one tap, all lights that can provide the lighting function in the living room.

When there is only one smart home device that can provide one function in one space, the electronic device 100 may provide a single control in the space card to control the one smart home device in the one space. The electronic device 100 may indicate, by changing a presentation status of the foregoing single control, different statuses (for example, an on state and an off state) of the smart home device controlled by the single control. For example, a smart home device that provides a temperature adjustment function in the living room includes only one air conditioner. The air conditioner turn-on/off control in the air conditioner component 332C may be convenient for the user to turn on or off the air conditioner in the living room.

It may be understood that the all-lights-on control, the all-lights-off control, the air conditioner turn-on/off control, and the humidifier turn-on/off control are the control interfaces that are provided by the electronic device 100 in the foregoing embodiments and that are used to control the smart home devices.

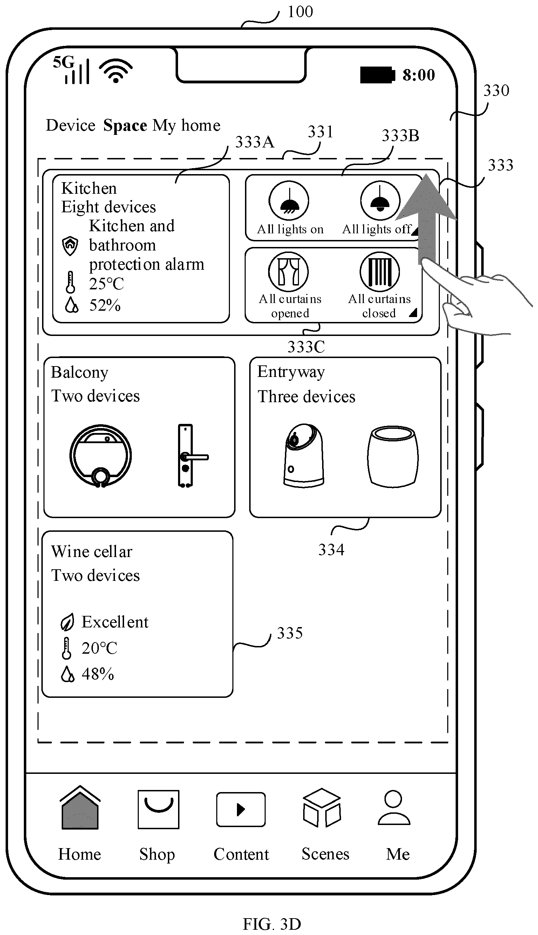

As shown in FIG. 3C, in response to a sliding-upward user operation performed on the user interface 330, the electronic device 100 may display a user interface 330 shown in FIG. 3D. It may be understood that, because a screen size of the electronic device 100 is limited, when there are a large quantity of space cards, the electronic device 100 cannot simultaneously present all the space cards on the user interface. The electronic device 100 may adjust the space card displayed on the user interface in response to sliding-upward and sliding-downward user operations performed on the user interface by the user. In other words, the user may view different space cards through the foregoing sliding user operation.

As shown in FIG. 3D, the kitchen card 333, a balcony card, an entryway card 334, and a wine cellar card 335 may be displayed in the space card display region 331 in the user interface 330. The kitchen card 333 may include a kitchen component 333A, a light component 333B, and a curtain component 333C. For the kitchen component 333A, the light component 333B, and the curtain component 333C, refer to the living room component 332A and the light component 332B in the foregoing living room card 332.

The balcony card may include a quantity of smart home devices (for example, two devices) in the balcony and icons of the smart home devices (for example, an icon of a robotic vacuum cleaner and an icon of a door lock) in the balcony.

The entry way card 334 may include a quantity of smart home devices (for example, three devices) in the entryway and icons of the smart home devices (for example, an icon of a camera and an icon of a sound box) in the entryway.

The wine cellar card 335 may include a quantity of smart home devices (for example, two devices) in the wine cellar and data (for example, air quality, a temperature, and humidity) monitored by the smart home devices in the entry way.

In a possible implementation, the electronic device 100 may determine, based on a function that can be provided by a smart home device included in one space, presentation content of a space card corresponding to the one space.
(1) The smart home device included in one space can provide one or more of the following functions: a lighting function, a temperature adjustment function, a sunshade function, a humidity adjustment function, and an air purification function. The electronic device 100 may display, based on a pattern of the living room card 332, the primary bedroom card, and the kitchen card 333 shown in FIG. 3C and FIG. 3D, the space card corresponding to the space. The space card may include a control component that is used to control the smart home device in the space and a space component that may be used to view the smart home device included in the space. If the smart home device included in the space can monitor data like environment information and security protection alarm information, the electronic device 100 may further present, on the control component of the space, the data monitored by the smart home device. The environment information may include air quality, a temperature, humidity, and the like. The security protection alarm information may include a water leakage alarm, a gas leakage alarm, a smoke alarm, and the like.
   The space component may be displayed on a left side of the space card, and the control component may be displayed on a right side of the space card. Display locations of the spatial component and the control component are not limited in embodiments of this application.
(2) The smart home device included in one space cannot provide any one of the following functions: a lighting function, a temperature adjustment function, a sunshade function, a humidity adjustment function, and an air purification function. In addition, the smart home device included in the one space cannot monitor environment information and security protection alarm information. The electronic device 100 may display, based on a pattern of the balcony card and the entryway card 334 shown in FIG. 3D, the space card corresponding to the space. The space card may include a quantity of smart home devices in the space and icons of the smart home devices in the space. The space card may be used to trigger the electronic device 100 to display more detailed information (for example, a battery level and an operating mode) about the smart home device in the space.
(3) The smart home device included in one space cannot provide any one of the following functions: a lighting function, a temperature adjustment function, a sunshade function, a humidity adjustment function, and an air purification function. However, the smart home device included in the one space can monitor one or more of environment information and security protection alarm information. The electronic device 100 may display, based on a pattern of the wine cellar card 335 shown in FIG. 3D, the space card corresponding to the space. The space card may include a quantity of smart home devices in the space and data monitored by the smart home devices in the space. The space card may be used to trigger the electronic device 100 to display more detailed information (for example, a battery level and an operating mode) about the smart home device in the space.

Because a size of one space card is limited, if smart home devices included in a space corresponding to the one space card may provide a plurality of functions, the one space card may not be able to simultaneously display all controls used to control the smart home devices included in the space. The following describes two methods for adjusting the control in the space card in an embodiment of this application.

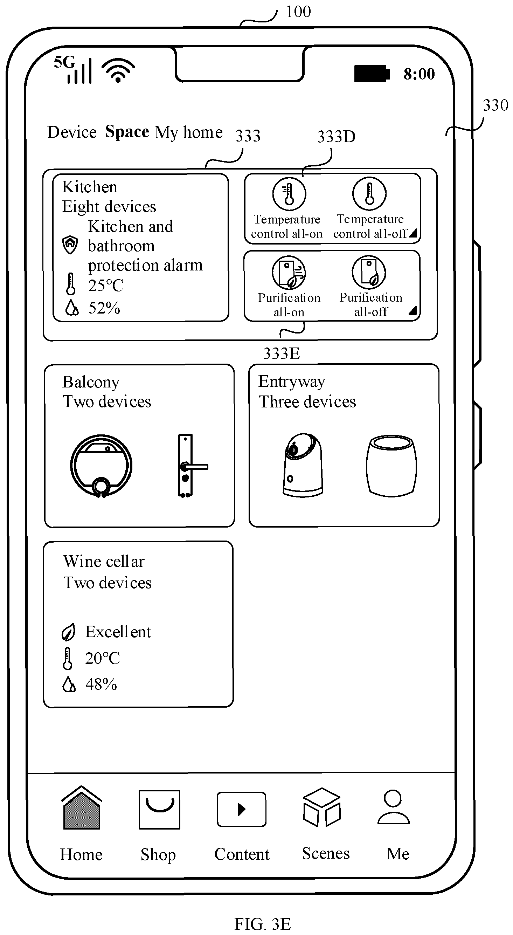

(1) FIG. 3D and FIG. 3E are schematic diagrams of an example of a scenario of adjusting the control in the space card.

Herein, a specific description is specifically provided by using an example of adjusting a control in the kitchen card 333.

As shown in FIG. 3D, the light component 333B and the curtain component 333C are displayed on a right side of the kitchen card 333. The light component 333B includes a control used to turn on all lights in the kitchen and a control used to turn off all the lights in the kitchen. The curtain component 333C includes a control used to open all curtains in the kitchen and a control used to close all the curtains in the kitchen.

In response to a sliding-upward user operation performed on a display region (for example, a right half region of the kitchen card 333) of the light component 333B and the curtain component 333C, the electronic device 100 may display a user interface 330 shown in FIG. 3E.

It can be learned through comparison between FIG. 3D and FIG. 3E that, after the sliding-upward user operation shown in FIG. 3D is received, the light component 333B and the curtain component 333C are hidden. The electronic device 100 may display a temperature control component 333D and a purification component 333E in a region in which the kitchen card 333 displays the control component. The temperature control component 333D includes a control used to turn on all smart home devices that can provide a temperature adjustment function in the kitchen and a control used to turn off all the smart home devices that can provide the temperature adjustment function in the kitchen. The purification component 333E includes a control used to turn on all smart home devices that can provide an air purification function in the kitchen, and a control used to disable all smart home devices that can provide an air purification function in the kitchen.

In other words, the user may view different controls by sliding upward and downward in the control component displayed in the space card, and control corresponding smart home devices by using these controls.

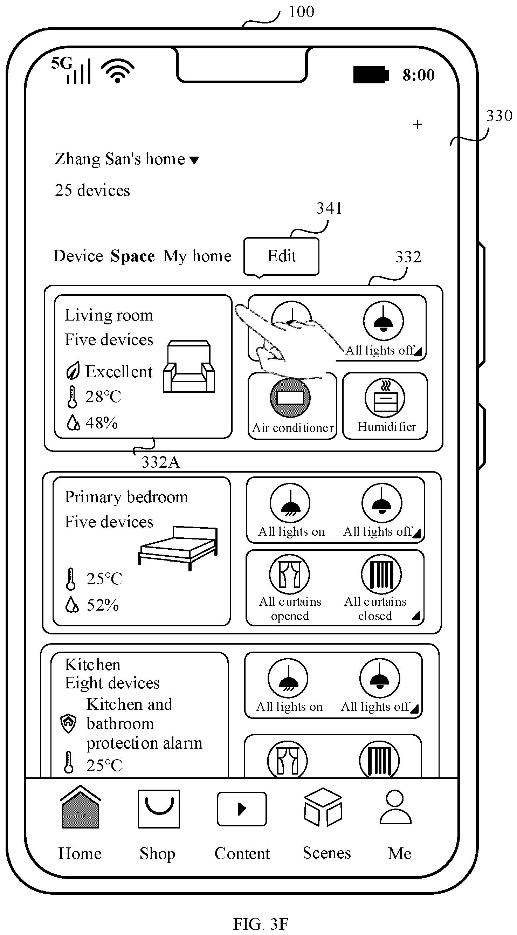

(2) FIG. 3F to FIG. 3M are schematic diagrams of another example of a scenario of adjusting the control in the space card.

Herein, a specific description is specifically provided by using an example of adjusting a control in the living room card 332.

As shown in FIG. 3F, in response to a touch and hold operation performed on the living room card 332, the electronic device 100 may display an editing control 341 on the user interface 330. The touch and hold operation may be a touch and hold operation performed on a region in which no component (for example, the living room component 332A, and a control component like a light component, an air conditioner component, or a humidifier component) is displayed in the living room card 332.

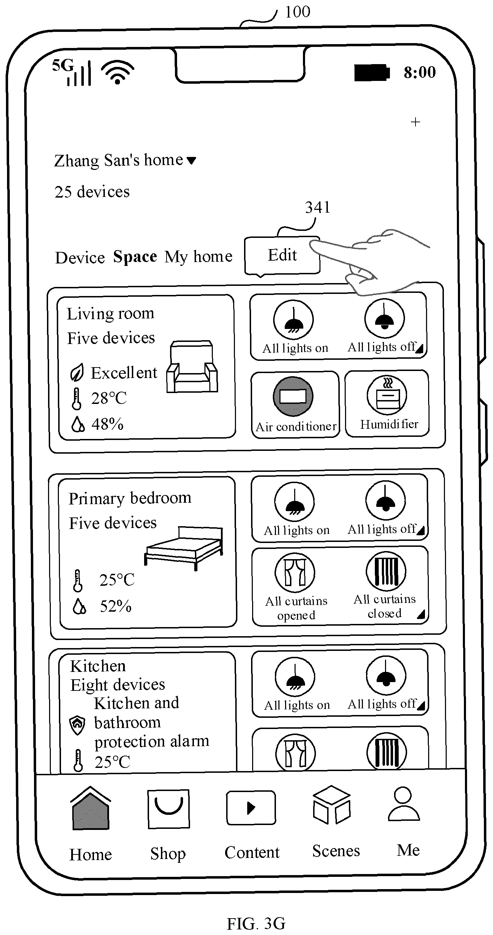

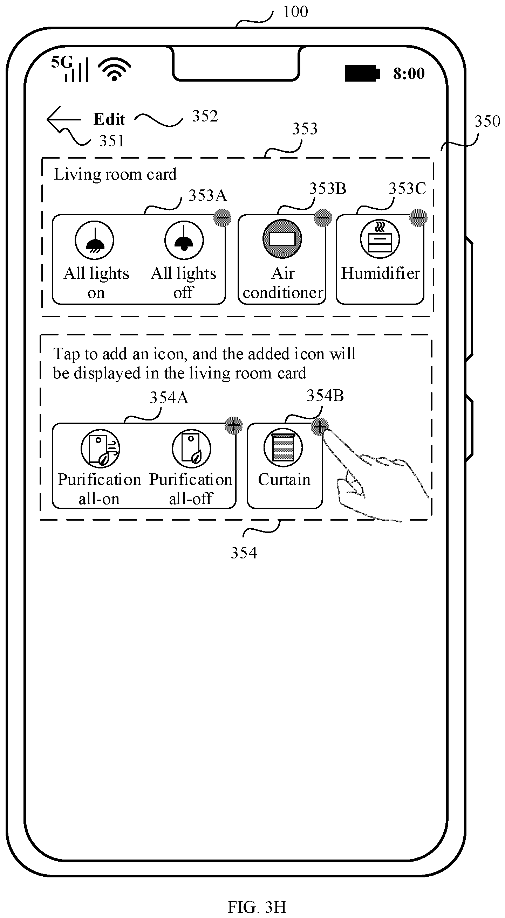

As shown in FIG. 3G, in response to a user operation performed on the editing control 341, for example, a touch operation, the electronic device 100 may display a user interface 350 shown in FIG. 3H. The user interface 350 may include a return control 351, a page title 352, an added icon display region 353, and an unadded icon display region 354.

The return control 351 may be used to trigger the electronic device 100 to return to an upper-level user interface, that is, display the user interface shown in FIG. 3G.

The page title 352 may indicate that the user interface 350 is a user interface for editing the control in the living room card 332. The page title 352 may include text content, for example, "Edit".

The added icon display region 353 may include an icon of a control component currently included in the living room card 332, For example, an icon 353A of the light component, an icon 353B of the air conditioner component, and an icon 353C of the humidifier component. The icon in the added icon display region 353 may include a delete control. A delete control included in one icon may be used to trigger the electronic device 100 to remove a control component corresponding to the one icon from the space card.

The unadded icon display region 354 may include an addition description, and an icon of a control component that is in control components used to control smart home devices in the living room and that is not displayed in the living room card 332, for example, an icon 354A of the purification component and an icon 354B of the curtain component. The foregoing addition description may be used to prompt the user with a method for adding a control component to the living room card 332. Specific content of the foregoing addition description is not limited in embodiments of this application.

The icon in the unadded icon display region 354 may include an add control. An add control included in one icon may be used to trigger the electronic device 100 to add a control component corresponding to the one icon to the space card.

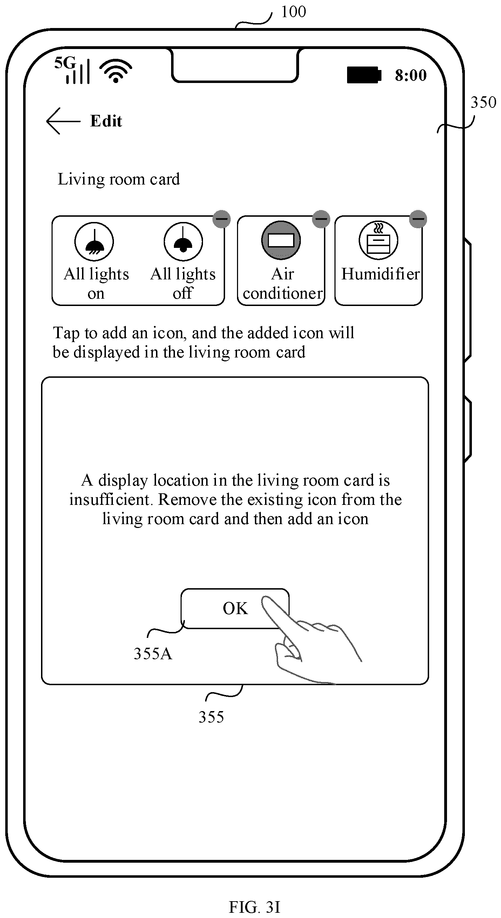

For example, in response to a user operation performed on the add control included in the icon 354B of the curtain component, for example, a touch operation, the electronic device 100 may display a prompt box 355 shown in FIG. 3I on the user interface 350. The prompt box 355 may include prompt content and an OK control 355A. The prompt content may prompt the user that a display location in the living room card 332 is insufficient, and a control component can be added only after the existing control component in the living room card 332 is removed. A specific expression of the prompt content is not limited in embodiments of this application. To be specific, a region used to display the control component in the space card may be only a region in a size of a right half of the living room card 332 shown in FIG. 3G. When a region in a size of a right half of one space card is fully occupied by the control component, the electronic device 100 cannot add another control component to the one space card.

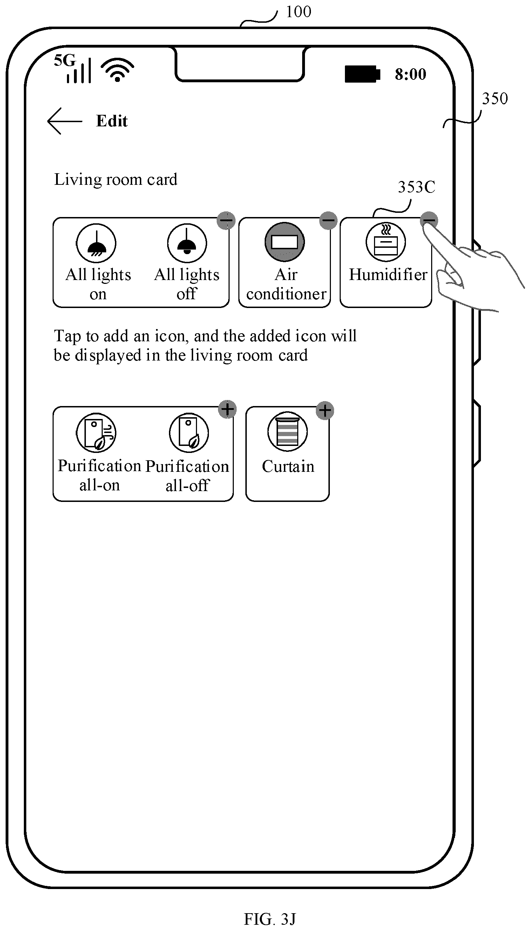

As shown in FIG. 3I, in response to a user operation performed on the OK control 355A, the electronic device 100 may display a user interface 350 shown in FIG. 3J. For the user interface 350, refer to the descriptions of the user interface 350 shown in FIG. 3H in the foregoing embodiment.

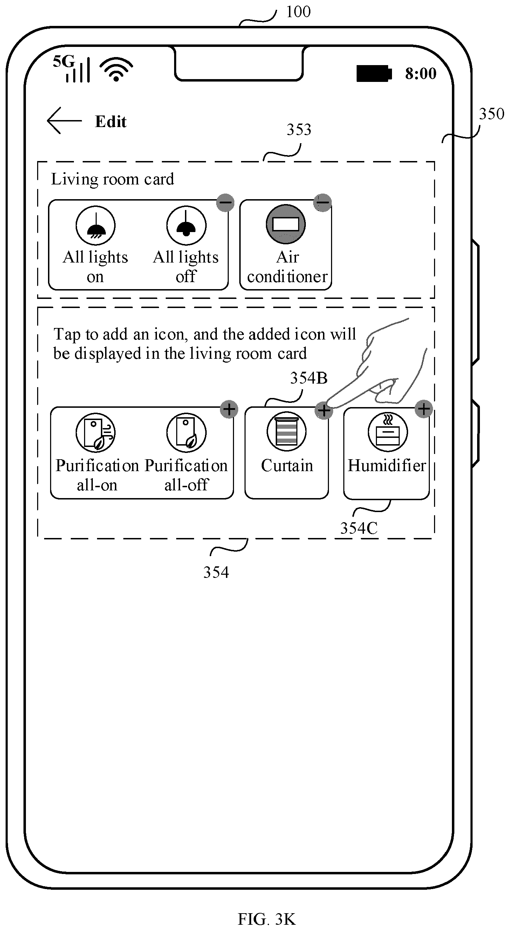

As shown in FIG. 3J, in response to a user operation performed on the delete control included in the icon 353C of the humidifier component, for example, a touch operation, the electronic device 100 may remove the humidifier component from the living room card 332. In addition, as shown in FIG. 3K, the electronic device 100 may further remove the icon 353C of the humidifier component from the added icon display region 353, and add the icon 354C of the humidifier component to the unadded icon display region 354. The icon 354C of the humidifier component may include the add control.

After the humidifier component is removed from the living room card 332, a control component may be added to the living room card 332. The control component that can be added may be a control component that includes a control for controlling a single smart home device.

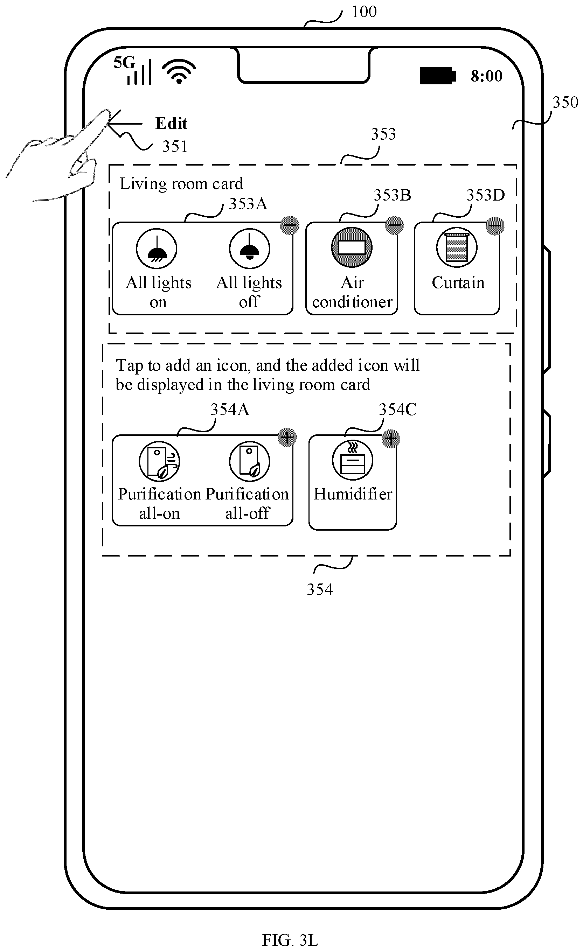

As shown in FIG. 3K, in response to a user operation performed on the add control included in the icon 354B of the curtain component, for example, a touch operation, the electronic device 100 may add the curtain component to the living room card 332. In addition, as shown in FIG. 3L, the electronic device 100 may further remove the icon 354B of the curtain component from the unadded icon display region 354, and add the icon 353D of the curtain component to the added icon display region 353. The icon 353D of the curtain component may include the delete control.

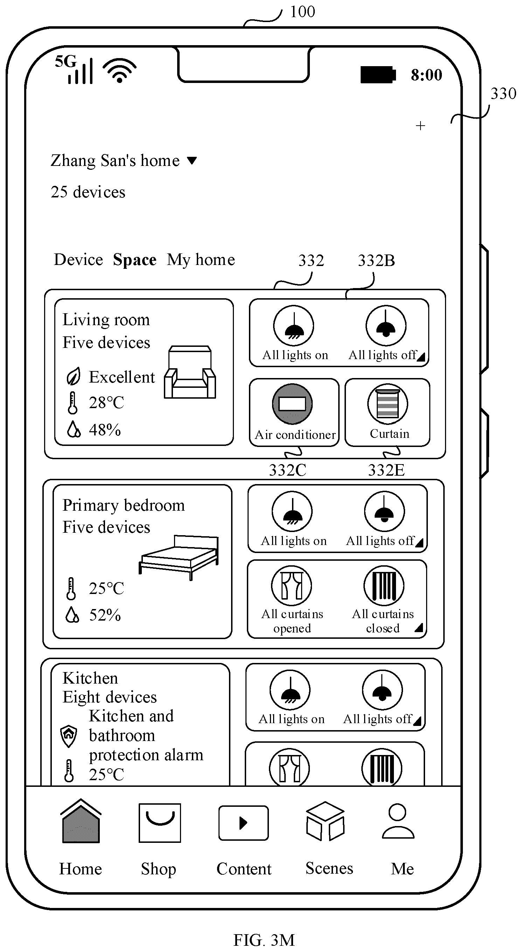

As shown in FIG. 3L, in response to a user operation performed on the return control 351, for example, a touch operation, the electronic device 100 may display a user interface 330 shown in FIG. 3M. In FIG. 3M, the control component displayed in the living room card 332 may include the light component 332B, the air conditioner component 332C, and a curtain component 332E. The curtain component 332E may include a curtain opening/closing control. The curtain opening/closing control may be used to open or close a curtain in the living room.

It can be learned through comparison between FIG. 3F and FIG. 3M that, after a user operation of editing the control component shown in FIG. 3F to FIG. 3K is performed, the electronic device 100 removes the humidifier component 332D from the living room card 332, and adds the curtain component 332E to the living room card 332.

In other words, control components that can be presented in one space card are limited. The user may edit a control component presented in one space card (for example, add a control component or remove a control component), so that the control component presented in the space card is a control component expected by the user. The control component in one space card may include a control used to control the smart home device. The control component provides an entry for the user to quickly control the smart home device. The user can place most frequently used control components (such as the light component and air conditioner component) in the space card, to quickly control most frequently used smart home devices.

**The following describes a scenario in which a plurality of smart home devices are controlled by one tap according to an embodiment of this application.**

Herein, a scenario in which all lights in a kitchen are turned on by one tap is used as an example for description.

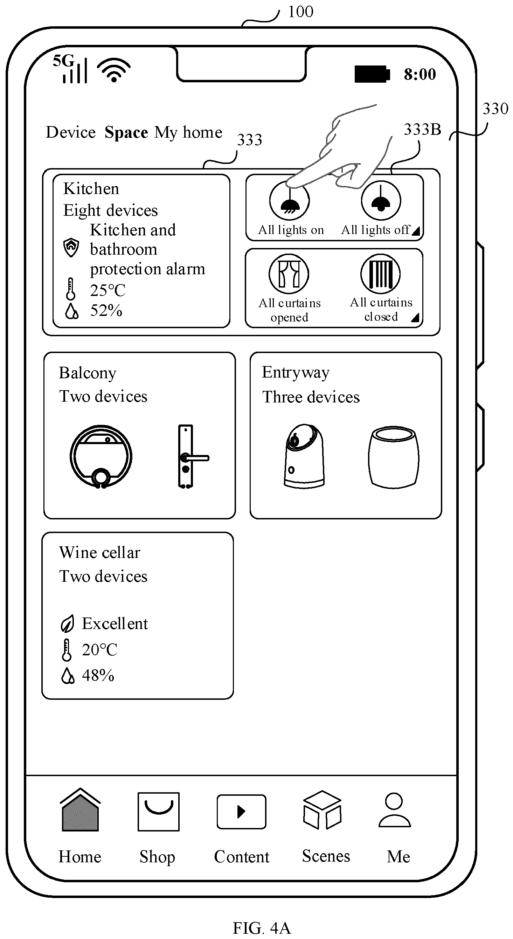

FIG. 4A to FIG. 4C are schematic diagrams of an example of the scenario in which all the lights in the kitchen are turned on by one tap.

Refer to FIG. 4A. The electronic device 100 may display a user interface 330. For content included in the user interface 330, refer to the description in the foregoing embodiments. The user interface 330 may include a kitchen card 333. The kitchen card 333 may include a light component 333B. In response to a user operation performed on an all-lights-on control in the light component 333B, for example, a touch operation, the electronic device 100 may send a light-on control instruction to all lights whose spatial attribute is the kitchen, to turn on all the lights in the kitchen.

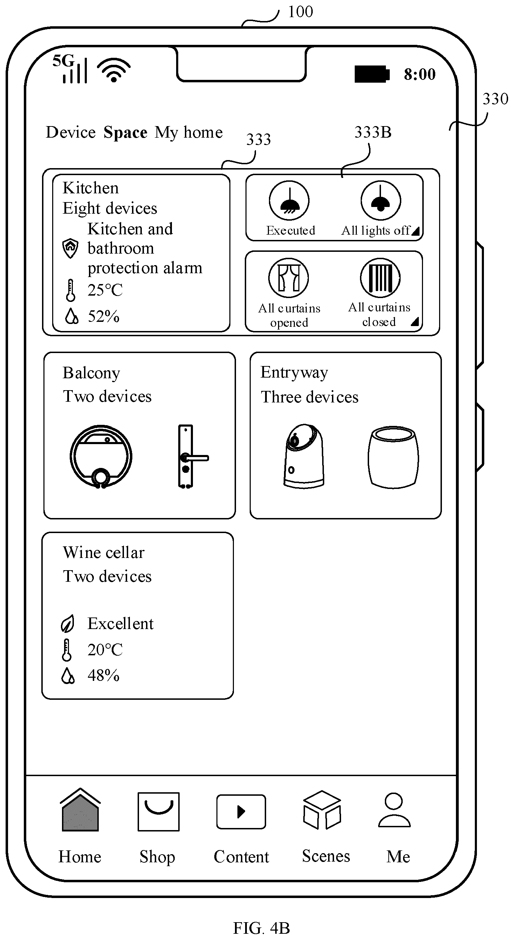

In addition, after receiving the foregoing user operation performed on the all-lights-on control in the light component 333B, the electronic device 100 may further determine whether all the lights whose spatial attribute is the kitchen can be triggered to be turned on. If all the lights whose spatial attribute is the kitchen can be triggered to be turned on, the electronic device 100 may display a user interface 330 shown in FIG. 4B. In FIG. 4B, a text prompt corresponding to the all-lights-on control in the light component 333B may be "Executed". In other words, if the electronic device 100 may trigger all the lights in the kitchen in response to the user operation performed on the all-lights-on control in the light component 333B, the electronic device 100 may change the text prompt corresponding to the all-lights-on control in the light component 333B from "All lights on" to "Executed", and then change from "Executed" to "All lights on". The user may be prompted, from a change of the control, that the electronic device 100 successfully executes an instruction for turning on all the lights in the kitchen.

A method in which the electronic device 100 determines whether all the lights whose spatial attribute is the kitchen can be triggered to be turned on is not limited in embodiments of this application. For example, the electronic device 100 may determine whether all the lights whose spatial attribute is the kitchen are connected to a network. If all the lights whose spatial attribute is the kitchen are connected to the network, the electronic device 100 may determine that all the lights whose spatial attribute is the kitchen can be triggered to be turned on. For another example, the electronic device 100 may obtain states of all the lights whose spatial attribute is the kitchen after the light-on control instruction is received. If the states of all the lights whose spatial attribute is the kitchen are on states after the light-on control instruction is received, the electronic device 100 may determine that all the lights whose spatial attribute is the kitchen can be triggered to be turned on.

In some embodiments, there are a plurality of lights in the kitchen. Some of the plurality of lights are turned on. In response to the user operation performed on the all-lights-on control in the light component 333B shown in FIG. 4A, the electronic device 100 may send the light-on control instruction to lights in an off state in the plurality of lights, to turn on the other lights in the off state in the kitchen.

After receiving the foregoing user operation performed on the all-lights-on control in the light component 333B, the electronic device 100 may determine whether all the lights whose spatial attribute is the kitchen can be triggered to be turned on. If all the lights whose spatial attribute is the kitchen can be triggered to be turned on, the electronic device 100 may change the text prompt corresponding to the all-lights-on control in the light component 333B from "All lights on" shown in FIG. 4A to "Executed" shown in FIG. 4B, and then change from "Executed" to "All lights on". Alternatively, the electronic device 100 may only determine whether a light whose spatial attribute is the kitchen and that is in the off state can be triggered to be turned on. If the light whose spatial attribute is the kitchen and that is in the off state can be triggered to be turned on, the electronic device 100 may change the text prompt corresponding to the all-lights-on control in the light component 333B from "All lights on" shown in FIG. 4A to "Executed" shown in FIG. 4B, and then change from "Executed" to "All lights on".

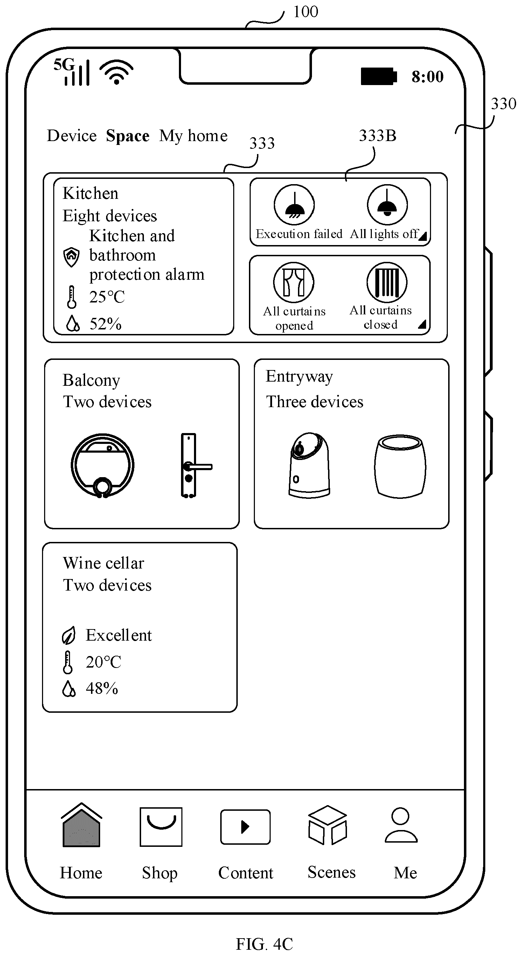

In some embodiments, one or more lights in the kitchen are in an offline state (that is, are not connected to the network), or a fault that causes the light not to be turned on because the light cannot respond to the light-on control instruction sent by the electronic device 100 (or the service cloud server 300) occurs. When receiving the user operation, shown in FIG. 4A, performed on the all-lights-on control in the light component 333B, the electronic device 100 may send the light-on control instruction to all the lights whose spatial attribute is the kitchen. The light that can respond to the foregoing light-on control instruction can be turned on. The electronic device 100 may determine that one or more lights cannot be triggered to be turned on (for example, the electronic device 100 does not receive a notification indicating that the one or more lights are successfully turned on). In this case, the electronic device 100 may change the text prompt corresponding to the all-lights-on control in the light component 333B from "All lights on" shown in FIG. 4A to "Execution failed" shown in FIG. 4C, and then change from "Execution failed" to "All lights on". In this way, the user may be prompted, from a change of the control, that the electronic device 100 fails to execute the instruction for turning on all the lights in the kitchen.

Optionally, if there are one or more lights that can be turned on in response to the light-on control instruction and that are in the lights whose spatial attribute is the kitchen, the electronic device 100 may display "Partially executed" in a text prompt region corresponding to the all-lights-on control in the light component 333B shown in FIG. 4C. In this way, the user 100 may be prompted that only some lights in the kitchen are triggered to be turned on, while the other lights fail to be turned on.

In an embodiment of this application, for a use scenario of another control (for example, a curtain fully-open control, a curtain fully-close control, an all-purifiers-on control, or an all-purifiers-off control) used to control a plurality of smart home devices by one tap, refer to the foregoing use scenario of the all-lights-off control. Details are not described herein again.

It can be learned from the scenario shown in FIG. 4A to FIG. 4C that the electronic device 100 can group the smart home devices, and provide the user with a control for controlling a plurality of smart home devices by one tap. The plurality of smart home devices controlled by one tap may be smart home devices that can provide a same function. The control can simplify a user operation of controlling the plurality of smart home devices by the user. In addition, the user may not need to learn and understand various rules for grouping smart home devices. This reduces difficulty in controlling the smart home devices in batches by the user.

**The following describes a scenario of viewing a smart home device in one space according to an embodiment of this application.**

Herein, a specific description is specifically provided by using an example of viewing a smart home device in a kitchen.

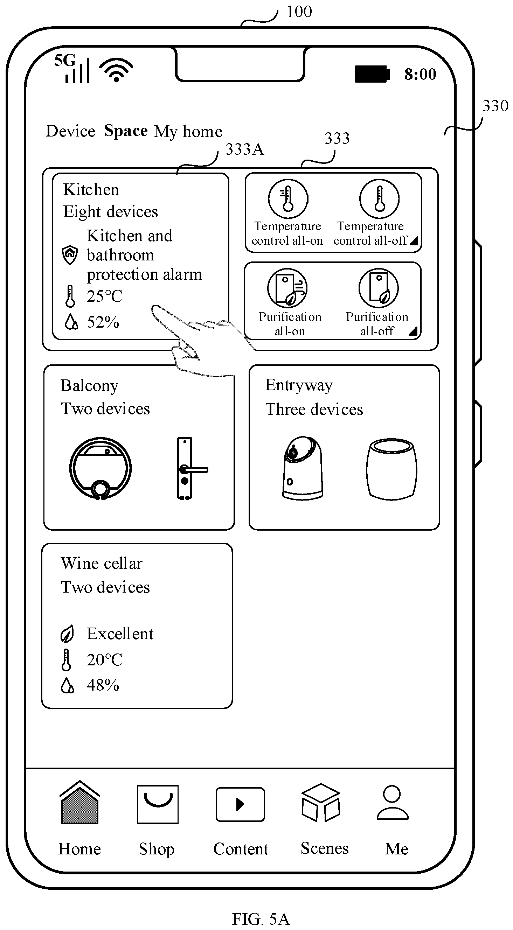

FIG. 5A to FIG. 5D are schematic diagrams of an example of a scenario in which the electronic device 100 displays the smart home device in the kitchen.

Refer to FIG. 5A. The electronic device 100 may display a user interface 330. For the user interface 330, refer to the description in the foregoing embodiments. The user interface 330 may include a kitchen card 333. The kitchen card 333 may include a kitchen component 333A. The kitchen component 333A presents data monitored by the smart home device in the kitchen, for example, a kitchen and bathroom protection alarm, a temperature (for example, 25°C), and humidity (for example, 52%). The foregoing kitchen and bathroom protection alarm may indicate that a smart home device that can provide a security protection function in the kitchen detects that a security problem exists in the kitchen. The electronic device 100 may display the kitchen and bathroom protection alarm on the kitchen component 333A to prompt the user to handle the security problem existing in the kitchen. If the smart home device that can provide the security protection function in the kitchen detects that no security problem exists in the kitchen, the electronic device 100 may display kitchen and bathroom protection security on the kitchen component 333A. A specific representation form used to indicate a kitchen security status on the kitchen component 333A is not limited in embodiments of this application.

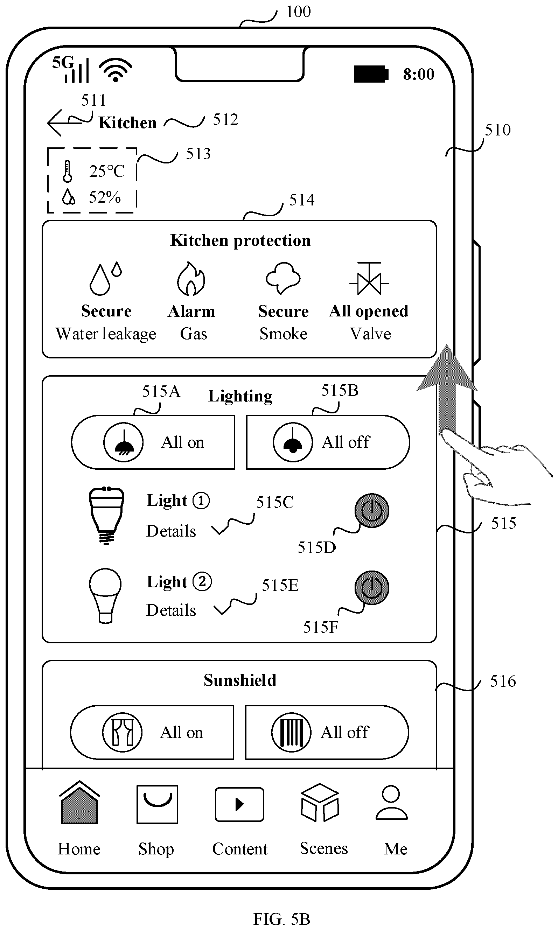

In response to a user operation performed on the kitchen component 333A, for example, a touch operation, the electronic device 100 may display a user interface 510 shown in FIG. 5B. The user interface 510 may include a return control 511, a page title 512, an environment information display region 513, and one or more function cards. The one or more function cards may include a kitchen protection component 514, a lighting component 515, and a sunshade component 516.

The return control 511 may be used to trigger the electronic device 100 to return to an upper-level user interface, that is, display the user interface 330 shown in FIG. 5A.

The page title 512 may indicate that the user interface 510 is a user interface that presents the smart home device in the kitchen. The page title 512 may include text content, for example, "Kitchen".

The environment information display region 513 may be used to display environment information monitored by the smart home device in the kitchen, for example, the temperature and the humidity.

One function card may include one or more of the following: data monitored by all smart home devices that can provide one function, a control used to control, by one tap, all smart home devices that can provide one function, and a control used to control a single smart home device in all smart home devices that can provide one function.

For example, the kitchen protection component 514 may include data monitored by the smart home device that can provide a kitchen security protection function. The smart home device that can provide the kitchen security protection function may include a water leakage detector, a gas monitor, a smoke alarm, and a valve monitor. The water leakage detector detects no security problem with water leakage. The gas monitor detects a security problem (for example, gas leakage) with gas usage. The smoke alarm detects no security problem with smoke. The valve monitor detects that all valves (for example, gas valves) in the kitchen are opened. In this case, the electronic device 100 may display, in the kitchen protection component 514, a case in which a water leakage condition is safe, a gas alarm occurs, a smoke condition is safe, and all valves are opened. The gas alarm can be used to prompt the user to handle the security problem with gas usage in the kitchen in time.

The lighting component 515 may include an all-on control 515A, an all-off control 515B, a light ① details control 515C, a light ① turn-on/off control 515D, a light ② details control 515E, and a light ② turn-on/off control 515F.

It can be learned from the lighting component 515 that a smart home device that can provide a lighting function in the kitchen include a light ① and a light ②. The light ① and the light ② may be classified into a device group. The all-on control 515A may be used to turn on all smart home devices (namely, the light ① and the light ② in the device group. The all-off control 515B may be used to turn off all the smart home devices in the device group. For a use scenario of the all-on control 515A and the all-off control 515B, refer to the use scenario of the all-lights-on control shown in FIG. 4A to FIG. 4C.

The light ① turn-on/off control 515D may be used to separately control the light ① to be turned on or off. It can be learned from the foregoing user operation shown in FIG. 4A that, the electronic device 100 turns on all lights in the kitchen in response to the user operation performed on the all-lights-on control in the light component 333B. In this case, both the light ① turn-on/off control 515D and the light ② turn-on/off control 515F are in an on state. A status of the light ① turn-on/off control 515D and a status of the light 20 turn-on/off control 515F may respectively indicate an on/off state of the light ① and an on/off state of the light 20. When the light ① turn-on/off control 515D is in the on state, in response to a user operation performed on the light ① turn-on/off control 515D, the electronic device 100 may send a light-off control instruction to the light ①, to turn off the light ①. When the light ① turn-on/off control 515D is in the off state, in response to a user operation performed on the light ① turn-on/off control 515D, the electronic device 100 may send a light-on control instruction to the light ①, to turn on the light ①.

The light ① details control 515C may be used to trigger the electronic device 100 to display more controls used to control the light ①, for example, a brightness adjustment control, a color temperature adjustment control, and the like.

For the light ② details control 515E, refer to the descriptions of the light ① details control 515C. For the light ② turn-on/off control 515F, refer to the descriptions of the light ① turn-on/off control 515D. Details are not described herein again.

It may be understood that, because a screen size of the electronic device 100 is limited, when there are a large quantity of function cards, the electronic device 100 cannot simultaneously present all the function cards on the user interface. The electronic device 100 may adjust the function card displayed on the user interface in response to sliding-upward and sliding-downward user operations performed on the user interface by the user. In other words, the user may view different function cards through the foregoing sliding user operation.

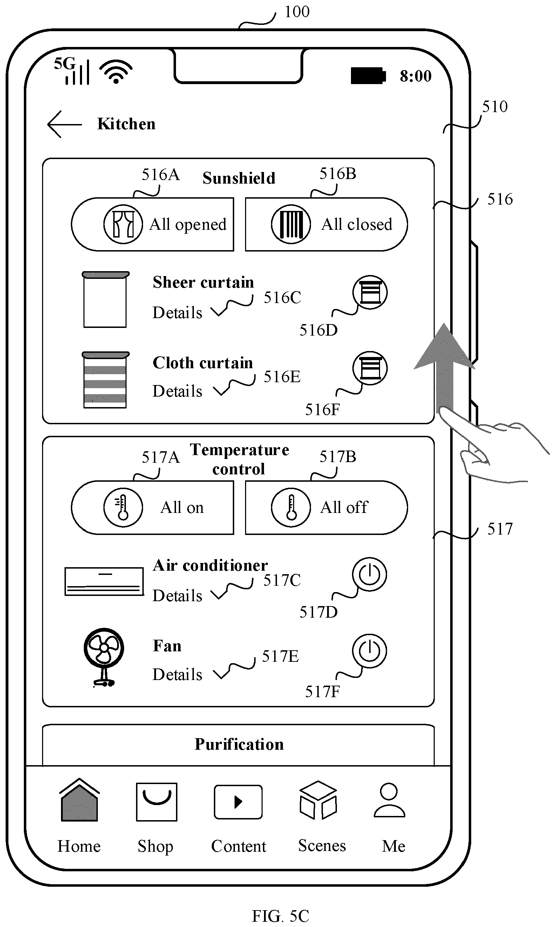

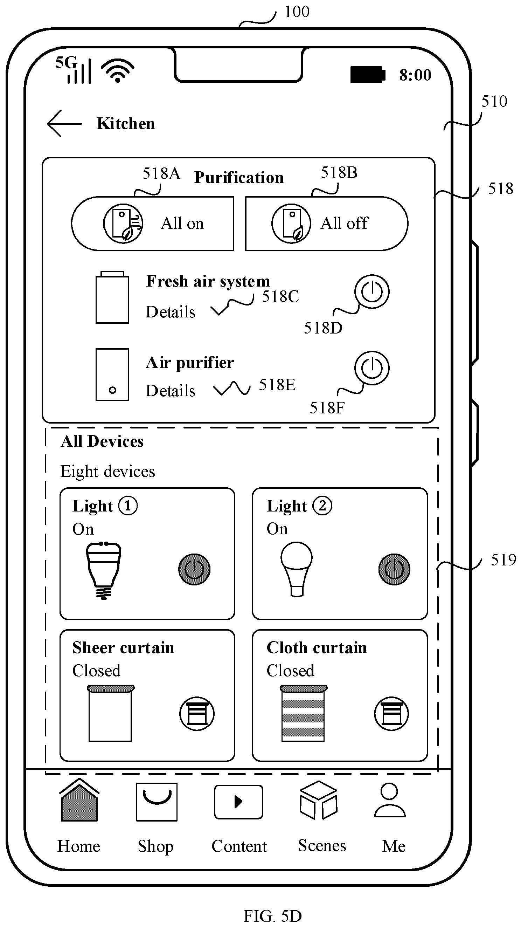

As shown in FIG. 5B, in response to the sliding-upward user operation performed on the user interface 510, the electronic device 100 may display a user interface 510 shown in FIG. 5C. The function card displayed in FIG. 5C may include a sunshade card 516 and a temperature control card 517. As shown in FIG. 5C, in response to the sliding upward user operation performed on the user interface 510, the electronic device 100 may display a user interface shown in FIG. 5D. The function card shown in FIG. 5D may include a purification card 518.

The sunshade card 516 may include a fully-open control 516A, a fully-close control 516B, a sheer curtain details control 516C, a sheer curtain open/close control 516D, a cloth curtain details control 516E, and a cloth curtain open/close control 516F.

The temperature control card 517 may include an all-on control 517A, an all-off control 517B, an air conditioner details control 517C, an air conditioner turn-on/off control 517D, a fan details control 517E, and a fan turn-on/off control 517F.

The purification card 518 may include an all-on control 518A, an all-off control 518B, a fresh air system details control 518C, a fresh air system enabling/disabling control 518D, an air purifier details control 518E, and an air purifier turn-on/off control 518F.

For the controls in the sunshade card 516, the temperature control card 517, and the purification card 518, refer to the foregoing descriptions of the controls in the lighting card 515. Details are not described herein again.

In some embodiments, the user interface 510 may further include an all-devices display region 519 shown in FIG. 5D. The all-devices display region 519 may include device cards of all the smart home devices in the kitchen. For the device card shown in FIG. 5D, refer to the foregoing descriptions of the device card shown in FIG. 3B.

It can be learned from the scenario shown in FIG. 5A to FIG. 5D that, the electronic device 100 may classify the device based on a spatial attribute of the smart home device, and further classify the smart home device in one space based on the function. The electronic device 100 may provide a control for controlling, by one tap, all smart home devices that can provide one function in one space. The user can view the smart home devices in a space by using the space component in the space card, and control the smart home devices in the space in batches or separately. This can simplify the user operation of controlling the smart home devices by the user.

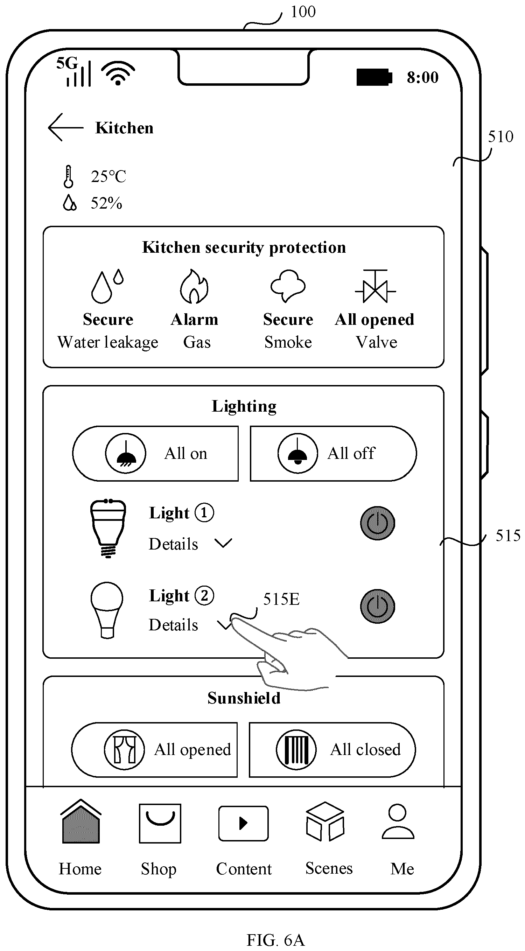

**FIG. 6A to FIG. 6D** **show an example of another scenario of controlling a smart home device according to an embodiment of this application.**

Refer to FIG. 6A. The electronic device 100 may display a user interface 510. For content included in the user interface 510, refer to the description in the foregoing embodiments.

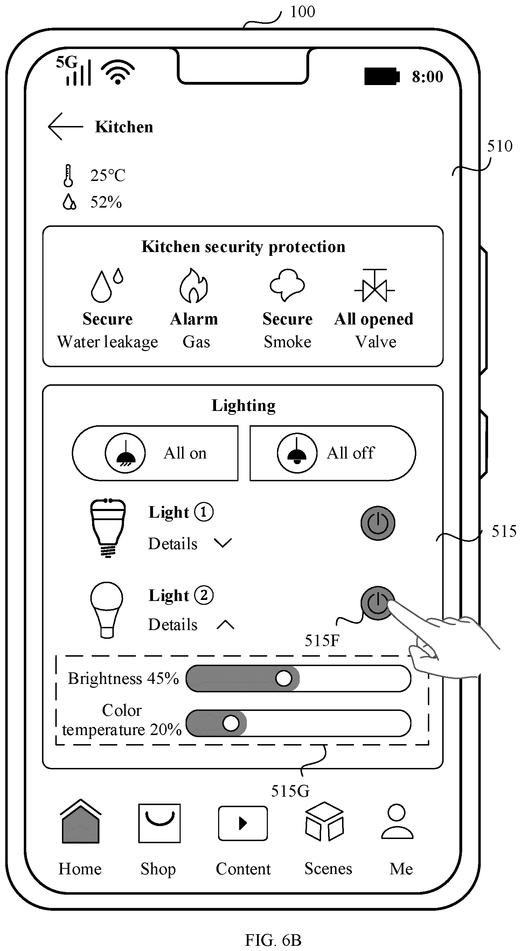

In response to a user operation performed on the light ② details control 515E in the lighting card 515, the electronic device 100 may display a user interface 510 shown in FIG. 6B. In FIG. 6B, the lighting card 515 may include a control display region 515G of the light ②. The control display region 515G may include a brightness adjustment control and a color temperature adjustment control. In other words, the light ② has abilities of brightness adjustment and color temperature adjustment. When the light ② is in an on state, the control in the control display region 515G may be in an available state shown in FIG. 6B. For example, when the brightness adjustment control is in the available state, the electronic device 100 may adjust brightness of the light ② based on a user operation performed on the brightness adjustment control.

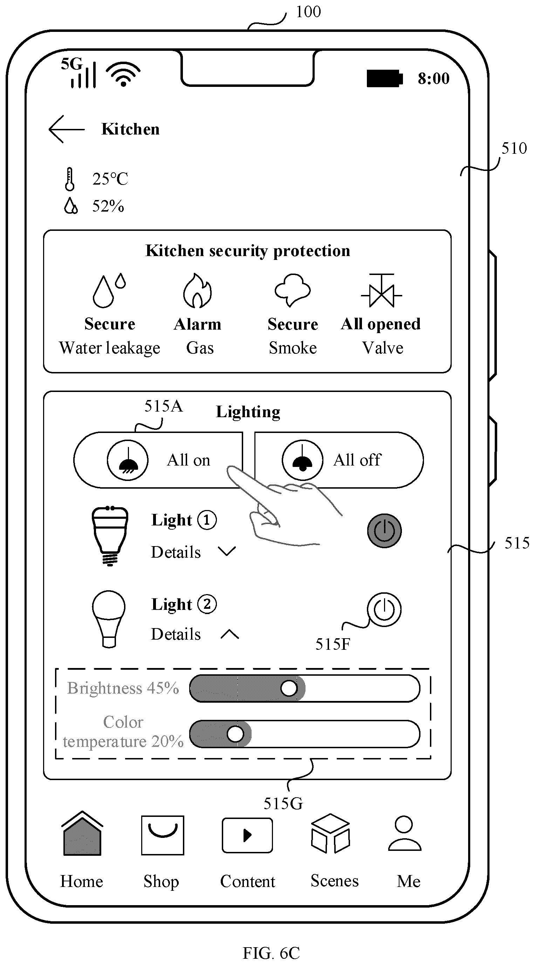

As shown in FIG. 6B, the light ② turn-on/off control 515F is in the on state. In response to a user operation performed on the light ② turn-on/off control 515F, the electronic device 100 may send a light-off control instruction to the light ②. When receiving a message indicating that the light ② is turned off, the electronic device 100 may display a user interface 510 shown in FIG. 6C. In FIG. 6C, the light 20 turn-on/off control 515F is in an off state. This may indicate that the light ② is in the off state. When the light ② is in the off state, the control in the control display region 515G may be in an unavailable state shown in FIG. 6C. It may be understood that when the light ② is turned off, controls such as the brightness adjustment control and the color temperature adjustment control that are used to control an operating status of the light ② cannot be used. A representation form in which the control is in the available state or the unavailable state is not limited in embodiments of this application.

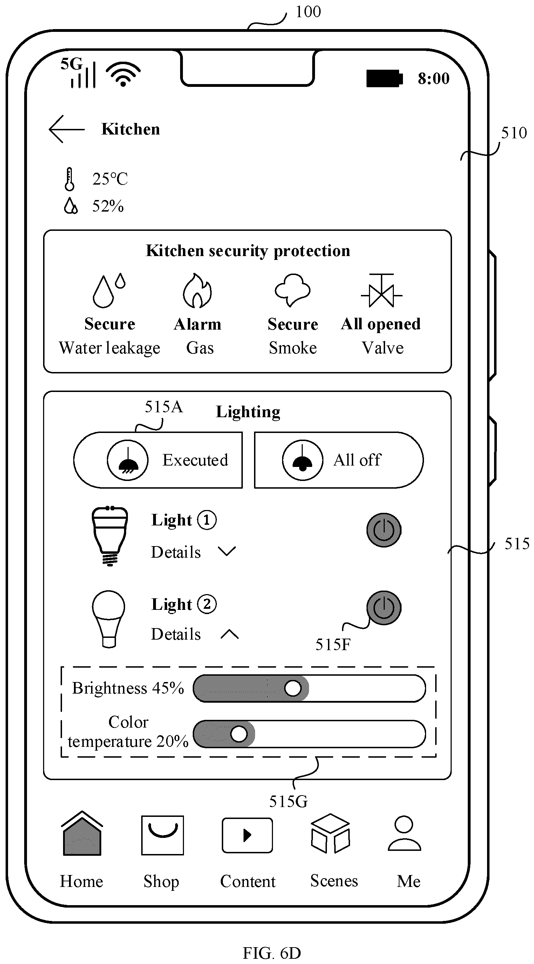

It can be learned from the lighting card 515 shown in FIG. 6C that the light ① in the kitchen is in the on state, and the light ② is in the off state. In response to a user operation performed on the all-on control 515A in the lighting card 515, the electronic device 100 may indicate all the lights in the kitchen to be turned on. The light ① is already in the on state. The light ② in the off state may be turned on based on a light-on indication of the electronic device 100. After the light ① is turned on, a message indicating that the light ② is in the on state may be sent to the electronic device 100. When receiving the message indicating that the light ② is in the on state, the electronic device 100 may display a user interface 510 shown in FIG. 6D. In FIG. 6D, the light ② turn-on/off control 515F is in the on state.

It can be learned from the scenario shown in FIG. 6A to FIG. 6D that the electronic device 100 may provide a control for controlling a plurality of smart home devices by one tap. The user may quickly control the plurality of smart home devices by using the control for controlling the plurality of smart home devices by one tap. In addition, the user may trigger, by using the space component, the electronic device 100 to enter a user interface that includes a control component for separately controlling each of the plurality of smart home devices. In this case, after controlling the plurality of smart home devices in batches, the user may further adjust a single smart home device in the plurality of smart home devices by using the foregoing separately controlling control component, so that functions provided by the plurality of smart home devices for the user can better meet requirements of the user. In the foregoing embodiments, when controlling the plurality of smart home devices, the user may first perform one-tap batch management and then perform fine adjustment on the smart home devices, without separately adjusting each smart home device. This can simplify the user operation of controlling the smart home devices by the user

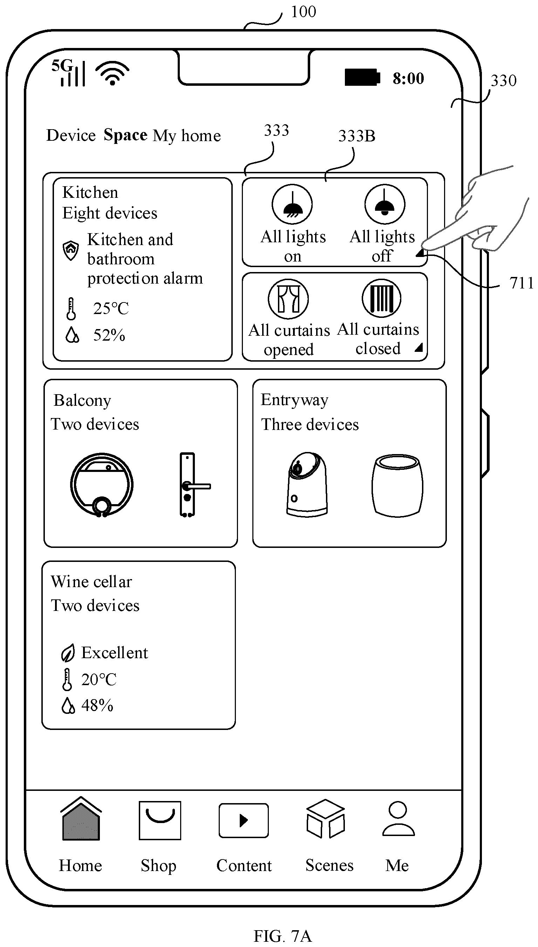

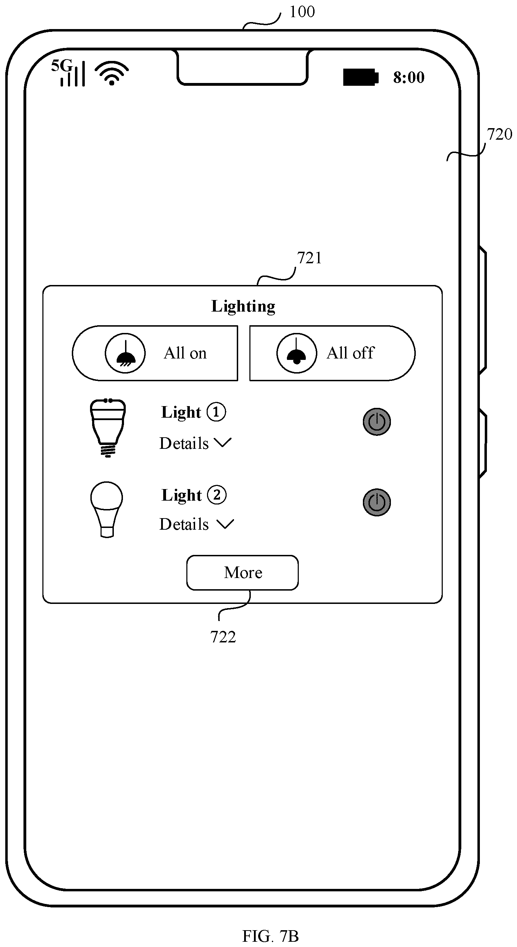

**FIG. 7A** **and** **FIG. 7B** **show an example of another scenario of controlling a smart home device according to an embodiment of this application.**

In some embodiments, in addition to a control for turning on or off, by one tap, all smart home devices that can provide one function in one space, the control component in the space card may further include an expansion control. The expansion control may be used to trigger the electronic device 100 to display all controls of all the smart home devices that can provide one function in the one space.

Herein, the light component 333B in the kitchen card 333 is used as an example for description.

Refer to FIG. 7A. The electronic device 100 may display a user interface 330. For content included in the user interface 330, refer to the descriptions in the foregoing embodiments. The user interface 330 may include the kitchen card 333. The kitchen card 333 may include the light component 333B. The light component 333B may include an expansion control 711. In response to a user operation performed on the expansion control 711, the electronic device 100 may display a user interface 720 shown in FIG. 7B. The user interface 720 may include a lighting card 721. For the lighting card 721, refer to the foregoing descriptions of the lighting card 515 shown in FIG. 5B. Compared with the lighting card 515, the lighting card 721 further includes a More control 722. In response to a user operation performed on the More control 722, the electronic device 100 may display a user interface (referring to user interfaces shown in FIG. 5B to FIG. 5D) used to view smart home devices in the kitchen.

In other words, the user may view, by using the expansion control in the control component, all smart home devices that can provide one function in one space, and control these smart home devices in batches or separately.

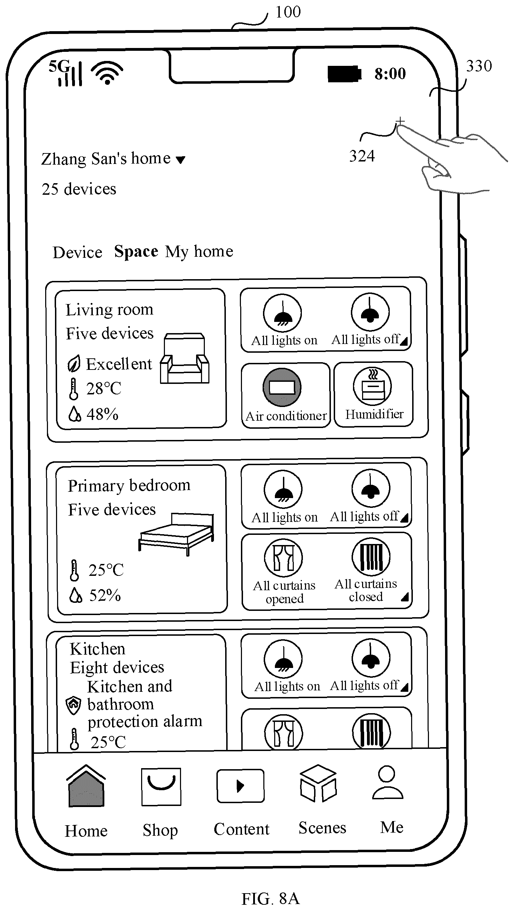

**FIG. 8A to FIG. 8F** **are schematic diagrams of an example of a scenario in which the electronic device 100 integrates a newly added smart home device in a home and an existing smart home device in the home according to an embodiment of this application.**

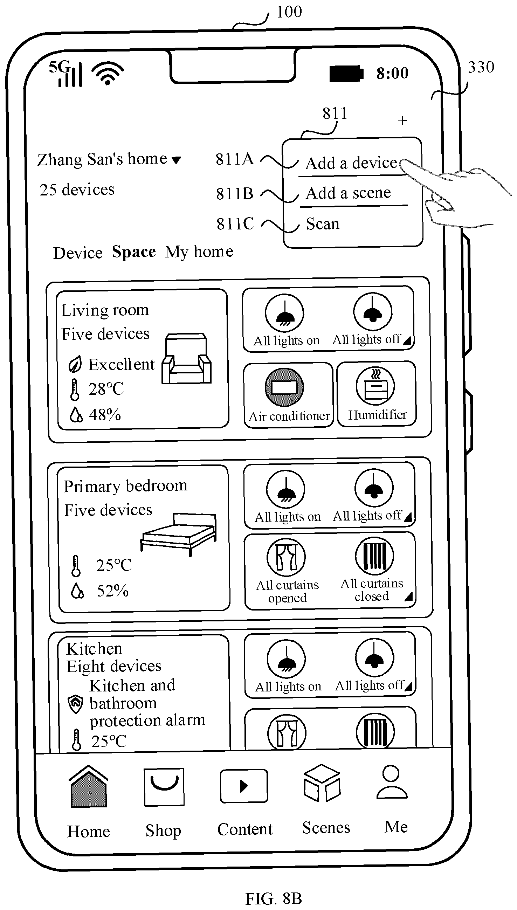

Refer to FIG. 8A. The electronic device 100 may display a user interface 330. For content included in the user interface 330, refer to the description in the foregoing embodiments. The user interface 330 may include an add control 324. In response to a user operation performed on the add control 324, the electronic device 100 may display an add option box 811 shown in FIG. 8B on the user interface 330.

The add option box 811 may include a device adding option 811A, a scene adding option 811B, and a scanning option 811C. The device adding option 811A may be used to trigger the electronic device 100 to scan, in a short-range communication manner like Bluetooth or Wi-Fi, to find whether there is a nearby smart home device that can be added. The scene adding option 811B may be used to trigger the electronic device 100 to display a user interface for adding a scene. The user interface for adding a scene may include setting options of a trigger condition and a trigger result. The trigger condition and the trigger result may form a scenario of controlling the smart home device. The scanning option 811C may be used to trigger the electronic device 100 to start a scanning apparatus. The scanning apparatus may be configured to scan data like a two-dimensional code, a bar code, and the like.

An option in the add option box 811 is not limited in embodiments of this application. The add option box 811 may further include more or fewer options.

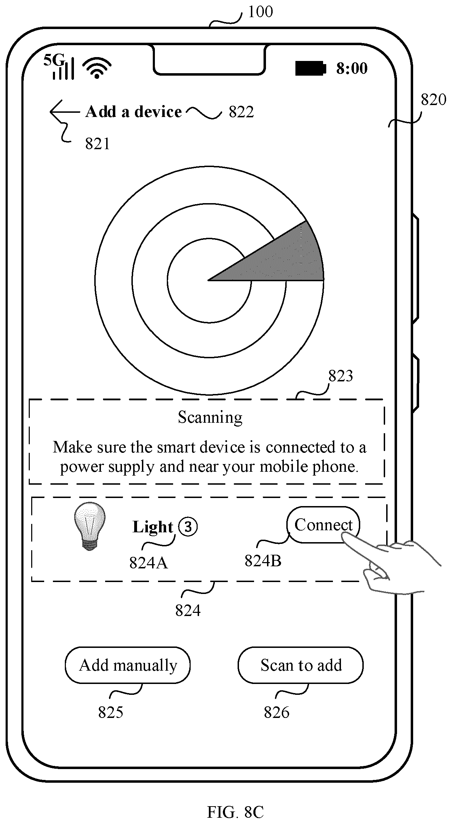

In response to a user operation performed on the device adding option 811A, the electronic device 100 may scan for the nearby smart home devices that can be added, and display a user interface 820 shown in FIG. 8C. The user interface 820 may include a return control 821, a page title 822, a scanning prompt 823, a discovered device display region 824, a manually-add control 825, and a scan-to-add control 826.

The return control 821 may be used to trigger the electronic device 100 to return to an upper-level user interface, that is, display the user interface 330 shown in FIG. 8B.

The page title 822 may indicate that the user interface 820 is a user interface for adding a smart home device to the home. The page title 352 may include text content, for example, "Add a device".

The scanning prompt 823 may prompt the user with a scanning status of the electronic device 100. For example, "Scanning" may indicate that the electronic device 100 is scanning the nearby smart home device that can be added. For example, the electronic device 100 may determine, in a Bluetooth communication manner, whether there is the nearby smart home device that can be added. The electronic device 100 may broadcast a device discovery request through Bluetooth communication. After receiving the discovery request, the smart home device in a Bluetooth enabled state may send a discovery response to the electronic device 100 through Bluetooth communication. When receiving the discovery response, the electronic device 100 may find the smart home device through scanning, and display a connection control of the smart home device on the user interface. A method for scanning a smart home device by the electronic device 100 is not limited in embodiments of this application.

The scanning prompt 823 may further include content used to prompt the user with a precaution for adding the smart home device. The foregoing precaution may include "Make sure the smart device is connected to a power supply and near your mobile phone."

The discovered device display region 824 may be used to display the smart home device found by the electronic device 100 through scanning. For example, the electronic device 100 finds a light ③ through scanning. The electronic device 100 may display a name 824A of the light ③ and a connection control 824B in the discovered device display region 824. The connection control 824B may be used to trigger the electronic device 100 to establish a binding relationship with the light ③.

The manually-add control 825 may help the user manually enter, in the electronic device 100, information about a smart home device that needs to be added, to add the smart home device.

The scan-to-add control 825 may be used to trigger the electronic device 100 to start the scanning apparatus. In other words, the user can add the smart home device by scanning the data like a two-dimensional code or a bar code. The foregoing implementation methods for manually adding the smart home device and adding the smart home device by scanning a code are not limited in embodiments of this application.

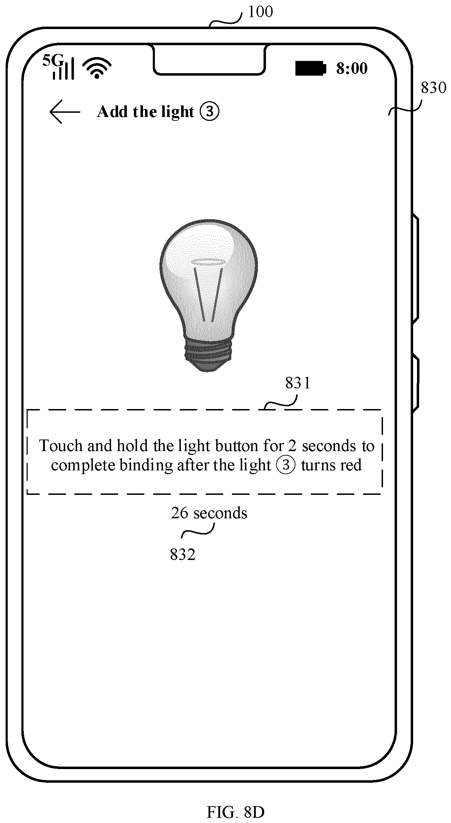

As shown in FIG. 8C, in response to a user operation performed on the connection control 824B, the electronic device 100 may display a user interface 830 shown in FIG. 8D. The user interface 830 may include an addition prompt 831 and a time prompt 832. The addition prompt 831 may be used to prompt an operation step of adding the light ③. For example, after tapping the connection control 824B shown in FIG. 8C on the electronic device 100, the user further needs to confirm, on the light ③, establishing a binding relationship between the light ③ and the electronic device 100. The foregoing confirmation operation on the light ③ may be, for example, touching and holding a light button for 2 seconds after the light ③ turns red. The time prompt 832 may be used to prompt the user with a remaining time for which the confirmation operation can be performed on the light ③.

In a possible implementation, in response to the user operation performed on the connection control 824B, the electronic device 100 may send a binding request to the light ③. When receiving the binding request, the light ③ may turn red. When receiving a user operation of touching and holding the body button of the light ③, the light ③ may send a binding confirmation message to the electronic device 100. In this case, the binding relationship may be established between the electronic device 100 and the light ③. After receiving the binding confirmation message, the electronic device 100 may further send a binding notification to the service cloud server 300. The binding notification may indicate that the binding relationship is established between the electronic device 100 and the light ③. The service cloud server 300 may store the binding relationship between the electronic device 100 and the light ③ based on the binding notification.

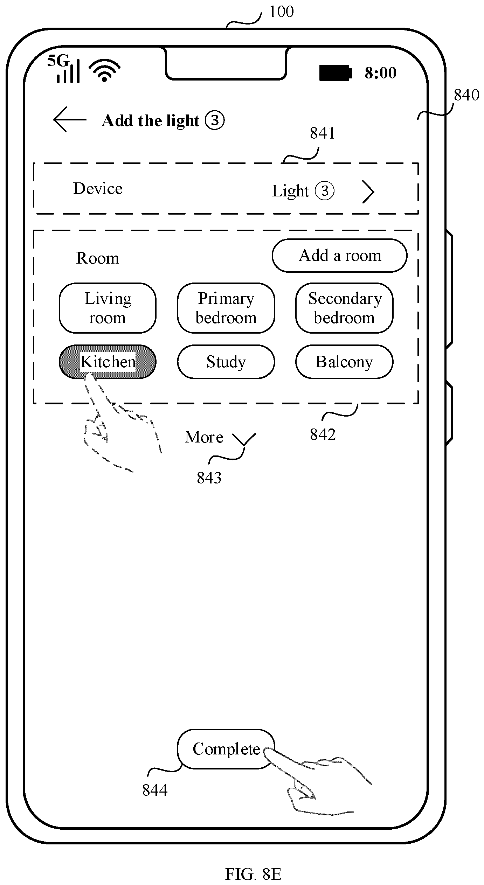

As shown in FIG. 8E, when receiving the binding confirmation message from the light ③, the electronic device 100 may display a user interface 840. The user interface 840 may be used to set a spatial attribute of the light ③. The user interface 840 may include a device name display region 841, a spatial attribute option display region 842, a More control 843, and a complete control 844.

The device name display region 841 may include a name of the light ③ and a name modification control. The foregoing name modification control may be used to modify a device name.

The spatial attribute option display region 842 may include one or more spatial attribute options, for example, a living room option, a primary bedroom option, a secondary bedroom option, a kitchen option, a study option, a balcony option, and the like. For example, in response to a user operation performed on the kitchen option, the electronic device 100 may change a state of the kitchen option to a selected state. A representation form of the selected state of the spatial attribute option is not limited in embodiments of this application.

The More control 843 may be used to trigger the electronic device 100 to display more spatial attribute options in the spatial attribute option display region 842.

The complete control 844 may be used to trigger the electronic device 100 to set a space corresponding to a spatial attribute option that is in the selected state and that is in the spatial attribute option display region 842 to having the spatial attribute of the light ③. As shown in FIG. 8E, when the kitchen option is in the selected state, in response to a user operation performed on the complete control 844, the electronic device 100 may set the spatial attribute of the light ③ to the kitchen. In other words, the smart home device, namely, the light ③, is newly added in the kitchen.

The electronic device 100 may determine, based on the spatial attribute and a control intent of the light ③ and a function that can be provided by the light ③, that the light ③ is a smart home device that can provide a lighting function in the kitchen, and the control intent of the light ③ includes turning on a light, turning off a light, adjusting brightness, and adjusting a color temperature.

The electronic device 100 may determine whether a smart home device that can provide the lighting function already exists in the kitchen before the light ③ is added. If the electronic device 100 determines that the smart home device that can provide the lighting function already exists in the kitchen, the electronic device 100 may classify the light ③ into a device group including the smart home device that can provide the lighting function and that already exists in the kitchen. In this case, a control used to control all smart home devices in the device group may control the light ③.

If the electronic device 100 determines that there is no smart home device that provides the lighting function in the kitchen before the light ③ is added, the electronic device 100 may provide a control used to separately control the light ③. For the control used to separately control the light ③, refer to the air conditioner control in the air conditioner component 332C shown in FIG. 3C.

For example, it can be learned from the embodiments shown in FIG. 5A to FIG. 5D that the light ① and the light ② already exist in the kitchen before the light ③ is added. In this case, the electronic device 100 may classify the light ③ into a light group including the light ① and the light ②.

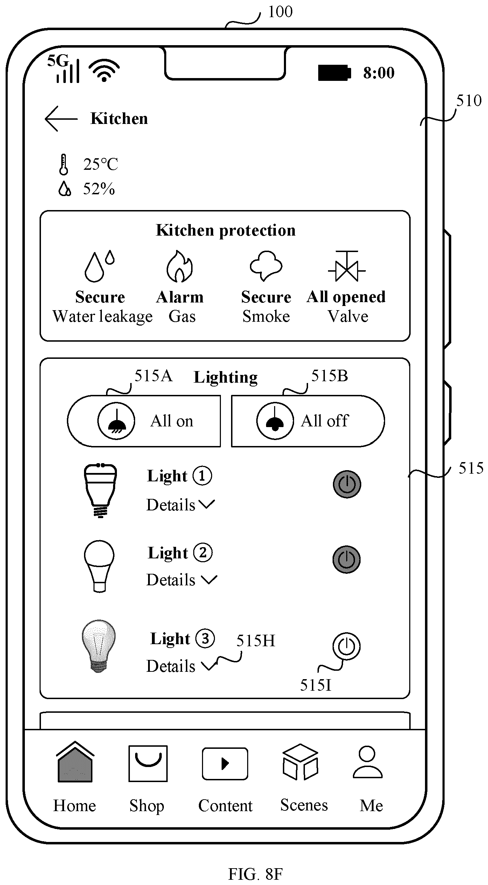

As shown in FIG. 8F, the electronic device 100 may display a user interface 510. For content included in the user interface 510, refer to the description in the foregoing embodiments. The user interface 510 shown in FIG. 8F includes a lighting card 515. Compared with the lighting card 515 shown in FIG. 5B, the lighting card 515 shown in FIG. 8F further includes a light ③ details control 515H and a light ③ turn-on/off control 5151. For the light ③ details control 515H, refer to the foregoing descriptions of the light ① details control 515C. For the light ③ turn-on/off control 5151, refer to the foregoing descriptions of the light ① turn-on/off control 515D.

The all-on control 515A in the lighting card 515 shown in FIG. 8F may be used to turn on the light ①, the light ②, and the light ③, and the all-off control 515B may be used to turn off the light ①, the light ②, and the light ③. For example, it can be learned from the lighting card 515 shown in FIG. 8F that the light ① and the light ② are in an on state. The light ③ is in an off state. In response to a user operation performed on the all-on control 515A shown in FIG. 8F, the electronic device 100 may send a light-on control instruction to the light ③, to turn on the light ③.

It may be understood that FIG. 8A to FIG. 8E are merely an example for describing a method for adding a smart home device provided in this application. The electronic device 100 may alternatively add a smart home device to a home of the AI Life app in another manner. When the smart home device is successfully added, a binding relationship may be established between the electronic device 100 and the smart home device. The user may control the smart home device in the home by using the AI Life app in the electronic device 100.

It can be learned from the embodiments shown in FIG. 8A to FIG. 8F that, for a smart home device newly added to a home, the electronic device 100 may integrate the smart home device and another smart home device that can provide a same function into a device group, and provide a control used to control all smart home devices in the device group. In this way, the user does not need to group the newly added smart home device each time after newly adding the smart home device. This can help the user control the smart home device more efficiently, and simplify a user operation of controlling a plurality of smart home devices.

In some embodiments, the electronic device 100 may classify a smart home device, and provide, based on a control intent of a user on the smart home device, a control used to control all smart home devices in a device group. Further, the electronic device 100 may modify the device group in response to a user operation used to modify the smart home device included in the device group. In this way, when the user uses a control of a device group to control all smart home devices in the device group, a function provided by the device group can better meet a user requirement.

The following describes scenarios in which the electronic device 100 modifies a group of a smart home device according to an embodiment of this application.

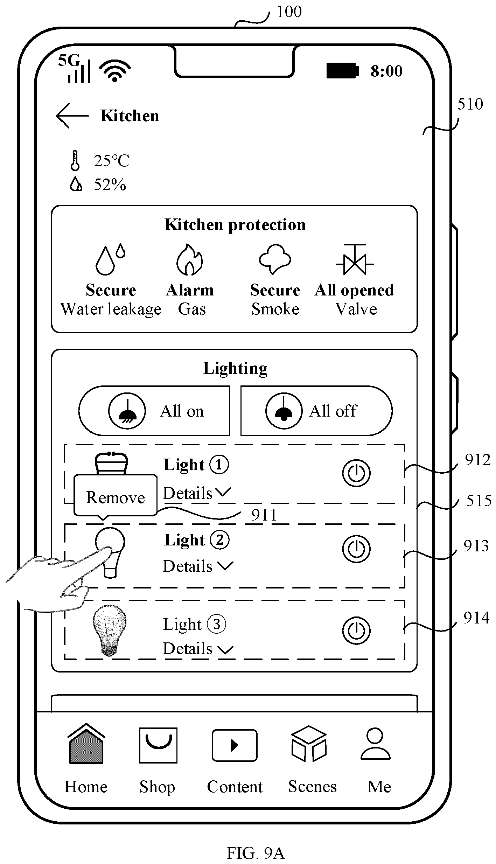

**FIG. 9A to FIG. 9D** **are schematic diagrams of an example of a scenario in which the electronic device 100 modifies the group of the smart home device.**

In a possible implementation, the electronic device 100 may remove the smart home device in the device group from the device group.

For example, the electronic device 100 combines three lights (a light ①, a light ②, and a light ③) whose spatial attribute is a kitchen into a light group, and provides an all-on control and an all-off control that are used to control all lights in the light group. However, the user wants to use the all-on control and the all-off control to control only the light ① and the light ③ in the kitchen. In this case, the electronic device 100 may remove, based on a user operation, the light ② from the light group controlled by the all-on control and the all-off control.

As shown in FIG. 9A, the electronic device 100 may display a user interface 510 shown in FIG. 9A. For the user interface 510, refer to the descriptions in the foregoing embodiments. The user interface 510 may include a lighting card 515. The lighting card 515 may include one or more home device display regions. Smart home devices corresponding to the one or more home device display regions may form a light group configured to provide a kitchen lighting function. A home device display region may include an icon and a name of a smart home device, and a control used to control the smart home device. The one or more home device display regions may include a light ① display region 912, a light ② display region 913, and a light ③ display region 914.

In response to a touch and hold operation performed on the light ② display region 913, the electronic device 100 may display a removal control 911 shown in FIG. 9A. The removal control 911 may be used to trigger the electronic device 100 to remove the light ② from the light group configured to provide the kitchen lighting function.

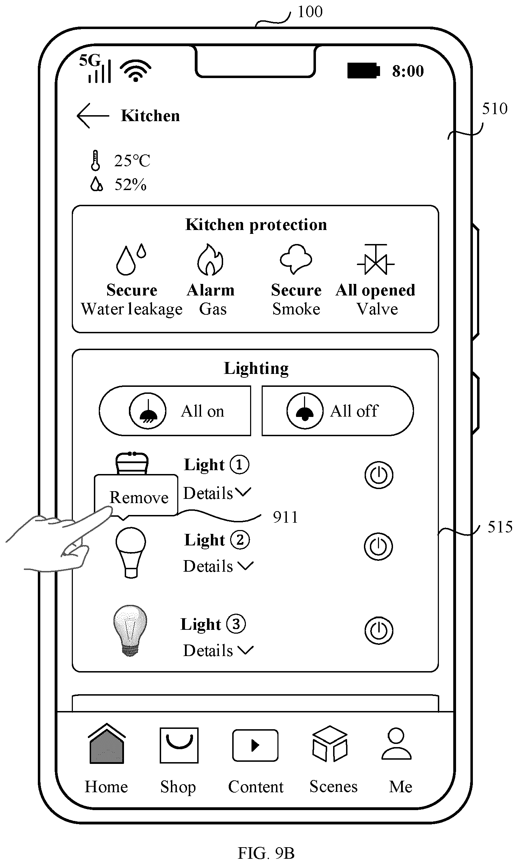

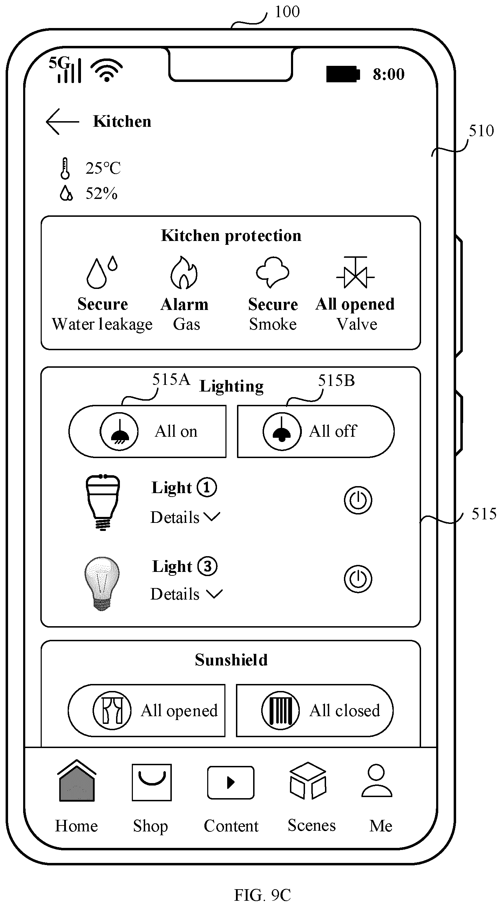

As shown in FIG. 9B, in response to a user operation performed on the removal control 911, the electronic device 100 may remove the light ② from the light group configured to provide the kitchen lighting function, and display a user interface 510 shown in FIG. 9C. It can be learned through comparison between the lighting card 515 shown in FIG. 9B and the lighting card 515 shown in FIG. 9C that, after the removal operation shown in FIG. 9A and FIG. 9B is performed, the home device display region in the lighting card 515 shown in FIG. 9C includes only the light ① display region 912 and the light ③ display region 914. Content like an icon and a name of the light 20, and a control used to control the light ② is removed from the lighting card 515.

In other words, the all-on control 515A and the all-off control 515B in the lighting card 515 shown in FIG. 9C are only used to control the light ① and the light ③ in the kitchen.

It may be understood that, although the light 20 is removed from the light group configured to provide the kitchen lighting function, a spatial attribute of the light 20 is still the kitchen. The electronic device 100 may still display a device card of the light ② on a user interface used to present smart home devices in the kitchen.

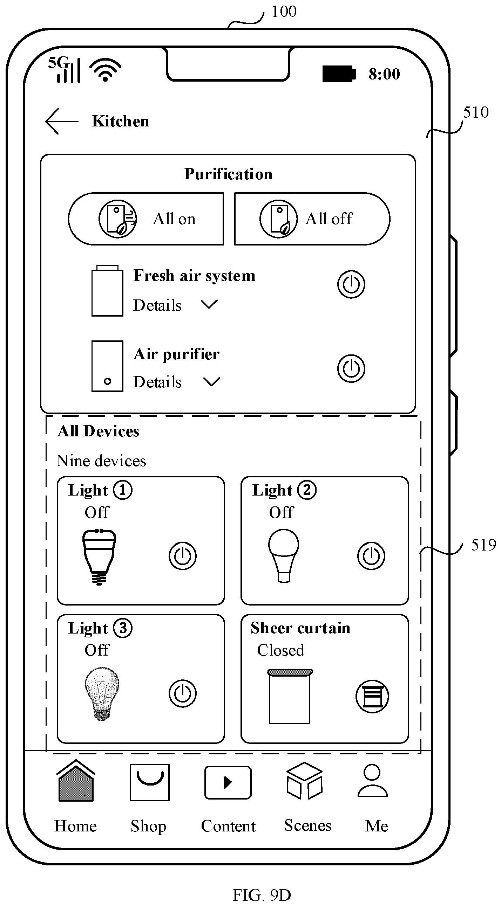

As shown in FIG. 9D, the electronic device 100 may display a user interface 510. The user interface 510 is a user interface used to present the smart home devices in the kitchen. The user interface 510 may include an all-devices display region 519. The all-devices display region 519 may include device cards of all the smart home devices in the kitchen. In other words, the all-devices display region 519 may include a light ② card. The user may trigger, by using a control on the light ② card, the electronic device 100 to separately control the light ②.

It can be learned from the embodiments shown in FIG. 9A to FIG. 9D that the user may manually modify a group of a smart home device that is already classified by the electronic device 100, for example, remove a smart home device from a device group. In this case, a control used to control smart home devices included in the device group may no longer be used to control the removed smart home device. In the foregoing embodiment, a control used to control smart home devices included in a device group can better meet a user requirement, and a user operation of controlling a plurality of smart home devices by the user can be simplified.

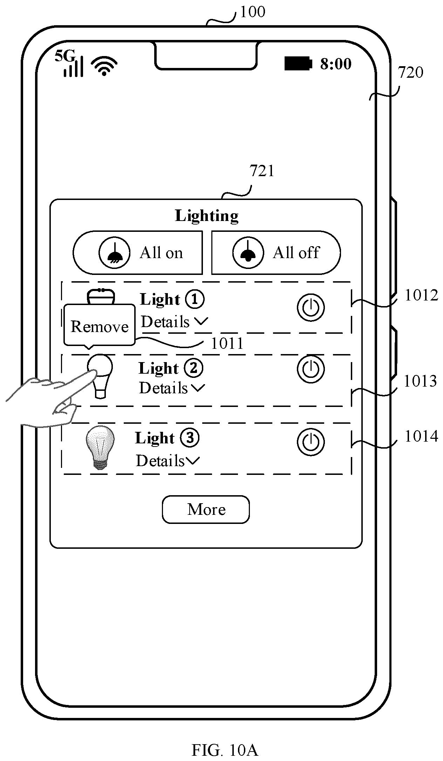

**FIG. 10A to FIG. 10C** **are schematic diagrams of an example of another scenario in which the electronic device 100 modifies the group of the smart home device.**

In a possible implementation, the electronic device 100 may remove the smart home device in the device group from the device group.

Refer to FIG. 10A. The electronic device 100 may display a user interface 720. The user interface 720 may be displayed by the electronic device 100 in response to the user operation performed on the expansion control 711 shown in FIG. 7A. The user interface 720 may be a user interface configured to present a light group that provides a lighting function in the kitchen. The user interface 720 may include a lighting card 721. For the lighting card 721, refer to the descriptions of the lighting card 515 shown in FIG. 9A.

The lighting card 721 may include a light ① display region 1012, a light ② display region 1013, and a light ③ display region 1014. In response to a touch and hold operation performed on the light ② display region 1013, the electronic device 100 may display a removal control 1011 shown in FIG. 10A. The removal control 1011 may be used to trigger the electronic device 100 to remove the light ② from the light group configured to provide the kitchen lighting function.

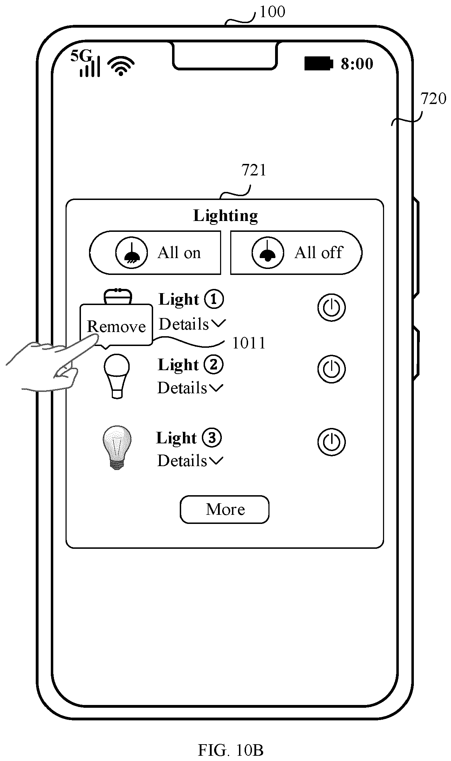

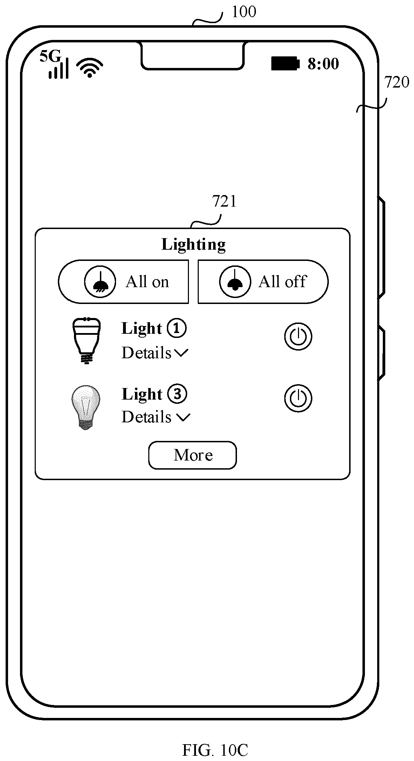

As shown in FIG. 10B, in response to a user operation performed on the removal control 1011, the electronic device 100 may remove the light ② from the light group configured to provide the kitchen lighting function, and display a user interface 720 shown in FIG. 10C. It can be learned through comparison between the lighting card 721 shown in FIG. 10B and the lighting card 721 shown in FIG. 10C that, after the removal operation shown in FIG. 10A and FIG. 10B is performed, the home device display region in the lighting card 721 shown in FIG. 10C includes only the light ① display region 1012 and the light ③ display region 1014. Content like an icon and a name of the light ②, and a control used to control the light ② is removed from the lighting card 721.

In other words, the all-on control and the all-off control in the lighting card 721 shown in FIG. 10C are only used to control the light ① and the light ③ in the kitchen.

It can be learned that, in both the scenario of modifying the group of the smart home device shown in FIG. 9A to FIG. 9D and the scenario of modifying the group of the smart home device shown in FIG. 10A to FIG. 10C, the light ② is removed from the light group configured to provide the kitchen lighting function. However, in the two scenarios, the user performs the removal operation at different locations. In other words, the electronic device 100 may provide a plurality of entries for the user to modify the group of the smart home device. This helps the user quickly modify the group of the smart home device.

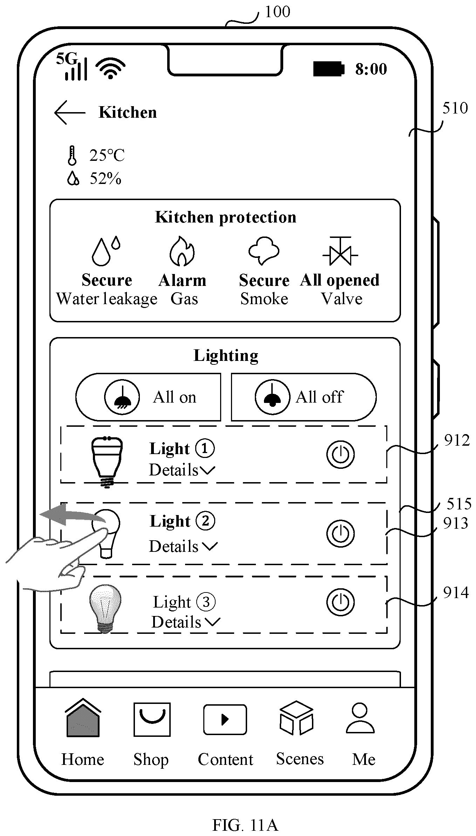

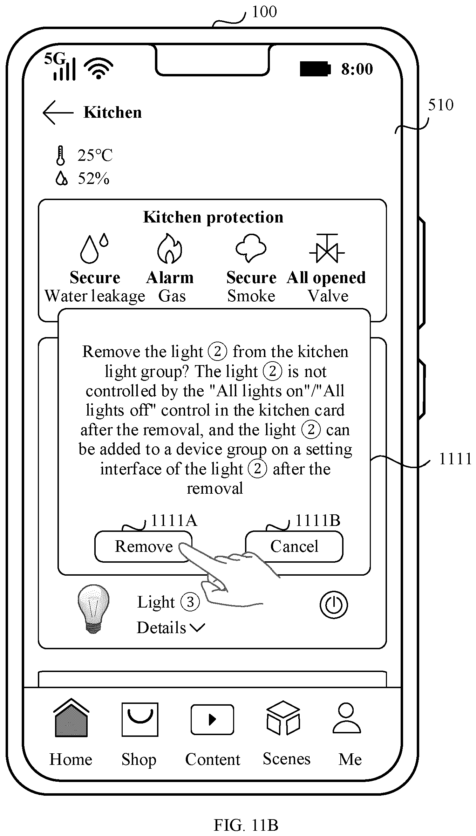

**FIG. 11A** **and** **FIG. 11B** **are schematic diagrams of an example of another scenario in which the electronic device 100 modifies the group of the smart home device.**

In a possible implementation, the electronic device 100 may remove the smart home device in the device group from the device group.

Refer to FIG. 11A. The electronic device 100 may display a user interface 510. The user interface 510 may include a lighting card 515. For the lighting card 515, refer to the descriptions of the lighting card shown in FIG. 9A. The lighting card 515 may include a light ① display region 912, a light ② display region 913, and a light @ display region 914.

In response to a user operation, of sliding toward an outer side of the lighting card 515, performed on the light ② display region 913, the electronic device 100 may display, on the user interface 510, a prompt box 1111 shown in FIG. 11B.

The prompt box 1111 may include prompt content, a removal control 1111A, and a cancel control 1111B. The prompt content may prompt the user that the electronic device 100 detects a user operation used to remove the light ② from the light group configured to provide the kitchen lighting function, and ask the user whether to confirm removal of the light ②. In this way, a case in which the light ② is removed due to a misoperation can be reduced. The prompt content may further prompt the user with a result of removing the light ② (that is, the light ② is not controlled by the "All lights on"/"All lights off" control in the kitchen card after the removal), and an operation manner of classifying the light ② into a device group after the light ② is removed (that is, the light ② can be added to a device group on a setting interface of the light ② after the removal).

The cancel control 1111B may be used to cancel the removal of the light 20.

The removal control 1111A may be used to trigger the electronic device 100 to remove the light ② from the light group configured to provide the kitchen lighting function. In response to a user operation performed on the removal control 1111A, the electronic device 100 may remove the light ② from the light group configured to provide the kitchen lighting function, and display a user interface 510 shown in FIG. 9C.

After the electronic device 100 removes the light ② from the light group configured to provide the kitchen lighting function, for a method for using the all-on control and the all-off control in the lighting card 515, refer to the descriptions of the embodiment shown in FIG. 9C. Details are not described herein again.

It can be learned that, in both the scenario of modifying the group of the smart home device shown in FIG. 9A to FIG. 9D and the scenario of modifying the group of the smart home device shown in FIG. 10A to FIG. 10C, the light ② is removed from the light group configured to provide the kitchen lighting function. However, in the two scenarios, removal operations of removing the light ② by the user are different. In other words, the electronic device 100 may provide a plurality of operation manners for the user to modify the group of the smart home device. This can help the user select an operation manner preferred by the user to quickly modify the group of smart home devices.

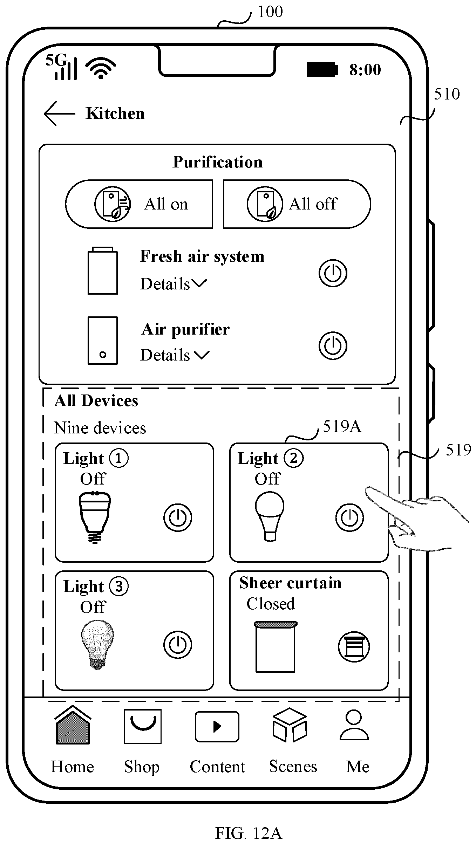

**FIG. 12A to FIG. 12D** **are schematic diagrams of an example of another scenario in which the electronic device 100 modifies the group of the smart home device.**

In a possible implementation, the electronic device 100 may add a smart home device to a device group in response to a user operation.

For example, a light whose spatial attribute is a kitchen in a home includes a light ①, a light ②, and a light ③. The electronic device 100 provides a control (for example, an all-on control or an all-off control) for controlling, by one tap, all lights in a light group (which may be referred to as a kitchen light group for short in subsequent embodiments) that provides a kitchen lighting function. The light group configured to provide the kitchen lighting function includes the light ① and the light ③, and does not include the light ②. However, in addition to light ① and light ③, the user wants to control the light ② by using the control for controlling, by one tap, all the lights in the kitchen light group. In this case, the electronic device 100 may add the light ② to the kitchen light group based on a user operation.

Refer to FIG. 12A. The electronic device 100 may display a user interface 510. The user interface 510 may include an all-devices display region 519. The all-devices display region 519 may include device cards of all the smart home devices in the kitchen, for example, a light ① card, a light ② card 519A, a light ③ card, and a sheer curtain card.

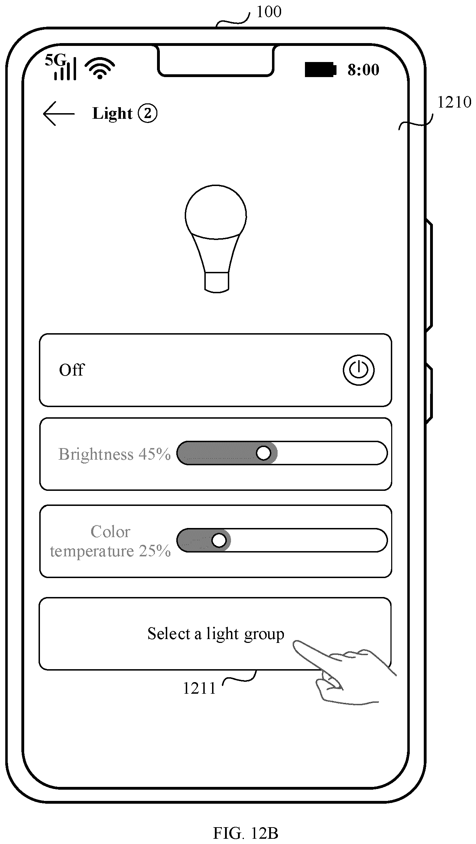

In response to a user operation performed on the light ② card 519A, for example, a touch operation, the electronic device 100 may display a user interface 1210 shown in FIG. 12B. The user operation performed on the light ② card 519A may be a user operation performed on a region in which no control (for example, a light turn-on/off control) is displayed on the light ② card 519A.

The user interface 1210 may include the light turn-on/off control, a brightness adjustment control, a color temperature adjustment control, and a light group selection control 1211. Not limited to the controls shown in FIG. 12B, the user interface 1210 may further include more or less controls used to control the light ②, and related information (for example, a manufacturer, a use time, and a working mode) of the light ②.

For the light turn-on/off control, the brightness adjustment control, and the color temperature adjustment control, refer to the descriptions of the embodiment shown in FIG. 6B.

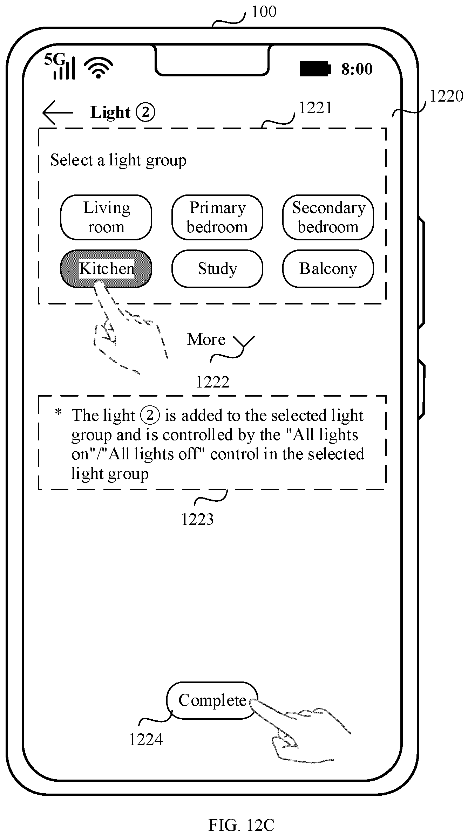

The light group selection control 1211 may be used to select a light group to which the light ② is added. In response to a user operation performed on the light group selection control 1211, the electronic device 100 may display a user interface 1220 shown in FIG. 12C. The user interface 1220 may include a light group option region 1211, a More control 1222, a prompt information display region 1223, and a complete control 1224.

The light group option region 1211 may include one or more light group options, for example, a living room light group option, a primary bedroom light group option, a secondary bedroom light group option, a kitchen light group option, a study light group option, and a balcony light group option. It should be noted that a light included in a light group corresponding to a light group option may be one or more lights that can be controlled by a control that is associated with the light group and that is provided by the electronic device 100. In other words, a light group may not include all lights in one space. It may be understood that a smart home device included in another device group (for example, a temperature control device group, a curtain group, or a purification device group) other than the light group may be one or more smart home devices that can be controlled by a control that is associated with the device group and that is provided by the electronic device 100.

As shown in FIG. 12C, in response to a user operation performed on the kitchen light group option, the electronic device 100 may change a state of the kitchen light group option to a selected state. A representation form of the selected state of the light group option is not limited in embodiments of this application.

The More control 1222 may be used to trigger the electronic device 100 to display more light group options in the light group option region 1211.

The prompt information display region 1223 may be used to prompt the user with a result of adding the light ② to a light group. In other words, after the light ② is added to a light group, the light ② may be controlled by a control associated with the light group.

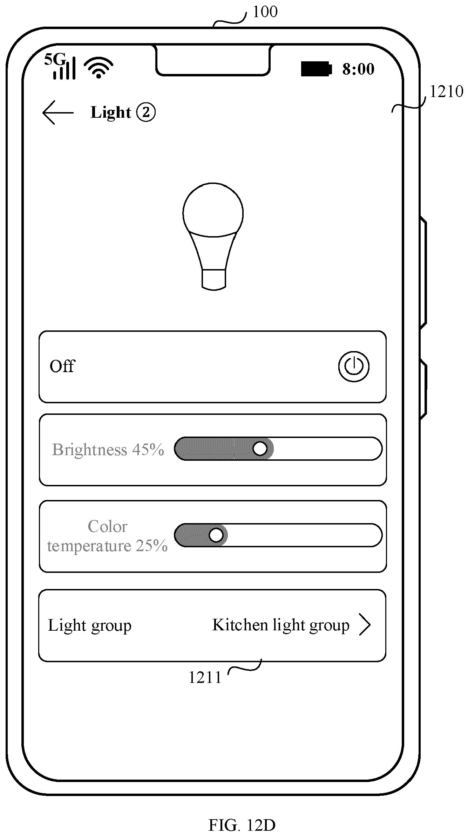

The complete control 1224 may be used to trigger the electronic device 100 to add the light ② to a light group corresponding to a light group option in the selected state in the light group option region 1211. As shown in FIG. 12C, when the kitchen light group option is in the selected state, in response to a user operation performed on the complete control 1224, the electronic device 100 may add the light ② to the kitchen light group, and display a user interface 1210 shown in FIG. 12D. The user interface 1210 may include a light group option 1211. It can be learned that the light group option 1211 shown in FIG. 12D may indicate that the light ② is already added to the kitchen light group.

When the light ② is added to the kitchen light group, in response to a user operation (for example, the touch operation performed on the kitchen component 333A shown in FIG. 5A) of viewing a smart home device in the kitchen, the electronic device 100 may display, in a lighting card 515 (referring to the lighting card 515 shown in FIG. 8F) of the kitchen, an icon and a name of the light ②, a control used to control the light ②, and the like.

After the adding operation shown in FIG. 12A to FIG. 12D is performed, the user can control the light ① , the light ②, and the light ③ by using the control associated with the kitchen light group by one tap.

Not limited to adding the light ② to a light group (for example, the kitchen light group or a living room light group) in one space, the electronic device 100 may further add, based on a user operation, the light ② to a device group that provides a function (for example, a temperature control function or a sunshade function) other than the lighting function. In other words, the light group selection control 1211 shown in FIG. 12B may be a device group selection control. The light group option region 1221 shown in FIG. 12C may be a device group option region. The device group option region may include a device group (for example, a temperature control device group, a curtain group, and a purification device group) other than the light group option.

It can be learned from the embodiments shown in FIG. 12A to FIG. 12D that the user may manually modify a group of a smart home device that is already classified by the electronic device 100, for example, add a smart home device to a device group. In this case, the control associated with the device group may be used to control the smart home device added to the device group. In the foregoing embodiment, a control associated with one device group can better meet a user requirement, and a user operation of controlling a plurality of smart home devices by the user can be simplified.

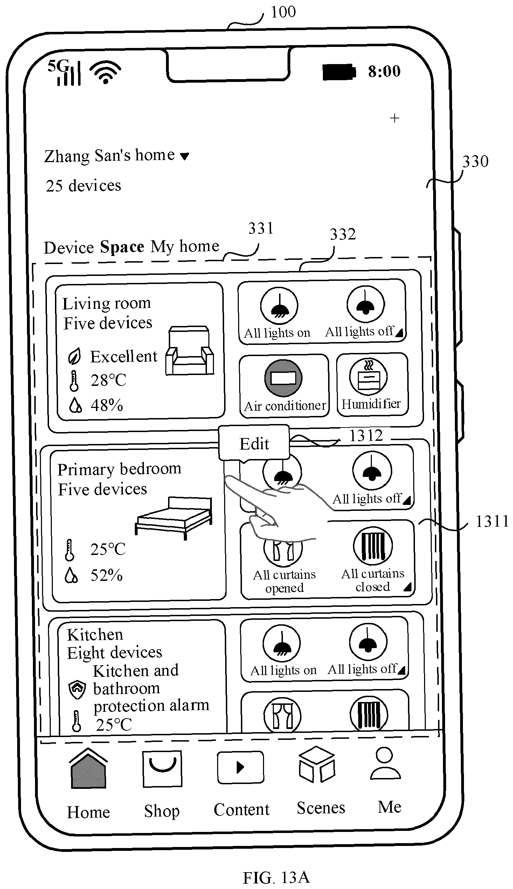

**FIG. 13A to FIG. 13D** **are schematic diagrams of an example of another scenario in which the electronic device 100 modifies the group of the smart home device.**

In a possible implementation, the electronic device 100 may combine smart home devices in a plurality of spaces, and provide a control used to control, by one tap, the smart home devices that are in the plurality of spaces and that are used to provide one function.

For example, the electronic device 100 may determine, based on a spatial attribute of the smart home device, smart home devices included in different spaces, classify smart home devices that provide one function in one space into one device group, and provide a control associated with the device group (namely, a control used to control all smart home devices in the device group). The electronic device 100 provides the living room card 332 and the primary bedroom card that are shown in FIG. 3C. The living room card 332 may include a control used to control a smart home device in the living room. The primary bedroom card may include a control used to control a smart home device in the primary bedroom. To be specific, when the user wants to turn on lights in the living room and the primary bedroom, the user needs to separately tap the controls that are used to turn on the lights and that are in the living room card 332 and the primary bedroom card. The operations are complex. The electronic device 100 may combine the smart home devices in the living room and the primary bedroom based on a user operation, and provide a turn-on control used to turn on the lights in the living room and the primary bedroom by one tap. In this way, the user can tap the turn-on control to turn on the lights in the living room and the primary bedroom by one tap.

Herein, a specific example in which the smart home devices in the living room and the primary bedroom are combined is used for description.

Refer to FIG. 13A. The electronic device 100 may display a user interface 330. For the user interface 330, refer to the descriptions of the embodiment shown in FIG. 3C. The user interface 330 may include a space card display region 331. The space card display region 331 may include a living room card 332 and a primary bedroom card 1311. In response to a touch and hold operation performed on the primary bedroom card 1311, the electronic device 100 may display an editing control 1312 shown in FIG. 13A. For the editing control 1312, refer to the editing control 341 shown in FIG. 3F. The touch and hold operation may be a touch and hold operation performed on a region in which no component (for example, a control component like a primary bedroom component, a light component, or a curtain component) is displayed in the primary bedroom card 1311. After detecting the touch and hold operation, the electronic device 100 may move a location of the primary bedroom card 1311 in response to a user operation of dragging the primary bedroom card 1311.

The touch and hold operation performed on the primary bedroom card 1311 and the user operation of dragging the primary bedroom card 1311 are consecutive operations. In other words, when the touch and hold operation and the drag operation are performed, the electronic device may continuously detect, by using a sensor like a touch sensor, a user operation performed on a screen.

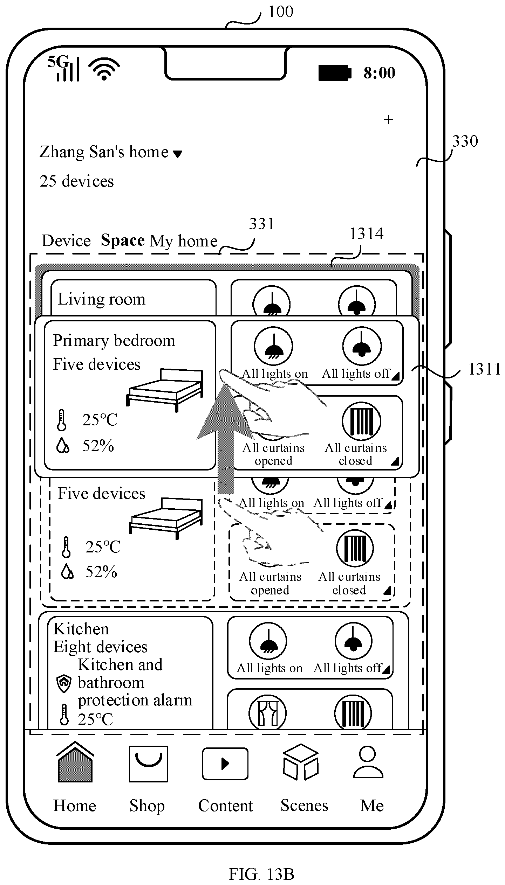

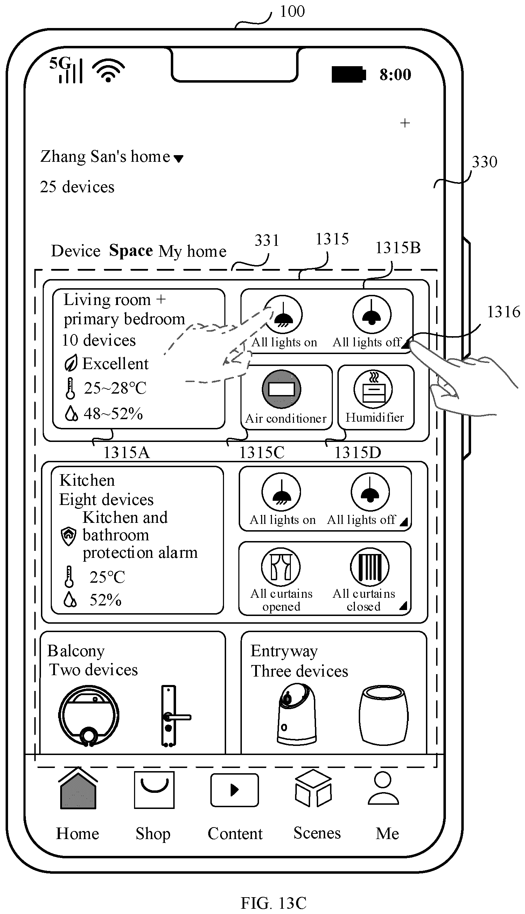

As shown in FIG. 13B, the electronic device 100 detects a user operation of dragging the primary bedroom card 1311 in a direction of the living room card 332. The electronic device 100 may move the primary bedroom card 1311 to a location indicated by the drag operation. When the location indicated by the drag operation is located in a region A at a location of the living room card 332, the electronic device 100 may display, at the location of the living room card 332, a combination indication component 1314 shown in FIG. 13B. When the combination indication component 1314 is displayed at the location of the living room card 332, if the electronic device 100 detects a user operation of releasing the primary bedroom card 1311 (for example, a finger of the user that drags the primary bedroom card 1311 leaves the screen of the electronic device 100), the electronic device 100 may combine the smart home devices in the living room and the primary bedroom, and display a living room + primary bedroom card 1315 on the user interface 330 shown in FIG. 13C.

It can be learned through comparison between FIG. 13A and FIG. 13C that, after a user operation of combining the smart home devices in the living room and the primary bedroom shown in FIG. 13A and FIG. 13B is performed, the space card display region 331 includes the living room + primary bedroom card 1315, and does not include the separate living room card 332 and the separate primary bedroom card 1311.

A location of the region A is not limited in embodiments of this application. For example, the region A may be a center region that has an area of A and that is of the location of the living room card 332.

In some embodiments, after a touch and hold operation is performed on a space card, for example, the primary bedroom card 1311, in a process of a user operation (for example, the drag operation) that is continuously performed on the space card, a size of the space card may be slightly greater than a size of the space card before the touch and hold operation is received (referring to FIG. 13A and FIG. 13B).

As shown in FIG. 13C, the living room + primary bedroom card 1315 may include a living room + primary bedroom component 1315A, a living room + primary bedroom light component 1315B, a living room + primary bedroom air conditioner component 1315C, and a living room + primary bedroom humidifier component 1315D.

A quantity of smart home devices in the living room and the primary bedroom and environment information monitored by the smart home devices may be presented on the living room + primary bedroom component 1315A. The living room + primary bedroom component 1315A may be used to trigger the electronic device 100 to display a user interface including all smart home devices in the living room and the primary bedroom.

The living room + primary bedroom light component 1315B may include an all-lights-on control and an all-lights-off control. The electronic device 100 may combine lights in the living room and the primary bedroom into one light group, namely, a living room + a primary bedroom light group. The all-lights-on control may be used to turn on all lights in the living room + a primary bedroom light group. The all-lights-off control may be used to turn off all the lights in the living room + a primary bedroom light group.

The living room + primary bedroom light component 1315B may further include an expansion control 1316. The expansion control 1316 may be used to trigger the electronic device 100 to display all controls of all smart home devices that can provide a lighting function in the living room and the primary bedroom.

The living room + primary bedroom air conditioner component 1315C may include an air conditioner turn-on/off control. In some embodiments, the electronic device 100 detects that there is an air conditioner in the living room, and there is no air conditioner in the primary bedroom. In this case, when smart home devices that can provide a temperature adjustment function in the living room and the primary bedroom are combined, the electronic device 100 determines that there is only one smart home device that can provide the temperature adjustment function in the living room and the primary bedroom. The electronic device 100 may provide the air conditioner turn-on/off control shown in FIG. 13C to control the air conditioner In some embodiments, the electronic device 100 detects that there are a plurality of smart home devices that can provide the temperature adjustment function in the living room and the primary bedroom. In this case, the electronic device 100 may combine the plurality of smart home devices that can provide the temperature adjustment function in the living room and the primary bedroom into one temperature control device group, and provide a control (for example, a control for turning on all temperature control devices and a control for turning off all temperature control devices) for controlling all smart home devices in the temperature control device group by one tap.

The living room + primary bedroom humidifier component 1315D may include a humidifier turn-on/off control. For the living room + primary bedroom humidifier component 1315D, refer to the descriptions of the living room + primary bedroom air conditioner component 1315C.

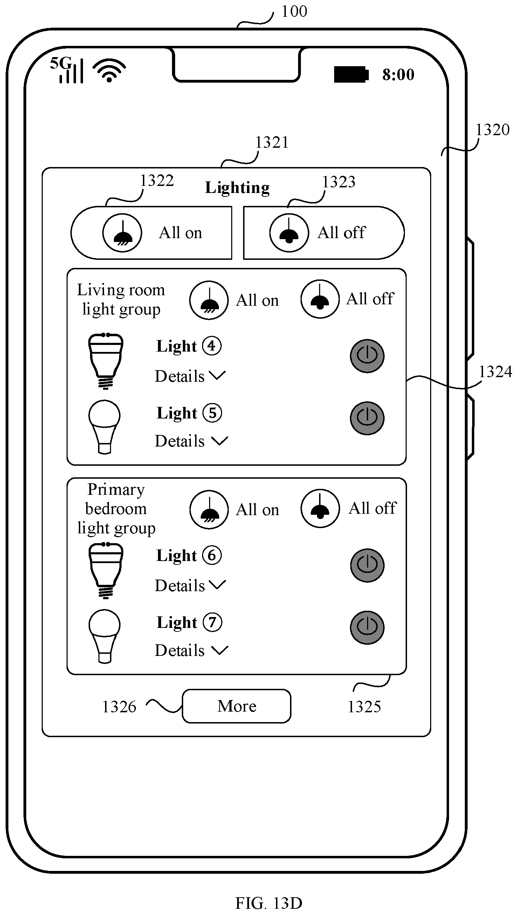

As shown in FIG. 13C, in response to a user operation performed on the all-lights-on component in the living room + primary bedroom light component 1315B, the electronic device 100 may send a light-on control instruction to all the lights in the living room + primary bedroom light group. All the lights in the living room + primary bedroom light group may be turned on in response to the light-on control instruction. Further, in response to a user operation performed on the expansion control 1316, the electronic device 100 may display a user interface 1320 shown in FIG. 13D. The user interface 1320 may include a lighting card 1321. The lighting card 1321 may include an all-lights-on control 1322, an all-lights-off control 1323, a living room light group card 1324, a primary bedroom light group card 1325, and a More control 1326.

The all-lights-on control 1322 may be used to turn on all the lights in the living room + primary bedroom light group.

The all-lights-off control 1323 may be used to turn off all the lights in the living room + primary bedroom light group.

The living room light group card 1324 may include a control used to control all lights in a living room light group. For content of the living room light group card 1324, refer to the descriptions of the lighting card 515 of the kitchen shown in FIG. 5B.

The primary bedroom light group card 1325 may include a control used to control all lights in a primary bedroom light group. For content of the primary bedroom light group card 1325, refer to the descriptions of the lighting card 515 of the kitchen shown in FIG. 5B.

Because the electronic device 100 detects the user operation performed on the all-lights-on control shown in FIG. 13C, all the lights (namely, a light ④, a light ⑤, a light ⑥, and a light ⑦) in the living room + primary bedroom light group are turned on, and controls that are in the living room light group card 1324 and the primary bedroom light group card and that are used to separately control each light may be in an on state shown in FIG. 13D.

The More control 1326 may be used to trigger the electronic device 100 to display a user interface used to view all smart home devices in the living room and the primary bedroom.

It can be learned from the embodiments shown in FIG. 13A to FIG. 13D that the user may manually modify a group of a smart home device that is already classified by the electronic device 100, for example, combine smart home devices in a plurality of spaces. In this case, the plurality of spaces may be equivalent to one space after the combination. A device group may include smart home devices in a plurality of spaces. The electronic device 100 may provide a control for controlling, by one tap, all smart home devices that can provide one function in the plurality of spaces. For example, the user may turn on all lights in the living room and the primary bedroom by one tap, or turn off all lights in the living room and the primary bedroom by one tap. In this way, a control used to control smart home devices included in a device group can better meet a user requirement, and a user operation of controlling the plurality of smart home devices by the user can be simplified.

In addition, after combining the smart home devices in the plurality of spaces, the electronic device 100 can still provide a control used to control one or more smart home devices in one space. In other words, the user can control a plurality of smart home devices in a plurality of spaces by one tap, and can also control a plurality of smart home devices in one space by one tap.

**Based on the scenario of modifying the group of the smart home device shown in** **FIG. 13A to FIG. 13D****, the following describes another scenario of controlling the smart home device according to an embodiment of this application.**

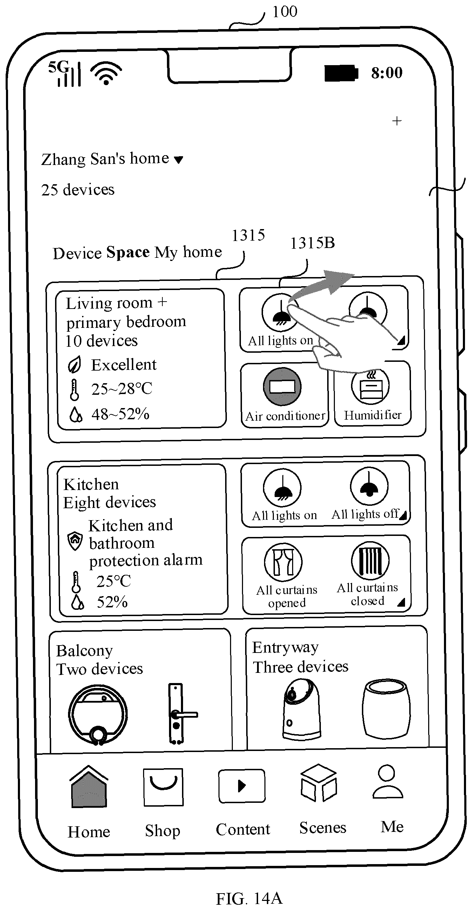

FIG. 14A to FIG. 14C are schematic diagrams of an example of another scenario of controlling the smart home device.

Refer to FIG. 14A. The electronic device 100 may display a user interface 330. For the user interface 330, refer to the descriptions in the foregoing embodiments. The user interface 330 may include the living room + primary bedroom card 1315. The living room + primary bedroom card 1315 may include the living room + primary bedroom light component 1315B.

In a possible implementation, in response to a touch operation performed on the all-lights-on control in the living room + primary bedroom light component 1315B, the electronic device 100 may send a light-on instruction to lights (for example, all lights in the living room and the primary bedroom) included in the living room + primary bedroom light group, to turn on the lights included in the living room + primary bedroom light group.

In a possible implementation, in response to a sliding-rightward user operation shown in FIG. 14A performed on the all-lights-on control in the living room + primary bedroom light component 1315B, the electronic device 100 may send a light-on instruction to lights (for example, all lights in the primary bedroom) included in the primary bedroom light group, to turn on the lights included in the primary bedroom light group. In response to a sliding-leftward user operation performed on the all-lights-on control in the living room + primary bedroom light component 1315B, the electronic device 100 may send a light-on instruction to lights (for example, all lights in the living room) included in the living room light group, to turn on the lights included in the living room light group.

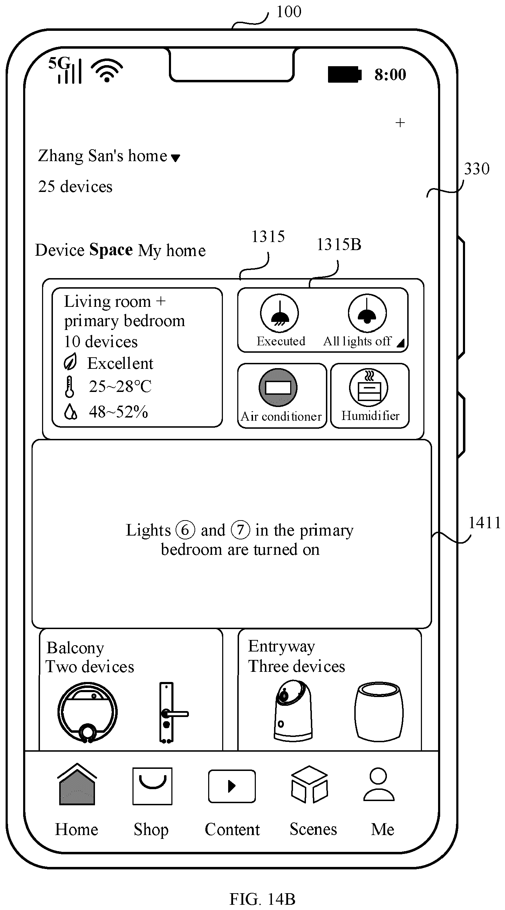

The electronic device 100 may display, on the user interface 330, a prompt box 1411 shown in FIG. 14B after indicating the lights in the primary bedroom light groups to be turned on based on the sliding-rightward user operation shown in FIG. 14A performed on the all-lights-on control. The prompt box 1411 may be used to prompt the user that the lights (for example, a light ⑥ and a light ⑦) in the primary bedroom light group are turned on.

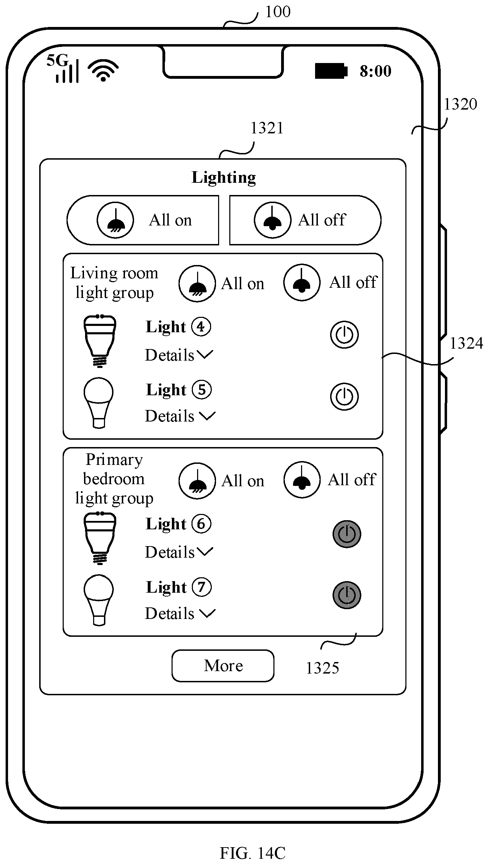

As shown in FIG. 14C, the electronic device 100 may display a user interface 1320. For the user interface 1320, refer to the descriptions in the foregoing embodiments. The user interface 1320 may include the lighting card 1321. The lighting card 1321 may include the living room light group card 1324 and the primary bedroom light group card 1325. The electronic device 100 may change a state of a light turn-on/off control used to separately control each light in the primary bedroom light group to an on state shown in FIG. 14C after indicating the lights in the primary bedroom light groups to be turned on based on the sliding-rightward user operation shown in FIG. 14A performed on the all-lights-on control. It can be learned that, a state of light turn-on/off controls that are in the living room light group card 1324 and that are used to separately control each light (for example, the light ④ and the light ⑤) in the living room light group is an off state. In other words, the light ④ and the light ⑤ are in the off state. A state of light turn-on/off controls that are in the primary bedroom light group card 1325 and that are used to separately control each light (for example, the light ⑥ and the light ⑦) in the primary bedroom light group is the on state. In other words, the light ⑥ and the light ⑦ are in the on state.

In embodiments of this application, a user operation performed on the control for controlling a plurality of smart home devices in a plurality of spaces by one tap is not limited. For example, the electronic device 100 may further control, in response to a sliding-upward or sliding-down user operation performed on the control for controlling the plurality of smart home devices in the plurality of spaces by one tap, a smart home device that is located in one space and that is in the plurality of smart home devices.

It can be learned from the foregoing embodiments shown in FIG. 14A to FIG. 14C that, the user may control, through different user operations performed on the controls used to control the plurality of smart home devices in the plurality of spaces by one tap, a smart home device that is located in one space and that is in the plurality of smart home devices. In the foregoing embodiments, after the smart home devices in the plurality of spaces are combined, a requirement of the user for separately controlling a smart home device in one of the spaces can be met.

**Based on the scenario of modifying the group of the smart home device shown in** **FIG. 13A to FIG. 13D****, the following describes another scenario of controlling the smart home device according to an embodiment of this application.**

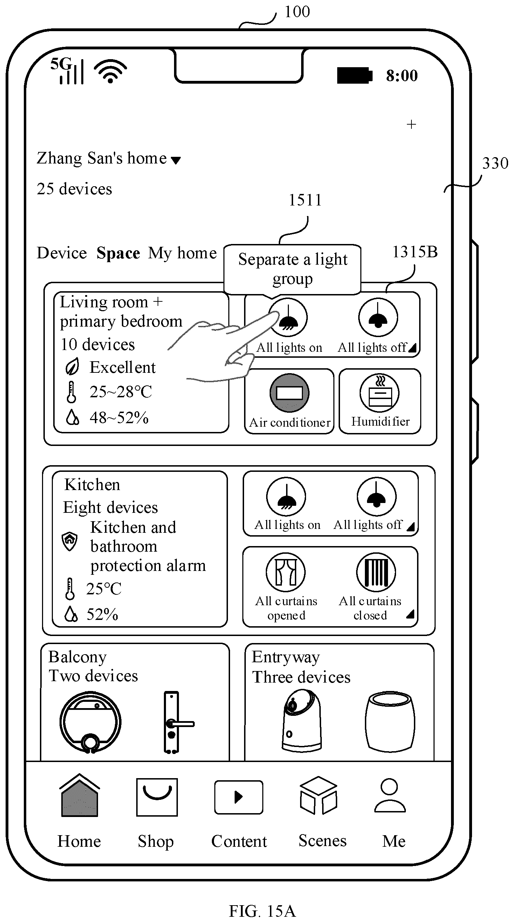

FIG. 15A to FIG. 15C are schematic diagrams of an example of another scenario of controlling the smart home device.

Refer to FIG. 15A. The electronic device 100 may display a user interface 330. For the user interface 330, refer to the descriptions in the foregoing embodiments. The user interface 330 may include the living room + primary bedroom card 1315. The living room + primary bedroom card 1315 may include the living room + primary bedroom light component 1315B.

In response to a touch and hold operation performed on the living room + primary bedroom light component 1315B, the electronic device 100 may display a light group separation control 1511. The light group separation control 1511 may be used to trigger the electronic device 100 to change the living room + primary bedroom light component 1315B into a control used to separately control the living room light group and a control used to separately control the primary bedroom light group.

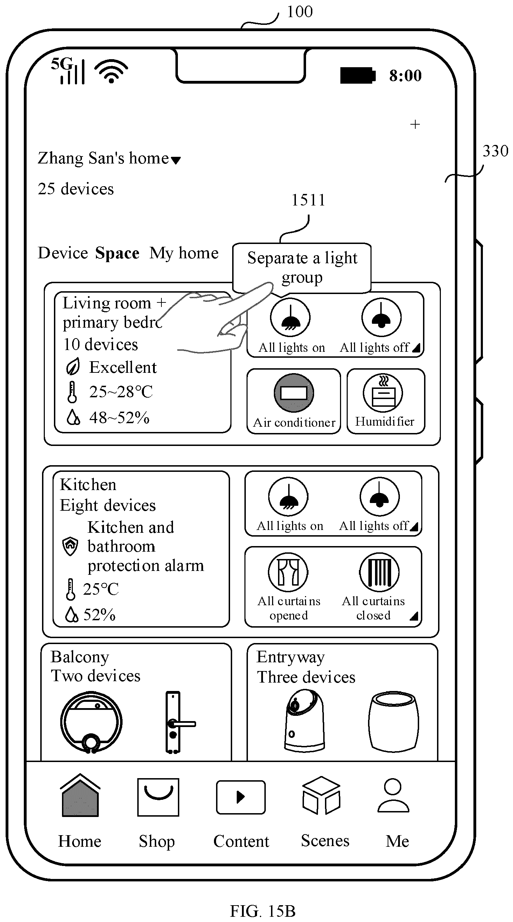

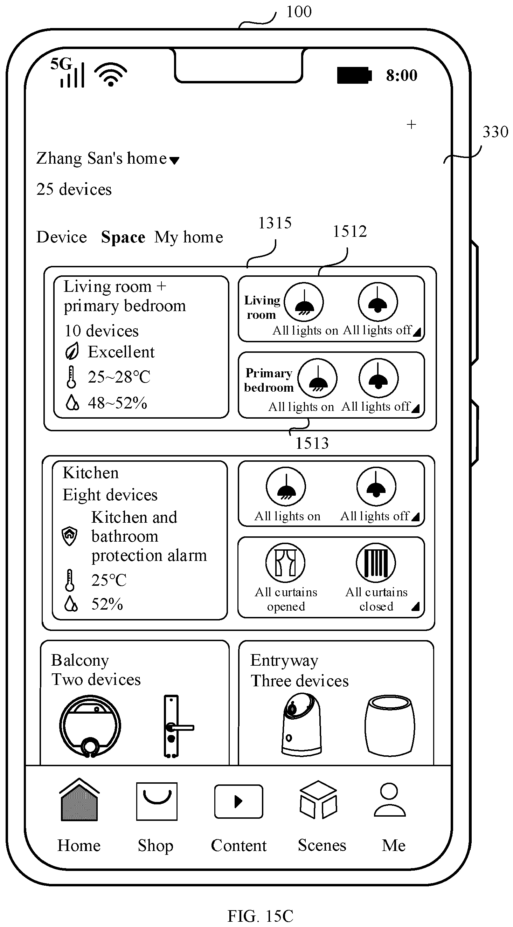

Specifically, as shown in FIG. 15B, in response to a user operation performed on the light group separation control 1511, the electronic device 100 may display a user interface 330 shown in FIG. 15C. The user interface 330 may include the living room + primary bedroom card 1315. In FIG. 15C, the living room + primary bedroom card 1315 may include a living room light group component 1512 and a primary bedroom light group component 1513. The living room light group component 1512 may include an all-lights-on control and an all-lights-off control that are used to control lights in the living room light group. The primary bedroom light group component 1513 may include an all-lights-on control and an all-lights-off control that are used to control lights in the primary bedroom light group.

It can be learned through comparison between FIG. 15B and FIG. 15C that, after a user operation of separating the light group shown in FIG. 15A and FIG. 15B is performed, the electronic device 100 may display the living room light group component 1512 and the primary bedroom light group component 1513 in the living room + primary bedroom card 1315, and no longer display the living room + primary bedroom light group component 1315B.

It can be learned from the foregoing embodiments shown in FIG. 15A to FIG. 15C that, after combining the smart home devices in the plurality of spaces, the electronic device 100 may provide, based on a user operation of separating a device group, a control used to control all smart home devices that are in one space and that can provide one function. In this way, after the smart home devices in the plurality of spaces are combined, the user can still separately control all smart home devices that are in one of the spaces and that can provide one function. In the foregoing embodiments, the user operation of controlling the plurality of smart home devices by the user can be simplified, and a requirement of the user for separately controlling some of the smart home devices can be met.

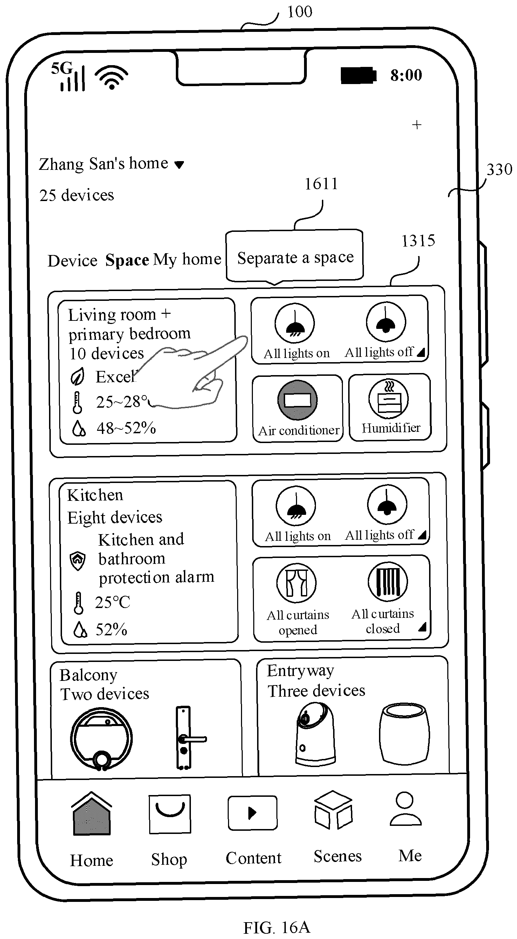

**FIG. 16A to FIG. 16C** **are schematic diagrams of an example of another scenario in which the electronic device 100 modifies the group of the smart home device.**

In a possible implementation, after combining the smart home devices in the plurality of spaces, the electronic device 100 may further separate the smart home devices in the plurality of spaces based on a user operation.

For example, the electronic device 100 combines the smart home devices in the living room and the primary bedroom, and provides a control used to control, by one tap, all smart home devices that can provide one function in the living room and the primary bedroom. However, the user wants to control the smart home devices in the living room and the primary bedroom by using separate controls. In this case, the electronic device 100 may separate the smart home device in the living room from the smart home device in the primary bedroom.

Herein, an example in which a smart home device in a living room and a primary bedroom is separated is specifically used for description.

Refer to FIG. 16A. The electronic device 100 may display a user interface 330. For the user interface 330, refer to the descriptions in the foregoing embodiments. The user interface 330 may include the living room + primary bedroom card 1315. In response to a touch and hold operation performed on the living room + primary bedroom card 1315, the electronic device 100 may display a separated spatial control 1611 shown in FIG. 16A. The touch and hold operation performed on the living room + primary bedroom card 1315 may be a user operation performed on a region in which no component (for example, a living room + primary bedroom component, a living room + primary bedroom light component, or a living room + primary bedroom air conditioner component) is displayed on the living room + primary bedroom card 1315.

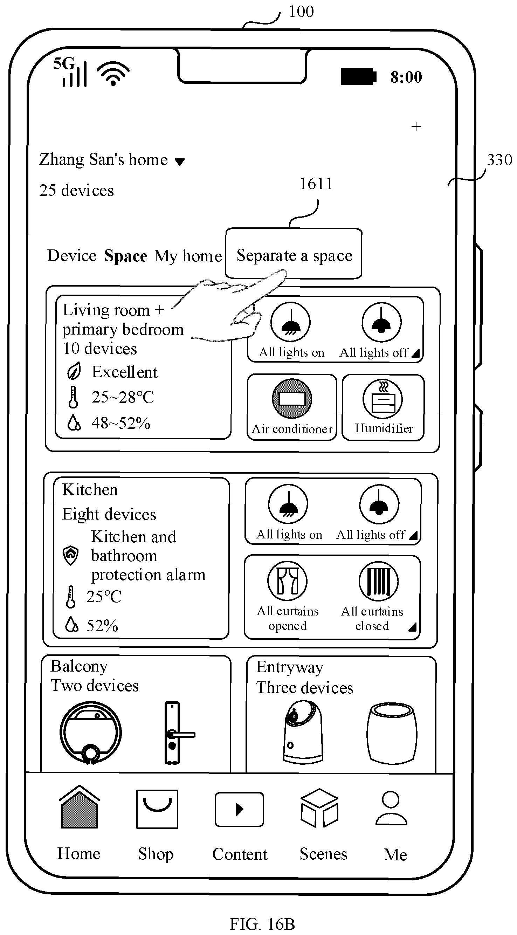

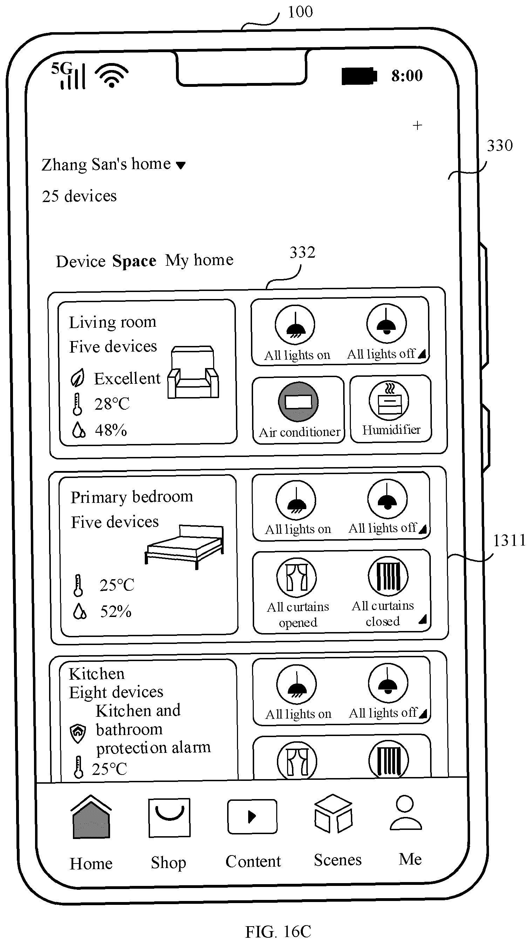

As shown in FIG. 16B, in response to a user operation performed on the separated spatial control 1611, for example, a touch operation, the electronic device 100 may display a user interface 330 shown in FIG. 16C. The user interface 330 shown in FIG. 16C may include a control for separately controlling a smart home device in a living room and a control for separately controlling a smart home device in a primary bedroom. For the user interface 330 shown in FIG. 16C, refer to the descriptions of the embodiment shown in FIG. 3C.

It can be learned through comparison between FIG. 16B and FIG. 16C that, after a user operation of the smart home device that separates the living room from the primary bedroom shown in FIG. 16A and FIG. 16B, the user interface 330 may include a separate living room card 332 and a separate primary bedroom card 1311, and does not include a living room + primary bedroom card 1315 in which the living room and the primary bedroom are combined into one space.

It can be learned from the embodiments shown in FIG. 16A to FIG. 16C that the electronic device 100 may provide a control that can control all smart home devices that provide one function in a plurality of spaces. The user can adjust the smart home device that can be controlled by the control. For example, the control is changed to a plurality of controls that can separately control all smart home devices that can provide a function in each of the plurality of spaces. In this way, the user may adjust, based on a preference and an operation habit of the user, a smart home device that can be controlled by the control.

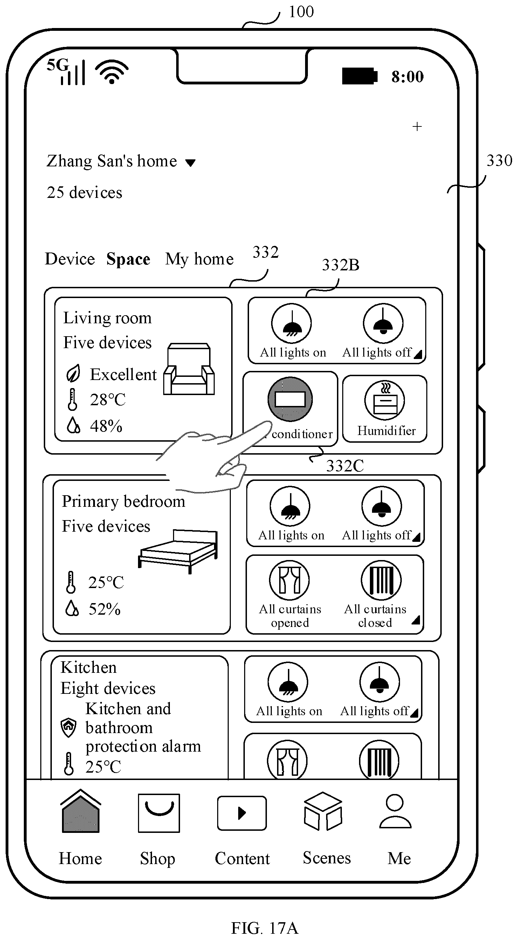

**FIG. 17A to FIG. 17D** **are schematic diagrams of an example of another scenario in which the electronic device 100 modifies the group of the smart home device.**

In a possible implementation, the electronic device 100 may classify a device group based on a function that can be provided by the smart home device, and provide a control associated with the device group. The control associated with the device group may be used to control all smart home devices in the device group. The device group may include a smart home device that can provide a function. The electronic device 100 may respond to a user operation and combine smart home devices that can provide different functions into one device group. In this way, the user can control a smart home device that can provide a plurality of functions by using a control by one tap.

For example, the electronic device 100 may provide a control used to separately control all lights in the living room and a control used to separately control an air conditioner in the living room. However, the user wants to turn on or off all lights and air conditioners in the living room by one tap. In this case, the electronic device 100 may combine all lights and air conditioners in the living room into one device group, and provide a control for controlling the device group that includes the lights and the air conditioners in the living room.

Herein, an example in which a light and an air conditioner in a living room are specifically combined is used for description.

Refer to FIG. 17A. The electronic device 100 may display a user interface 330. For the user interface 330, refer to the descriptions in the foregoing embodiments. The user interface 330 may include the living room card 332. The living room card 332 may include the light component 332B and the air conditioner component 332C. In response to a user operation of holding down and dragging the air conditioner component 332C, the electronic device 100 may move a location of the air conditioner component 332C. The electronic device 100 may move the air conditioner component 332C to a location indicated by the dragging operation.

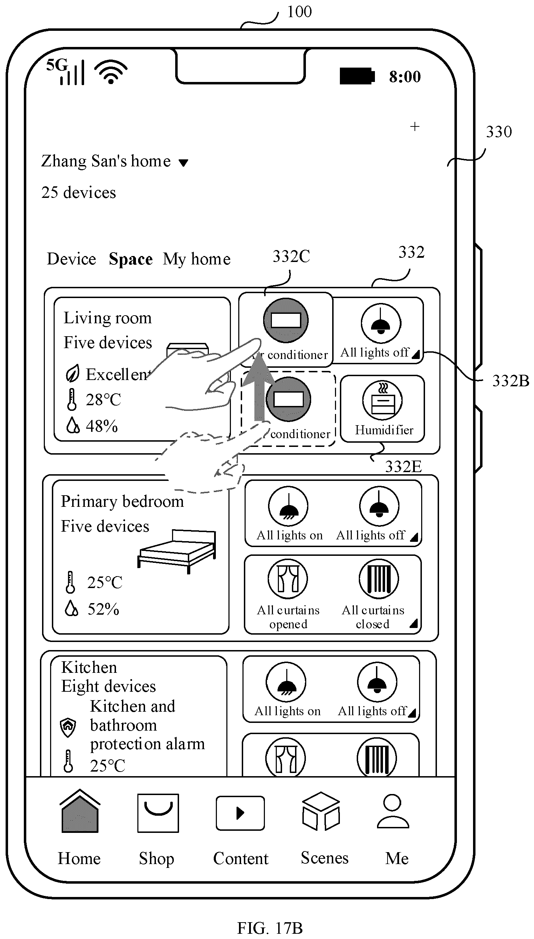

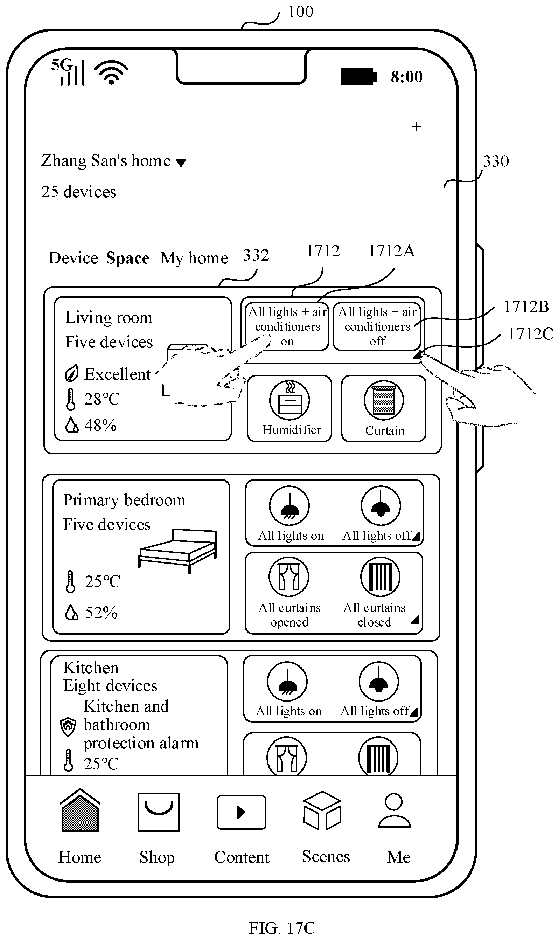

As shown in FIG. 17B, when the location indicated by the operation of dragging the air conditioner component 332C is located in a region B at the location of the light component 332B, and the electronic device 100 detects a user operation of releasing the air conditioner component 332C (for example, a finger of the user that drags the air conditioner component leaves the screen of the electronic device 100), the electronic device 100 may combine the light and the air conditioner in the living room into one device group, and provide a light + air conditioner component 1712 in the living room card 332 shown in FIG. 17C.

As shown in FIG. 17C, the light + air conditioner component 1712 may include a light + air conditioner all-on control 1712A, a light + air conditioner all-off control 1712B, and an expansion control 1712C. The light + air conditioner all-on control 1712A may be used to turn on all lights and air conditioners in the living room. The light + air conditioner all-off control 1712B may be used to turn off all lights and air conditioners in the living room. The expansion control 1712C may be used to trigger all smart home devices (for example, all lights and air conditioners in a living room) that can be controlled by the display light of the electronic device 100 and the air conditioner component 1712.

It can be learned through comparison between FIG. 17A and FIG. 17C that, after the user operation of combining the light and the air conditioner in the living room shown in FIG. 17A and FIG. 17B, the living room card 332 may include a light + air conditioner component 1712, and does not include a light component 332B and an air conditioner component 332C separately.

A location of the region B is not limited in embodiments of this application. For example, the region B may be a center region that has an area of B and that is of the location of the light component 332B.

In some embodiments, a control component, for example, an air conditioner component 332C, may be slightly larger than a size of a control component before a touch and hold operation is received in a process of a user operation (a drag operation) that is continuously performed on the control component after the touch and hold operation is performed again (referring to FIG. 17A and FIG. 17B).

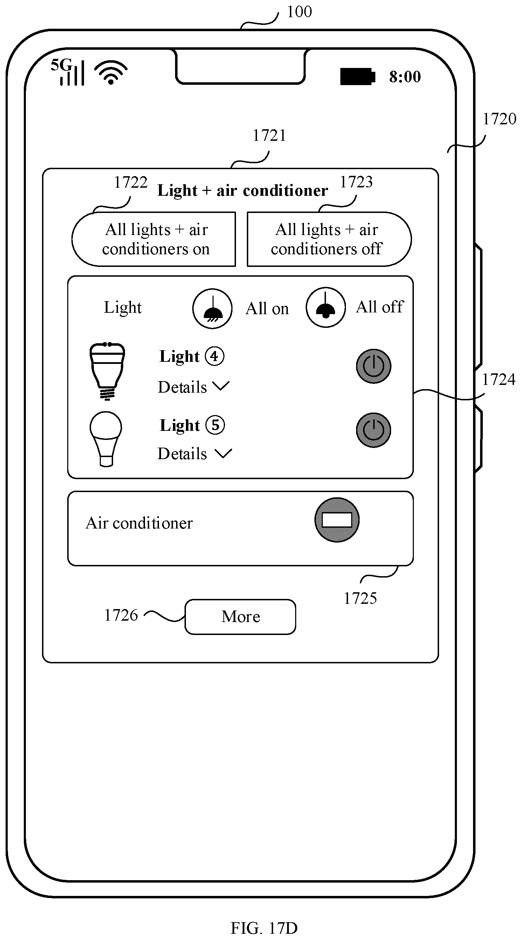

In response to a user operation, for example, a touch operation, performed on the light + air conditioner all-on control 1712A, the electronic device 100 may send a turn-on control instruction to all lights and air conditioners in the living room, to turn on all lights and air conditioners in the living room. Further, in response to a user operation performed on the expansion control 1712C, for example, a touch operation, the electronic device 100 may display a user interface 1720 shown in FIG. 17D. The user interface 1720 may include a light + air conditioner card 1721.

As shown in FIG. 17D, the light + air conditioner card 1721 may include a light + air conditioner all-on control 1722, a light + air conditioner all-off control 1723, a light card 1724, an air conditioner card 1725, and a More control 1726.

The light + air conditioner all-on control 1722 may be used to turn on all smart home devices (for example, all lights and air conditioners in the living room) in the light + air conditioner device group in the living room. A function of the light + air conditioner all-on control 1722 is the same as a function of the light + air conditioner all-on control 1712A shown in FIG. 17C.

The light + air conditioner all-off control 1723 may be used to turn off all smart home devices included in the light + air conditioner device group in the living room. A function of the light + air conditioner all-off control 1723 is the same as a function of the light + air conditioner all-off control 1712B shown in FIG. 17C.

The light card 1724 may include a control used to control a light included in a light group in the living room. For the light card 1724, refer to the descriptions of the lighting card 515 of the kitchen shown in FIG. 5B.

The air conditioner card 1725 may include a control used to control a smart home device included in the temperature control device group in the living room.

Because the electronic device 100 detects a user operation performed on the light + air conditioner all-on control 1712A shown in FIG. 17C, all smart home devices (such as a light 40, a light 05 , and an air conditioner) included in the light + air conditioner device group in the living room are turned on, and controls that are in the light card 1724 and the air conditioner card 1725 and that are used to separately control each smart home device may be in an on state shown in FIG. 17D.

The More control 1726 may be used to trigger the electronic device 100 to display a user interface used to view all smart home devices in the living room.

A user operation used to combine smart home devices with different functions is not limited in embodiments of this application.

In some embodiments, in response to a user operation performed on the light + air conditioner all-on control 1712A in the light + air conditioner component 1712, the electronic device 100 may indicate all lights included in the light + air conditioner device group in the living room to be turned on. In response to a sliding-rightward user operation performed on the light + air conditioner all-on control 1712A in the light + air conditioner component 1712, the electronic device 100 may indicate an air conditioner included in the light + air conditioner device group in the living room to be turned on. In other words, in response to different user operations performed on a control used to control, by one tap, a smart home device that can provide a plurality of functions in one space, the electronic device 100 may control the smart home device that can provide different functions in the space.

It can be learned from the embodiments shown in FIG. 17A to FIG. 17D that the user may manually modify a group of smart home devices that are already classified by the electronic device 100. For example, a plurality of smart home devices that can provide different functions in one space are combined into one device group. The electronic device 100 may provide a control used to control, by one tap, a smart home device that can provide a plurality of functions in one space. In this way, a control used to control smart home devices included in a device group can better meet a user requirement, and a user operation of controlling the plurality of smart home devices by the user can be simplified.

In addition, after combining the smart home devices that can provide a plurality of functions, the electronic device 100 may still provide a control used to separately control all the smart home devices that can provide one of the foregoing plurality of functions. In other words, the user may control, by one tap, a plurality of smart home devices that can provide a plurality of functions, and may also control, by one tap, one or more smart home devices that can provide one function.

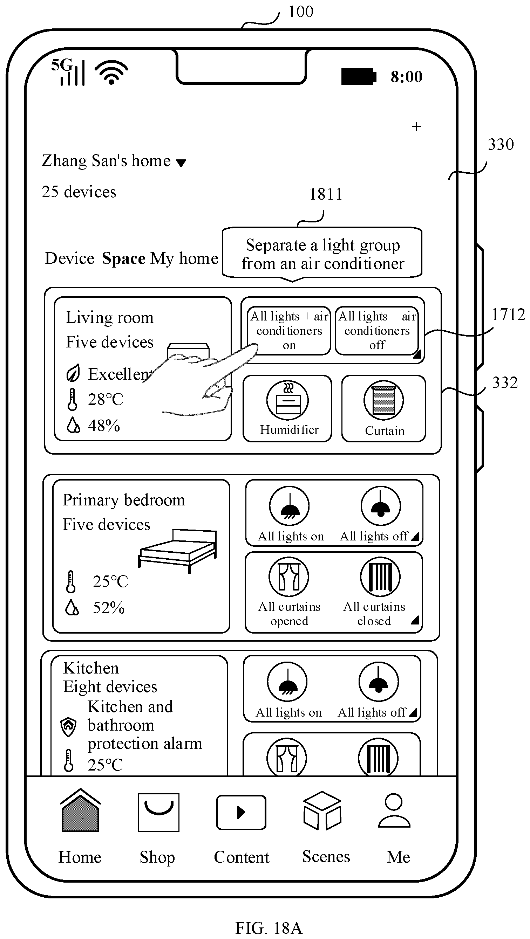

**FIG. 18A to FIG. 18C** **are schematic diagrams of an example of another scenario in which the electronic device 100 modifies the group of the smart home device.**

In a possible implementation, after combining the smart home devices that can provide different functions, the electronic device 100 may further separate, based on a user operation, the smart home devices that can provide different functions.

For example, the electronic device 100 combines smart home devices that can provide a lighting function and a temperature adjustment function in the living room into one device group (a light + an air conditioner device group), and provides a control for all smart home devices in the light + air conditioner device group by one tap. However, the user expects to separately control, by using a separate control, a smart home device that can provide a lighting function and a smart home device that can provide a temperature adjustment function in the living room. In this case, the electronic device 100 may separate a smart home device that can provide a lighting function and a temperature adjustment function in the living room.

Herein, an example in which a smart home device that can provide a lighting function and a temperature adjustment function in a living room is separated is specifically used for description.

Refer to FIG. 18A. The electronic device 100 may display a user interface 330. For the user interface 330, refer to the descriptions in the foregoing embodiments. The user interface 330 may include the living room card 332. The living room card 332 may include a light + air conditioner component 1712. In response to the touch and hold operation performed on the light + air conditioner component 1712, the electronic device 100 may display the light group and the air conditioner control 1811 that are separated shown in FIG. 18A.

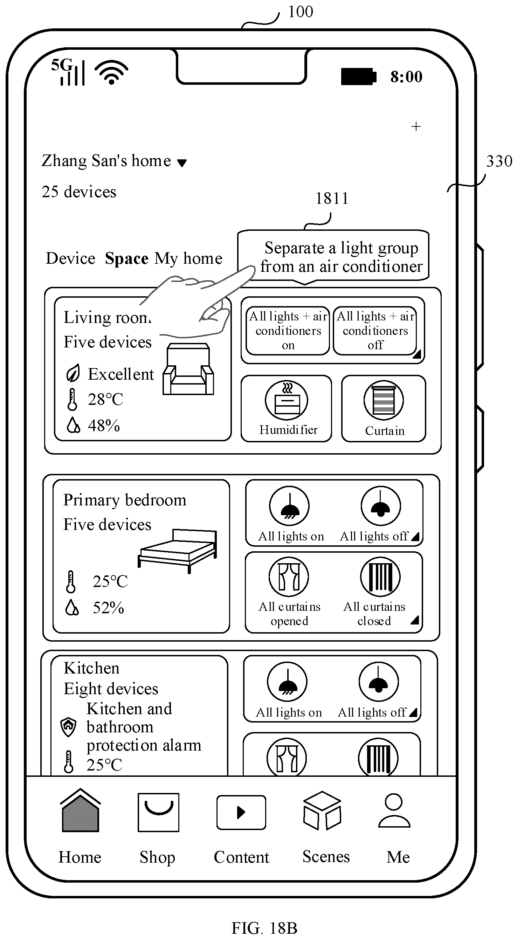

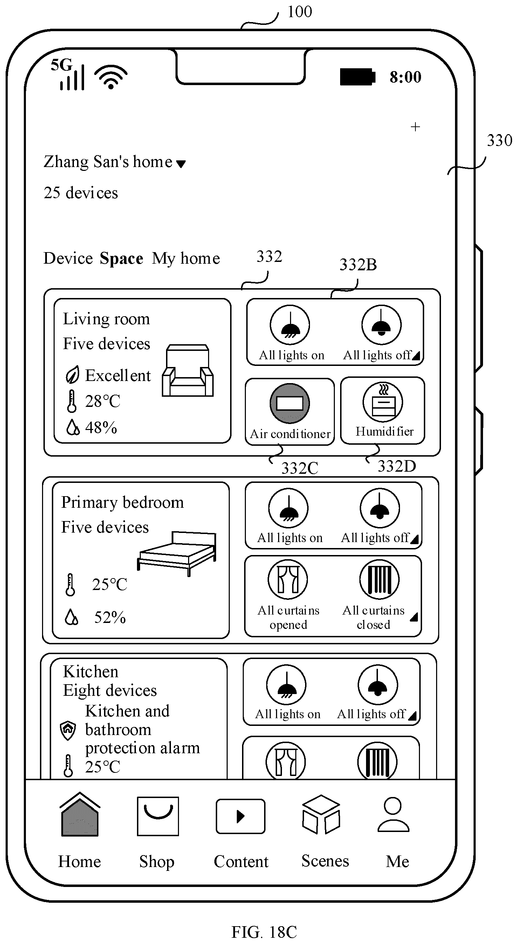

As shown in FIG. 18B, the electronic device 100 may display a user interface 330 shown in FIG. 18C in response to a user operation performed on separating the light group from the air conditioner control 1811, for example, a touch operation. The user interface 330 shown in FIG. 18C may include a control for separately controlling a smart home device that can provide a lighting function in the living room, and a control for separately controlling a smart home device that can provide a temperature adjustment function in the living room. For the user interface 330 shown in FIG. 18C, refer to the descriptions of the embodiment shown in FIG. 3C.

It can be learned through comparison between FIG. 18B and FIG. 18C that, after a user operation of separating the smart home device that can provide the lighting function and the temperature adjustment function in the living room shown in FIG. 18A and FIG. 18B is performed, the living room card 332 may include a separate light 332B and a separate air conditioner component 332C, and no longer include the light + air conditioner component 1712 in a state in which the smart home device that can provide the lighting function and the temperature adjustment function, the smart home device are combined into one device group.

It can be learned from the embodiments shown in FIG. 18A to FIG. 18C that the electronic device 100 may provide one control used to control a plurality of smart home devices that can provide a plurality of functions. The user can adjust the smart home device that can be controlled by the control. For example, the control is changed to a plurality of controls used to separately control all smart home devices that can provide each of the plurality of functions. In this way, the user may adjust, based on a preference and an operation habit of the user, a smart home device that can be controlled by the control.

In some embodiments, the electronic device 100 may obtain home device data such as an operating status of a smart home device and monitored data, and display the home device data by category based on a function that can be provided by the smart home device. The foregoing data classification may include home device data of a smart home device that provides an environment monitoring function, home device data of a smart home device that provides a network function, home device data of a smart home device that provides a security protection function, home device data of a smart home device that provides a water use function, and the like.

The following describes a scenario in which the electronic device 100 displays home device data by category according to an embodiment of this application.

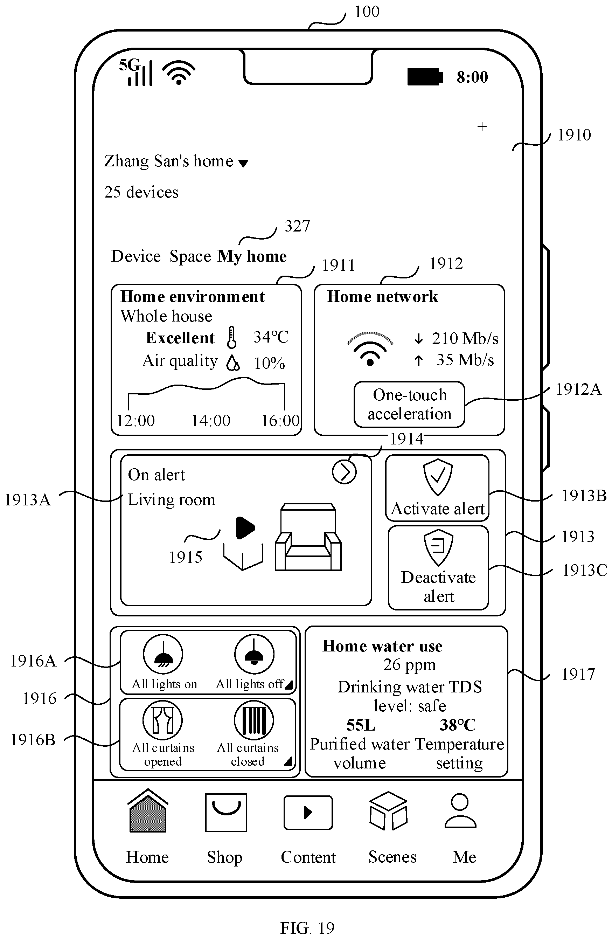

**FIG. 19** **is a schematic diagram of an example of a scenario in which the electronic device 100 displays a plurality of categories of home device data preview.**

In response to a user operation performed on the My home option 327 shown in FIG. 3B, the electronic device 100 may display a user interface 1910 shown in FIG. 19. The user interface 1910 may include a home environment card 1911, a home network card 1912, a home security protection card 1913, a frequently used device control card 1916, and a home water use card 1917.

The home environment card 1911 may display home device data of some smart home devices that provide an environment monitoring function, for example, air quality, a temperature, and humidity of an entire house. In other words, the home environment card 1911 may help the user preview home device data of a smart home device that provides an environment monitoring function.

The home network card 1912 may display home device data of some smart home devices that provide a network function, for example, a network speed. The home network card 1912 may further include an acceleration control 1912A. The acceleration control 1912A may be used to trigger the electronic device 100 to accelerate the home network. A specific implementation in which the electronic device 100 accelerates the home network is not limited in embodiments of this application. In other words, the home network card 1912 may help the user preview home device data of a smart home device that provides a network function, and quickly accelerate a network by using an entry (namely, an acceleration control 1912A) for accelerating the home network.

The home security protection card 1913 may include a monitoring image display region 1913A, an alert enabling control 1913B, and an alert disabling control 1913C.

The monitoring image display region 1913A may be used to display an image shot by one or more cameras in a home. The one or more cameras may be cameras having a same spatial attribute (for example, the living room). In this case, the monitoring image display region 1913A may display a monitoring image of a space, for example, the living room. The display region 1913A of the monitoring image may include an expansion control 1914 and a play control 1915. The expansion control 1914 may be used to trigger the electronic device 100 to display complete content of the home device data of the smart home device that provides the security protection function. The play control 1915 may be used to trigger the electronic device 100 to play, in the monitoring image display region 1913A, a monitoring image shot by a camera of a space.

The alert enabling control 1913B may be used to trigger the electronic device 100 to indicate all smart home devices that can provide the security protection function to be turned on. The alert disabling control 1913C may be used to trigger the electronic device 100 to indicate all smart home devices that can provide the security protection function to be turned off.

It can be learned that the user may quickly view a monitoring image of a space at home by using the home security protection card 1913, and control, by one tap, a smart home device that can provide a security protection function through the alert enabling control 1913B or the alert disabling control 1913C.

The common device control card 1916 may include a light component 1916A and a curtain component 1916B. The light component 1916A includes an all-lights-on control and an all-lights-off control. The all-lights-on control in the light component 1916A may be used to trigger the electronic device 100 to indicate all lights at home to be turned on, and the all-lights-off control may be used to trigger the electronic device 100 to indicate all lights at home to be turned off. The curtain component 1916B includes an all-curtains-opened control and an all-curtains-closed control. The all-curtains-opened control in the curtain component 1916B may be used to trigger the electronic device 100 to indicate all curtains at home to be opened, and the all-curtains-closed control may be used to trigger the electronic device 100 to indicate all curtains at home to be closed.

It may be understood that a control used to control a smart home device that is frequently used by the user may be placed in the common device control card 1916. In this way, the user may quickly control, by using the control component in the frequently used device control card 1916, a smart home device that is frequently used by the user. The electronic device 100 is not limited to a control component that is shown in FIG. 19 and that is used to control lights and curtains in the entire room. The electronic device 100 may modify a control component in the common device control card 1916 in response to a user operation.

The home water use card 1917 may display home device data of some smart home devices that provide a water use function, for example, quality of drinking water, a purified water volume, and a set temperature of a water heater. In other words, the home environment card 1911 may help the user preview home device data of a smart home device that provides a water use function.

Not limited to a card used to preview home device data shown in FIG. 19, the user interface 1910 may further include more or fewer categories of cards for previewing the home device data.

It can be learned from the embodiment shown in FIG. 19 that the electronic device 100 may classify the home device data based on functions that can be provided by the smart home device, and display, on one user interface, a plurality of categories of home device data preview cards. The user can quickly learn about a basic condition of the home environment, home network, home security protection, and home water use through the cards on the user interface.

In addition, the card that displays the data preview of the plurality of categories of home devices may further include a control (for example, a control for accelerating the home network, a control for turning on or off security protection devices in the entire house, a control for turning on or off lights in the entire house, and a control for opening or closing curtains in the entire house) for controlling all smart home devices that can provide one function by one tap. This can help the user control the smart home device, and simplify a user operation of controlling a plurality of smart home devices by the user.

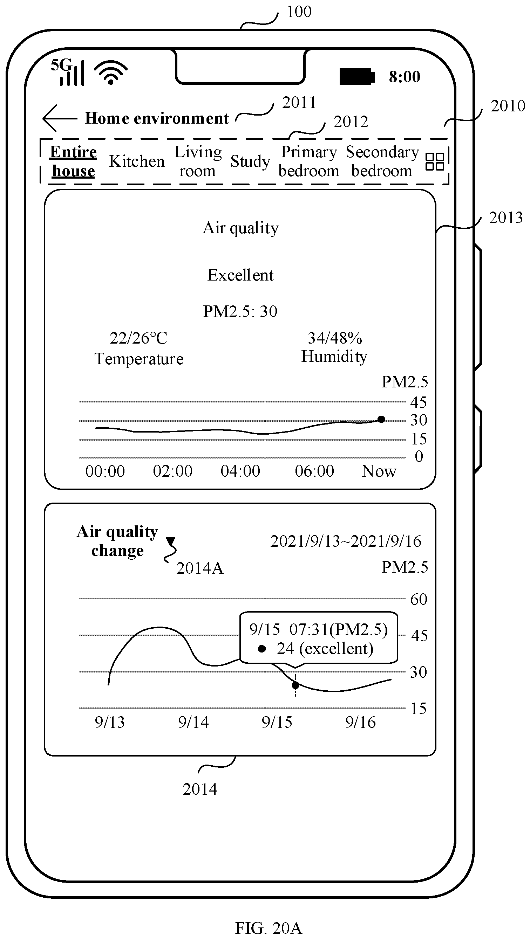

**FIG. 20A to FIG. 20C** **are schematic diagrams of an example of a scenario in which the electronic device 100 displays detailed content of home environment data.**

In response to a user operation performed on the home environment card 1911 shown in FIG. 19, for example, a touch operation, the electronic device 100 may display a user interface 2010 shown in FIG. 20A. The user interface 2010 may include a page title 2011, a space option display region 2012, a first environment data card 2014, and a second environment data card 2014.

The page title 2011 may indicate that the user interface 2010 is a user interface that presents home environment data. The foregoing home environment data is home device data of the foregoing smart home device that can provide an environment monitoring function. The home environment data may include air quality, a temperature, humidity, and the like. The page title 2011 may include text content, for example, "Home environment".

The space option display region 2012 may include one or more space options, for example, an entire house option, a kitchen option, a living room option, a kitchen option, a primary bedroom option, a secondary bedroom option, and the like. The electronic device 100 may display, on the user interface, environment data of a space corresponding to a selected space option in the space option display region 2012. The environment data of a space may be environment data monitored by a smart home device whose spatial attribute is the space.

As shown in FIG. 20A, an entire house option in the space option display region 2012 is in a selected state. The electronic device 100 may display, on the user interface 2010, environment data monitored by all smart home devices in the house.

The first environment data card 2013 may display a plurality of different types of environment data, for example, air quality, a temperature, humidity, and a change trend of the air quality in a period of time. The user interface 2010 displays the environment data monitored by the smart home devices in the entire house. There may be a plurality of devices used to monitor a temperature in the smart home devices of the entire house. The electronic device 100 may display a lowest temperature (for example, 22°C) and a highest temperature (for example, 26°C) of the entire house in the first environment data card 2013. There may be a plurality of devices used to monitor humidity in the smart home devices of the entire house. The electronic device 100 may display the lowest humidity (for example, 34%) and the highest humidity (for example, 48%) of the entire house in the first environment data card 2013.

The second environment data card 2014 may display a change trend of one type of environment data in a period of time. The second environment data card 2014 may include an expansion control 2014A. The expansion control 2014A may be used to trigger the electronic device 100 to display one or more environment data type options. The electronic device 100 may display, in the second environment data card 2014, environment data corresponding to an environment data type selected from the one or more environment data type options.

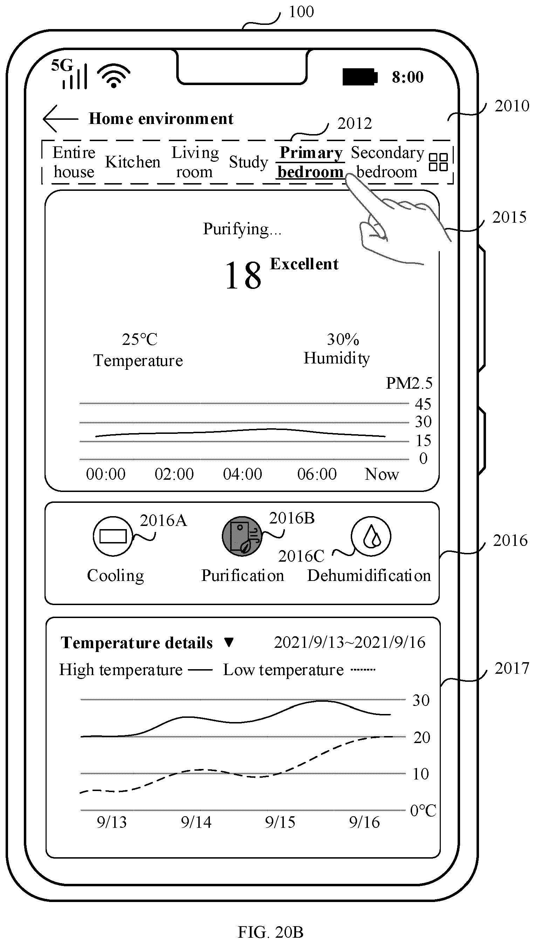

As shown in FIG. 20B, in response to a user operation performed on the primary bedroom option in the space option display region 2012, the electronic device 100 may display, on the user interface 2010, environment data monitored by the smart home device of the primary bedroom. In FIG. 20B, the user interface 2010 may include a primary-bedroom first data card 2015, an environment control display box 2016, and a primary-bedroom second data card 2017.

For content of the primary -bedroom first data card 2015, refer to the descriptions of the first environment data card 2013 shown in FIG. 20A.

For content of the primary-bedroom second data card 2017, refer to the descriptions of the second environment data card 2014 shown in FIG. 20A.

The environment control display box 2016 may include a temperature control 2016A, a purification control 2016B, and a dehumidification control 2016C. The temperature control element 2016A may be used to control a smart home device that can provide a temperature adjustment function in the primary bedroom. The purification control 2016B may be used to control a smart home device that can provide a purification function in the primary bedroom. The dehumidification control 2016C may be used to control a smart home device that can provide a dehumidification function in the primary bedroom.

It may be understood that the temperature adjustment function, the purification function, and the dehumidification function may be sub-functions of the environment function.

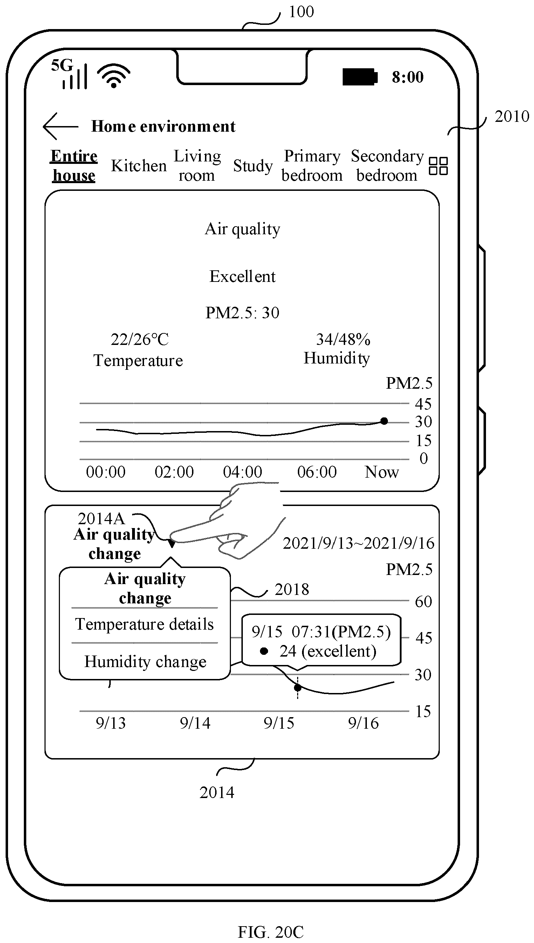

As shown in FIG. 20C, in response to a user operation performed on the expansion control 2014A in the second environment data card 2014, the electronic device 100 may display a type option box 2018. The type option box 2018 may include one or more environment data type options, for example, an air quality change option, a temperature details option, and a humidity change option. In response to a user operation performed on an environment data type option in the type option box 2018, the electronic device 100 may display, in the second environment data card 2014, environment data corresponding to the environment data type option.

A specific manner of displaying the home environment data by the electronic device 100 is not limited in embodiments of this application.

It can be learned from FIG. 20A to FIG. 20C that the user can view specific content of the environment data like the air quality, the temperature, and the humidity at home by using the home environment card 1911 shown in FIG. 19, to learn a detailed status of the home environment.

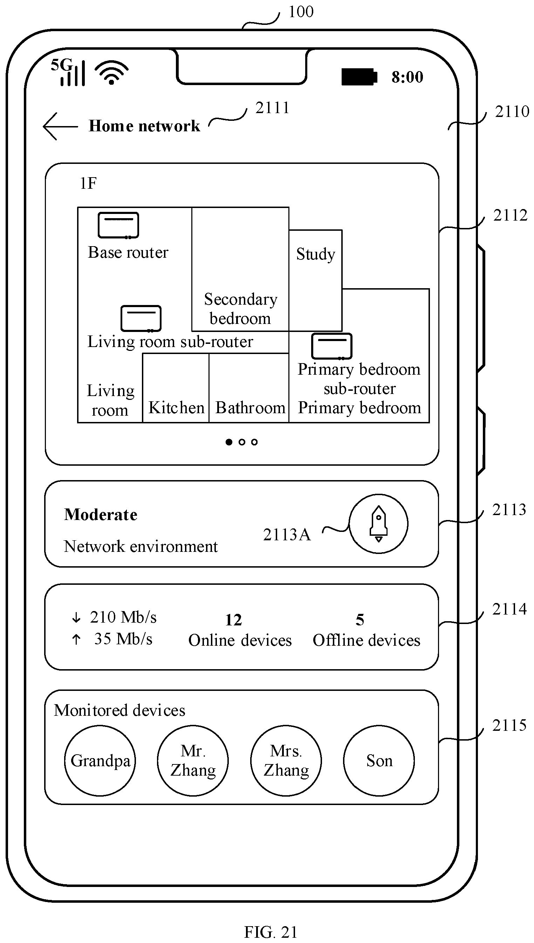

**FIG. 21** **is a schematic diagram of an example of a scenario in which the electronic device 100 displays detailed content of home network data.**

In response to a user operation performed on the home network card 1912 shown in FIG. 19, for example, a touch operation, the electronic device 100 may display a user interface 2110 shown in FIG. 21. The user operation performed on the home network card 1912 may be a user operation performed on a region in which no control (for example, the acceleration control 1912A) is displayed on the home network card 1912. The user interface 2110 may include a page title 2111, a network distribution card 2112, a network environment card 2113, a networked device data card 2114, and a monitored device data card 2115.

The page title 2111 may indicate that the user interface 2110 is a user interface that presents the home network data. The home network data is the home device data of the smart home device that can provide the network function. The home network data may include location distribution of devices that provide network access, a network speed, a quantity of access network devices, an internet access status of the access network devices, and the like. The page title 2111 may include text content, for example, "Home network".

The network distribution card 2112 may be used to display the location distribution of the devices that provide network access. As shown in FIG. 21, the network distribution card 2112 displays location distribution of network access devices (for example, a router) located on a first floor. In response to a sliding-leftward or slidingrightward user operation performed on the network distribution card 2112, the electronic device 100 may display, on the network distribution card 2112, location distribution of network access devices located on another floor. The network distribution card 2112 may be further used to display a relationship between the network access devices, for example, a base router, a living room sub-router, and a primary bedroom sub-router.

The network environment card 2113 may be used to display a speed status (for example, "Moderate") of the home network. The network environment card 2113 may include an acceleration control 2113A. A function of the acceleration control 2113A is the same as the function of the acceleration control 1912A shown in FIG. 19.

The networked device data card 2114 may be used to display a quantity of online devices and a quantity of offline devices in a home.

The monitored device data card 2115 may include one or more user options. In response to a user operation performed on a user option (for example, "Son") in the monitored device data card 2115, the electronic device 100 may display time, bandwidth, data usage, and the like of network connection when a device associated with a user corresponding to the user option accesses the home network.

A specific manner of displaying the home network data by the electronic device 100 is not limited in embodiments of this application.

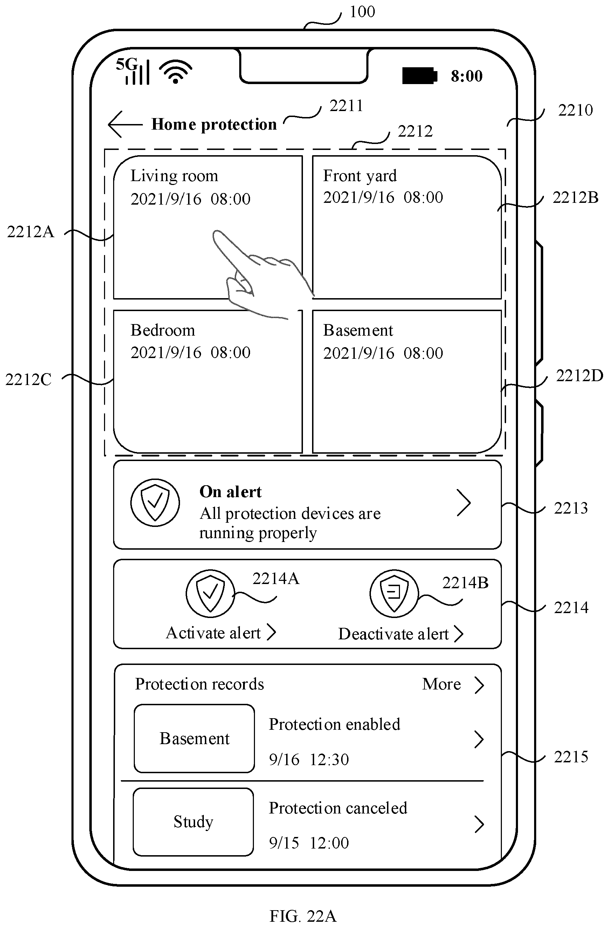

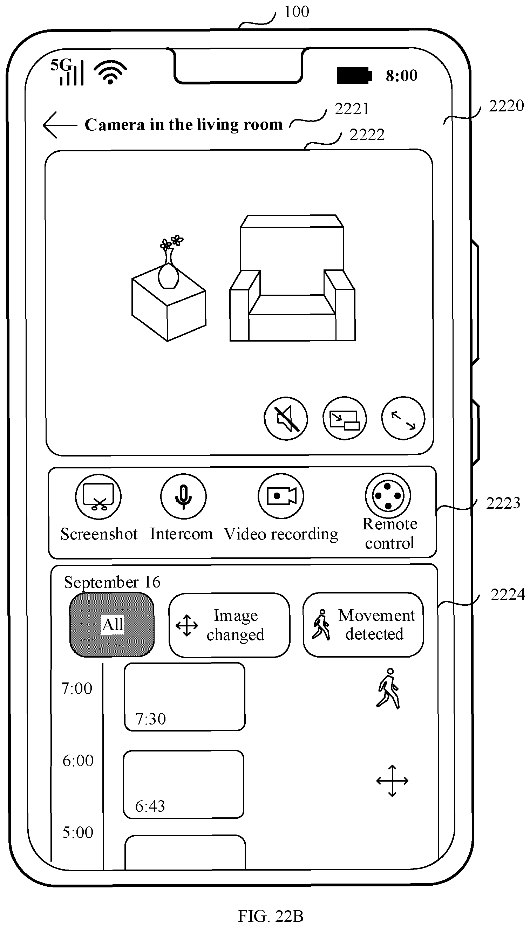

**FIG. 22A** **and** **FIG. 22B** **are schematic diagrams of an example of a scenario in which the electronic device 100 displays detailed content of home security protection data.**

In response to a user operation performed on the home security protection card 1913 shown in FIG. 19, for example, a touch operation, the electronic device 100 may display a user interface 2210 shown in FIG. 22A. The user interface 2210 may include a page title 2211, a monitoring image option region 2212, a protection status 2213, a protection component 2214, and a protection record 2215.

The page title 2211 may indicate that the user interface 2010 is a user interface that displays the home security protection data. The home security protection data is the home device data of the smart home device that can provide the security protection function. The home security protection data may include an image or a video shot by a camera, analysis of an exception detected by a smart home device that can raise an alert, alarm record data of a smart home device that can raise an alarm, and the like. The page title 2211 may include text content, for example, "Home protection".

The monitoring image option region 2212 may include one or more monitoring image options, for example, a living room monitoring image option 2212A, a front yard monitoring image option 2212A, a bedroom monitoring image option 2212A, and a basement monitoring image option 2212A. When detecting that there is a camera in one space, the electronic device 100 may display, in the monitoring image option region 2212, a monitoring image option corresponding to the space. A monitoring image option may be used to trigger the electronic device 100 to display a monitoring image collected by a camera corresponding to the monitoring image option.

The protection status 2213 may indicate a working status of a smart home device that can provide a security protection function in a home. For example, the protection status 2213 displays the alert shown in FIG. 22A, and may indicate that all smart home devices that can provide a security protection function in a home are in an on state. The protection status 2213 may be further used to trigger the electronic device 100 to display a user interface including related information and a control of the smart home device that can provide the security protection function.

The protection component 2214 may include an alert enabling control 2214A and an alert disabling control 2214B. A function of the alert enabling control 2214A may be the same as the function of the alert enabling control 1913B shown in FIG. 19. A function of the alert disabling control 2214B may be the same as the function of the alert disabling control 1913C shown in FIG. 19. It may be understood that an entrance of the protection component 2214 is deeper than an entry of the home security protection card 1913 (that is, compared with the security protection card 1913, the user needs to perform more user operations to see the protection component 2214). In this case, the control in the home security protection card 1913 can help the user more quickly control all smart home devices that can provide the security protection function in the home. This can simplify a user operation of controlling a plurality of smart home devices that can provide the security protection function. Optionally, the user may alternatively enter the user interface 2210 shown in FIG. 22A to control the smart home device that can provide the security protection function.

The protection record 2215 may include one or more protection records. The protection record may include a record of turning on or off the smart home device that can provide the security protection function.

In response to a user operation performed on the living room monitoring image option 2212A shown in FIG. 22A, the electronic device 100 may display a user interface 2220 shown in FIG. 22B. The user interface 2220 may be used to display detailed content of the security protection data in the living room. The user interface 2220 may include a page title 2221, a monitoring image display region 2222, a camera control 2223, and a monitoring record 2224.

The page title 2221 may indicate that the user interface 2220 is a user interface displaying detailed content of the security protection data in the living room. The security protection data in the living room may include an image or a video shot by a camera whose spatial attribute is the living room. The page title 2221 may include text content, for example, "Camera in the living room".

The monitoring image display region 2222 may be used to display the image or the video shot by the camera whose spatial attribute is the living room.

The camera control 2223 may include one or more controls for controlling the camera in the living room, for example, a screenshot control, an intercom control, a video recording control, and a remote control. The screenshot control may be used to take a screenshot of content shot by the camera in the living room. The intercom control may be used to trigger the electronic device 100 to send a microphone turn-on instruction to the camera in the living room. In this way, the electronic device 100 can send collected voice data to the camera in the living room. The camera in the living room may play a voice of the user by using the microphone. The video recording control may be used to trigger the electronic device 100 to send a video recording instruction to the camera in the living room, to instruct the camera in the living room to perform video recording. The remote control may be used to trigger the electronic device 100 to send a remote control instruction to the camera in the living room. The remote control instruction may be used to instruct the camera in the living room to rotate, so as to change a shooting direction.

Not limited to the control shown in FIG. 22B, the camera control 2223 may further include more or fewer controls.

The monitoring record 2224 may include one or more monitor records. A monitoring record may be an image or a video shot by the camera in the living room in a period of time. The electronic device 100 may classify the monitoring record based on content in the monitoring record. For example, when a plurality of monitoring images in a monitoring record change, for example, one monitoring image is a monitoring image photographed in a direction of a sofa in the living room, and the other monitoring image is a monitoring image photographed in a direction of a television in the living room, the electronic device 100 may classify the monitoring record into a category of "Image change". For another example, when a plurality of monitoring images in a monitoring record indicate that a person is moving, for example, a person A is at a location A in a monitoring image, and the person A is at a location B in another monitoring image, the electronic device 100 may classify the monitoring record into a category of "Movement detected". A manner in which the electronic device 100 classifies the category of the monitor record is not limited in embodiments of this application.

It can be learned from the embodiments shown in FIG. 22A and FIG. 22B that the user can view specific content of the home security protection data by using the home security protection card 1913 shown in FIG. 19, to learn a security status in a home.

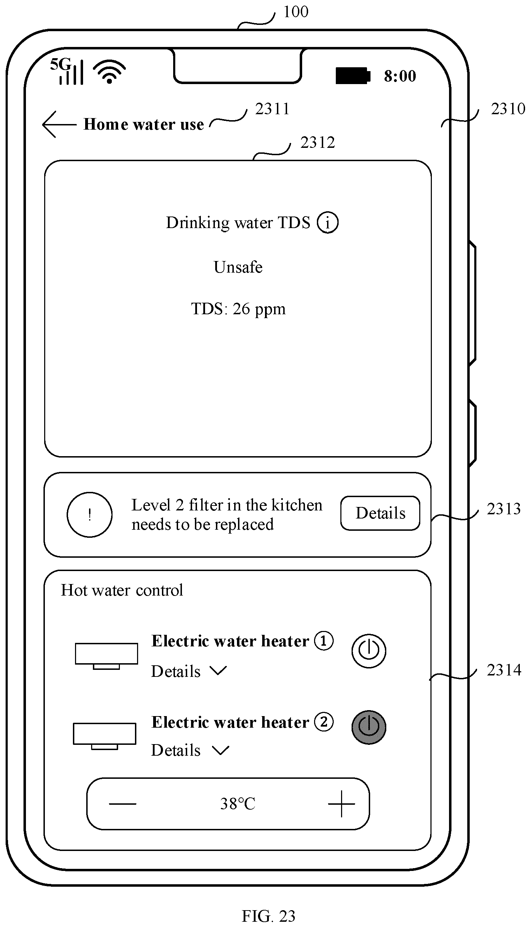

**FIG. 23** **is a schematic diagram of an example of a scenario in which the electronic device 100 displays detailed content of home water use data.**

In response to a user operation performed on the home water use card 1917 shown in FIG. 19, for example, a touch operation, the electronic device 100 may display a user interface 2310 shown in FIG. 23. The user interface 2310 may include a page title 2311, a water quality card 2312, a device status card 2313, and a hot water control card 2314.

The page title 2311 may indicate that the user interface 2310 is a user interface that displays the home water use data. The home water use data is the home device data of the smart home device that can provide the water use function. The home water use data may include water quality data, consumable data of the smart home device that can provide the water use function, a working status of the smart home device that can provide the water use function, and the like. The page title 2311 may include text content, for example, "Home water use".

The water quality card 2312 can be used to display the quality of home water

The device status card 2313 may be used to display the consumable data of the smart home device that can provide the water use function, for example, consumption of a filter element of a water filter.

The hot water control card 2314 may include a control used to control an electric water heater, for example, a control for turning on the electric water heater, or a control for adjusting a temperature of the electric water heater.

A specific manner in which the electronic device 100 displays the home water use data is not limited in embodiments of this application.

It may be understood that the foregoing user interface for displaying the home device data and the control used to control the smart home device is merely an example for description, and shall not constitute a limitation on this application.

It can be learned from the scenarios shown in FIG. 19, FIG. 20A to FIG. 20C, FIG. 21, FIG. 22A, FIG. 22B, and FIG. 23 that, the user can quickly view a status of a home environment, a home network, home security protection, home water use, and the like, and does not need to separately view corresponding home device data on a display interface of each smart home device.

In some embodiments, in response to a user operation of adding a smart home device, the electronic device 100 may establish a binding relationship with the added smart home device. The electronic device 100 may integrate home device data (for example, an operating status and monitored data) generated by the newly added smart home device into a card for presenting existing smart home device data.

For example, the newly added smart home device is a smart home device that can provide the security protection function. The electronic device 100 may integrate home device data generated by the camera and the home security protection data shown in FIG. 22A. For example, the newly added smart home device is a camera. A spatial attribute of the camera is an entry way. The electronic device 100 may display an entry way monitoring image option in the monitoring image option region 2212. The user may view, by using the entryway monitoring image option, a monitoring image shot by the camera located in the entry way.

In the foregoing embodiments, the user can efficiently integrate home device data generated by smart home devices that can provide different functions, so that the user can quickly view statuses of the home environment, the home network, the home security protection, the home water use, and the like.

It can be learned from the foregoing embodiments that, when the Space option 326 shown in FIG. 3C is selected, the electronic device 100 may provide, for the user, a control used to control all smart home devices that can provide one or more functions in one space, or a control used to control all smart home devices that can provide one or more functions in a plurality of spaces. To be specific, the user may enter the user interface triggered by the Space option 326 shown in FIG. 3C, and perform batch management on the plurality of smart home devices based on space and/or function classification. This can simplify the user operation of controlling the plurality of smart home devices by the user.

When the My home option 327 shown in FIG. 19 is selected, the electronic device 100 may integrate home device data of all smart home devices that can provide one function, and present integrated data to the user. In other words, home device data generated by all smart home devices in a home may be presented in an orderly manner by function classification. In this way, the user can quickly view statuses of the home environment, the home network, the home security protection, the home water use, and the like, and does not need to separately enter a related interface of each smart home device to view the home device data.

In some embodiments, the electronic device 100 or the service cloud server 300 may link, based on the function that can be provided by the smart home device in the home, a plurality of smart home devices to provide an intelligent service for the user.

For example, the service cloud server 300 determines that a smart home device that can provide an environment monitoring function is equipped in a home. The smart home devices that can provide the environment monitoring function includes an air quality monitor and an air purifier When the air quality monitor detects that air quality at home is poor (for example, PM2.5 is lower than a preset air quality threshold), the cloud server may send a turn-on instruction to the air purifier. In this way, the air purifier can be turned on to purify air quality in the home. When the air purifier is turned on, the electronic device 100 may further prompt the user that the air purifier is automatically turned on. For example, the electronic device 100 may display, in the home environment card 1911 shown in FIG. 19, prompt content indicating that the purifier is automatically turned on for the user. For another example, the electronic device 100 may push a notification message from the AI Life app. The notification message may prompt the user that the air purifier is automatically turned on.

The service cloud server 300 determines that the smart home device that can provide the security protection function is equipped at the user's home. The smart home device that provides the security protection function includes the camera and the buzzer. The cloud server may determine, based on image or video data collected by the camera, whether a person stays at a door, and when determining that a person stays at the door, trigger the buzzer to ring to raise an alarm. When the buzzer is triggered to ring, the electronic device 100 may further prompt the user that an exception occurs at the door of the home. For example, the electronic device 100 may push a notification message from the AI Life app. The notification message may prompt the user that an exception occurs at the door of the home, and the buzzer is triggered to ring. For another example, the electronic device 100 may classify, in the monitoring record shown in FIG. 22B, an image or a video that is obtained when a person stays at the door and that is monitored by the camera into a category of "Movement detected".

Not limited to the foregoing skills, the electronic device 100 or the service cloud server 300 may further create more skills based on the smart home devices in the home, and link the smart home devices to provide an intelligent service for the user by implementing these skills. It can be learned that the smart home device may be controlled by the electronic device 100 or the service cloud server 300 to provide a corresponding function, and the user may not need to perform an operation manually. This can reduce operation difficulty in controlling the smart home device by the user, and simplify a user operation of controlling the smart home device by the user. Creation and implementation of the foregoing skills help the user build a smart home, protect home security of the user, and improve life quality of the user.

The following describes a schematic diagram of a structure of a communication system 240 according to an embodiment of this application, and an electronic device 100 provides, based on the communication system 240, a control for controlling smart home devices in batches and a method for integrating home device information.

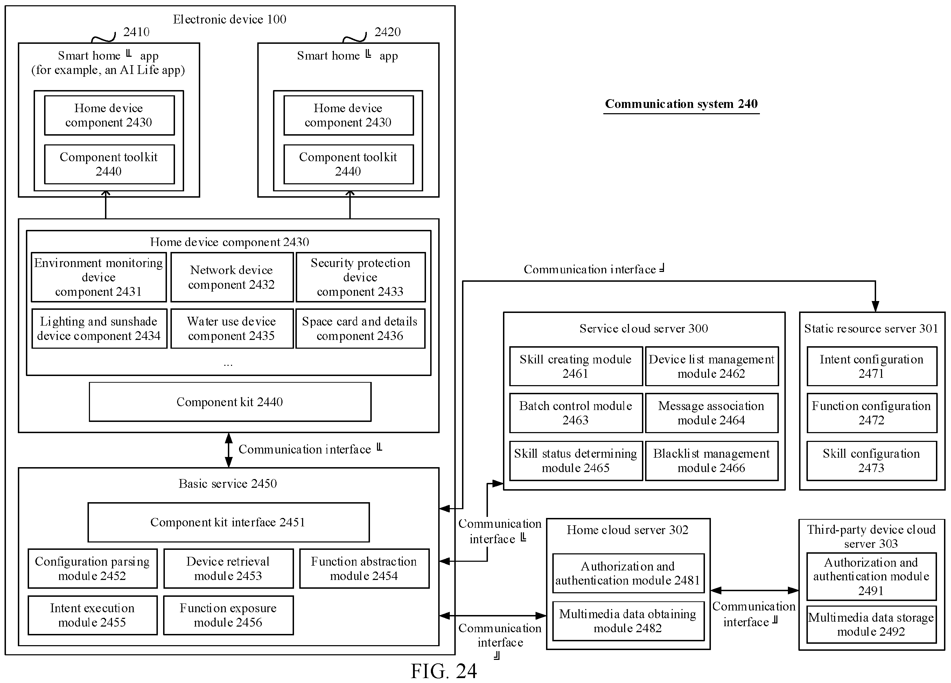

**FIG. 24** **is an example of a schematic diagram of a structure of the communication system 240 according to an embodiment of this application.**

The communication system 240 may include the electronic device 100, a service cloud server 300, a static resource server 301, a home cloud server 302, and a third-party device cloud server 303.

### (1) Electronic device 100

One or more applications used to control a smart home device, namely, smart home apps, may be installed in the electronic device 100, for example, a smart home ① app and a smart home ② app. The smart home ① app may be, for example, the AI Life app in the foregoing embodiments.

An application package of the smart home app may include a home device component 2430 and a component kit (kit) 2440. The home device component 2430 may include an environment monitoring device component 2431, a network device component 2432, a security protection device component 2433, a lighting and sunshade device component 2434, a water use device component 2345, a space card, a details component 2436, and the like.

For a presentation style of the environment monitoring device component 2431, refer to the home environment card 1911 shown in FIG. 19 and the specific presentation content of the home environment data shown in FIG. 20A to FIG. 20C.

For a presentation style of the network device component 2432, refer to the home network card 1912 shown in FIG. 19 and the specific presentation content of the home network data shown in FIG. 21.

For a presentation style of the security protection device component 2433, refer to the home security protection card 1913 shown in FIG. 19 and the specific presentation content of the home security protection data shown in FIG. 22A and FIG. 22B.

For a presentation style of the lighting and sunshade device component 24/4, refer to the common device control card 1916 shown in FIG. 19.

For a presentation style of the water use device component 2345, refer to the home water use card 1917 shown in FIG. 19 and the specific presentation content of the home water use data shown in FIG. 23.

For presentation styles of the space card and the details component 2436, refer to content like the card and the component presented by the electronic device 100 when the Space option 326 is in the selected state shown in FIG. 3C in the foregoing embodiments.

The component kit 2440 may be used to implement various components in the home device component 2430. In other words, the component kit 2440 may be used to determine content presented on each component of the home device component 2430.

The home device component 2430 and the component kit 2440 may exist in a form of binary files. The home device component 2430 and the component kit 2440 may be reused by different smart home apps. In other words, the home device component 2430 and the component kit 2440 may be open to a plurality of developers who develop a smart home app. An application package that includes the home device component 2430 and the smart home app of the component kit 2440 may provide, for the user, services shown in the foregoing scenarios of controlling the smart home device and viewing the home device data.

The electronic device 100 may further include a basic service 2450. It can be learned from the block diagram of the software structure of the electronic device 100 shown in FIG. 2B that, the basic service 2450 may be included in the application framework layer of the electronic device 100. The basic service 2450 may communicate with an upper-layer application (for example, the AI Life app) through a communication interface (1). The communication interface ① may be a cross-process communication interface. The communication interface (1) may help an app developer decouple a service provided in the basic service 2450 from an upper-layer application service (for example, a control component for controlling smart home devices in batches), and simplify an operation of developing an app by the app developer.

The basic service 2450 may include a component kit interface 2451, a configuration parsing module 2452, a device retrieval module 2453, a function abstraction module 2454, an intent execution module 2455, and a function exposure module 2456.

The component kit interface 2451 may be used by the component kit 2440 in the smart home app to invoke the basic service 2450 to implement various components in the home device component 2430. In other words, the component kit interface 2451 is an application programming interface provided by the basic service 2450 for the smart home app. The component kit interface 2451 may be an Android interface definition language (Android interface definition language, AIDL) interface. A type of the component kit interface 2451 is not limited in embodiments of this application.

The configuration parsing module 2452 may be configured to parse intent configuration 2471, function configuration 2472, and skill configuration 2473 in the static resource server 301. The intent configuration 2471 may include a control intent that can control the smart home device by the user. The foregoing control intent that can control the smart home device by the user may also be referred to as a control intent of the smart home device. The basic service 2450 may determine, based on a parsing result of the intent configuration 2471, controls that may be included in the smart home device. In the function configuration 2472, a function may be defined to include abilities that may be included in the smart home device. The basic service 2450 may classify the smart home device based on a parsing result of the function configuration 2472. In the skill configuration 2473, a function required by a skill, and a trigger condition and a trigger result for implementing the skill can be defined. The basic service 2450 can create a skill based on a parsing result of skill configuration 2473.

The intent configuration 2471, the function configuration 2472, and the skill configuration 2473 are described in detail by using an example when the static resource server 301 is described subsequently. Details are not described herein.

The device retrieval module 2453 may be configured to obtain, from the device list management module 2462 in the service cloud server 300, a smart home device that establishes a binding relationship with the electronic device 100. In other words, the device retrieval module 2453 may be configured to determine smart home devices that are included in a home.

The function abstraction module 2454 may be configured to abstract the control intent of the smart home device as a function. Specifically, the function abstraction module 2454 may determine, based on a result of parsing the function configuration by the configuration parsing module 2452 and smart home devices included in a home determined by the device retrieval module 2453, functions that can be provided by the smart home devices in the home. In this case, the function abstraction module 2454 may determine smart home devices that can provide one function in a home include.

The intent execution module 2455 may be configured to trigger the electronic device 100 to execute the control intent of the smart home device. For example, the smart home app detects that a user operation is performed on a control used to turn on all lights in a living room light group. The smart home app may send a message to the basic service 2450. The message indicates to turn on all the lights in the living room light group. In this case, the intent execution module 2455 may trigger the electronic device 100 to send a light-on control instruction to all the lights in the living room light group, to implement a control intent of turning on all the lights in the living room light group.

The function exposure module 2456 may be configured to expose, to different smart home apps, a function obtained by the function abstraction module 2454 through abstraction. In this way, different smart home apps can obtain, from the basic service 2450, functions that can be provided by a smart home device in a home.

It may be understood that not limited to the modules shown in FIG. 24, the electronic device 100 may further include other modules, such as a communication module, a hardware driver module, and the like.

A type of an application used to control the smart home device is not limited in embodiments of this application. In addition to the smart home app mentioned in the foregoing embodiments, an application of another type may be used, for example, an applet, a quick application, a distributed application, or the like.

### (2) Service cloud server 300

The service cloud server 300 may include a skill creating module 2461, a device list management module 2462, a batch control module 2463, a message association module 2464, a skill status determining module 2465, and a blocklist management module 2466.

The device list management module 2462 may be configured to manage smart home devices in different homes, for example, add a smart home device, delete a smart home device, change a spatial attribute of the smart home device, manage a use permission of the smart home device, and the like. In other words, the device list management module 2462 may store a device list of a smart home device that establishes a binding relationship with the electronic device 100. It may be understood that the smart home device that establishes a binding relationship with the electronic device 100 may be a smart home device associated with an account (for example, an account A) logged in to a smart home app in the electronic device 100. When the account A is logged in to another electronic device, for example, a smart home app in the electronic device 100, a smart home device associated with the account A may be considered to establish a binding relationship with the electronic device 100.

When receiving a request for obtaining a device list from the electronic device 100, the service cloud server 300 may send, to the electronic device 100, a device list that is in the device list management module 2462 and that includes a smart home device that establishes a binding relationship with the electronic device 100.

The skill creating module 2461 may be configured to create a skill instance. The service cloud server 300 may obtain the skill configuration 2473 from the static resource server 301. The skill creating module 2461 may determine, based on a skill defined in the skill configuration 2473 and a device list of smart home devices in a home in the device list management module 2462, functions provided by the smart home devices included in the home, to determine whether these smart home devices can be configured to implement the skill defined in the skill configuration 2743. When determining that a home includes a smart home device that can implement a skill, the service cloud server 300 may create a skill instance for the home, and when home device data generated by the smart home device meets a trigger condition of the skill instance, the service cloud server 300 links related smart home devices to implement the skill.

The batch control module 2463 may be configured to control smart home devices in batches. For example, in a scenario in which the electronic device 100 remotely controls a smart home device at home by using the service cloud server 300, if the electronic device 100 receives a user operation performed on a control for controlling a plurality of smart home devices by one tap, the electronic device 100 may send, to the service cloud server 300, an instruction used to control the plurality of smart home devices. When receiving the instruction, the service cloud server 300 may control, in batches by using the batch control module 2463, the plurality of smart home devices that the electronic device 100 requests to control.

The message association module 2464 may be configured to send information reported by the smart home device to an electronic device (for example, the electronic device 100) that establishes a binding relationship with the smart home device. For example, a gas monitor that establishes a binding relationship with the electronic device 100 detects a gas leakage. The gas monitor sends, to the service cloud server 300, information indicating the gas leakage. The message association module 2464 in the service cloud server 300 may determine that a binding relationship is established between the electronic device 100 and the gas monitor. The message association module 2464 may trigger the service cloud server 300 to send a message notification to the electronic device 100. The electronic device 100 may display the message notification to prompt the user with the gas leakage at home.

The skill status determining module 2465 may be configured to determine a status of a skill instance determined by the skill creating module 2461 for a home. A status of a skill instance may include whether home device data generated by a smart home device used to implement the skill instance meets a trigger condition for implementing the skill instance, a working status of a related smart home device in a process of implementing the skill instance, home device data generated by the related smart home device, and the like.

The blocklist management module 2466 may be configured to manage a smart home device that can be controlled by a control. The foregoing management manner may include: removing a smart home device from a device group that can be controlled by a control, adding a smart home device to a device group that can be controlled by a control, and the like. For example, the electronic device 100 provides a control used to control a living room light group. The living room light group includes all lights in the living room. In other words, the control may be used to control all the lights in the living room. In response to a user operation of removing a light A from the living room light group, the electronic device 100 may send, to the service cloud server 300, a message indicating to remove the light A from the living room light group. Then, the blocklist management module 2466 in the service cloud server 300 may add the light A to a blocklist of the living room light group. A smart home device in the blocklist of the living room light group may not be controlled by the control used to control the living room light group.

It can be learned from FIG. 24 that the basic service 2450 in the electronic device 100 may communicate with the service cloud server 300 through a communication interface ②. The communication interface ② may be an HTTPS interface. The basic service 2450 may receive, through the communication interface ②, data like the smart home device list, the skill instance, a smart home device blocklist, and a message reported by the smart home device from the service cloud server 300.

### (3) Static resource server 301

The static resource server 301 may be configured to store and update the intent configuration 2471, the function configuration 2472, and the skill configuration 2473. The basic service 2450 in the electronic device 100 may obtain a configuration file from the static resource server 301 through a communication interface ③. The communication interface ③ may be an HTTPS interface.

The intent configuration 2471 may include a control intent of the smart home device. The control intent may be determined based on a type (device type) and an ability (ability) of the smart home device.

In some embodiments, the intent configuration 2471 may include a table that is of a relationship between a smart home device and an ability of the smart home device and that is shown in Table 1.

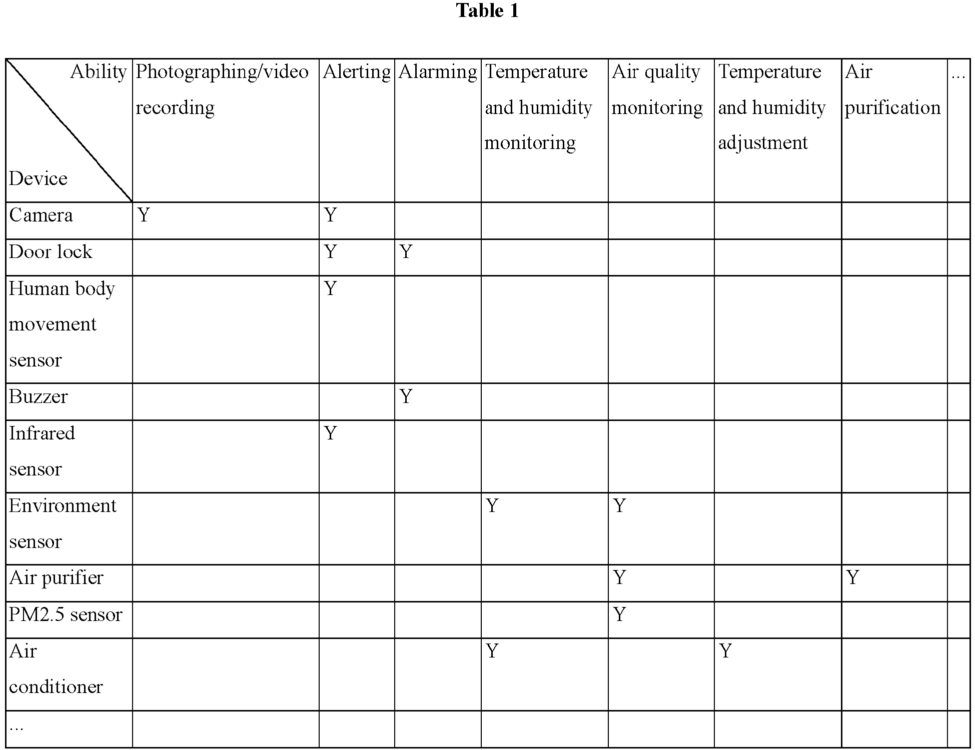

Table 1 may include a smart home device and an ability of the smart home device. "Y" in Table 1 may indicate that the smart home device has an ability indicated by a column corresponding to "Y".

The smart home devices in Table 1 may include smart home devices produced by a plurality of manufacturers, for example, a camera air conditioner A manufactured by a manufacturer A and an air conditioner B manufactured by a manufacturer B. The air conditioner A and the air conditioner B may have different abilities.

In a possible implementation, the ability of the smart home device may be determined based on an ability parameter obtained from each smart home device. Fields such as a device type, a device name, and an ability parameter of the smart home device may be written into the smart home device. The ability parameter may include a parameter indicating an ability of the smart home device, a control instruction that can be identified by the smart home device, and the like. Optionally, the ability of the smart home device may alternatively be obtained from the third-party cloud server 303.

The smart home device in Table 1 is used as an example. For a control intent of a smart home device included in the intent configuration 2471, refer to the following Table 2.

**Table 2**

| Smart home device | Control intent |
|---|---|
| Camera | Photographing/video recording, stopping photographing/video recording, enabling an alert, and disabling an alert |
| Door lock | Enabling an alert, disabling an alert, raising an alarm, and ending an alarm |
| Human body movement sensor | Enabling an alert and disabling an alert |
| Buzzer | Raising an alarm and ending an alarm |
| Infrared sensors | Activating an alert and deactivating an alert |
| Environment sensor | Enabling temperature and humidity monitoring, disabling temperature and humidity monitoring, enabling air quality monitoring, and disabling air quality monitoring |
| Air purifier | Enabling air quality monitoring, disabling air quality monitoring, enabling air purification, and disabling air purification |
| PM2.5 sensor | Enabling air quality monitoring and disabling air quality monitoring |
| Air conditioner | Temperature and humidity monitoring, disabling temperature and humidity monitoring, enabling temperature and humidity adjustment, and disabling temperature adjustment |

It may be understood that the alert may mean that the smart home device detects whether an exception occurs in home security. The alarm may mean that the user is prompted with the exception in home security, or a security risk target is warned.

The basic service 2450 in the electronic device 100 may determine, based on the parsing result of the intent configuration 2471, controls that the smart home device may have. For example, a control for controlling the camera may include a control for triggering the camera to perform photographing/video recording, a control for stopping photographing/video recording, a control for enabling an alert, and a control for disabling the alert.

In the function configuration 2472, a function may be defined to include a smart home device with which abilities. In other words, the function configuration 2472 may include a rule used to create a function instance.

The following Table 3 and Table 4 separately show an example of an ability required by a smart home device for a security protection function and an environment monitoring function.

**Table 3**

| | |
|---|---|
| Security protection | Ability of the smart home device |
| | Photographing/video recording |
| | Alerting |
| | Alarming |

**Table 4**

| | |
|---|---|
| Environment monitoring function | Ability of the smart home device |
| | Temperature and humidity monitoring |
| | Air quality monitoring |
| | Temperature and humidity adjustment |
| | Air purification |

It can be learned from Table 3 that a smart home device having one or more of the following abilities may provide a security protection function: photographing/video recording, alerting, and alarming. It can be learned from Table 4 that a smart home device having one or more of the following abilities may provide an environment monitoring function: temperature and humidity monitoring, air quality monitoring, temperature and humidity adjustment, and air purification.

An ability of the smart home device required to provide a function is not limited in embodiments of this application.

In the skill configuration 2473, the functions required by a skill, and a trigger condition and a trigger result of the skill can be defined. In other words, the skill configuration 2473 may include a rule for creating a skill instance.

For example, the skill configuration 2473 may include the following skill: raising an alarm when it is detected that a person stays at a door This skill requires a smart home device (for example, a camera, a human body movement sensor, and an infrared sensor) that can monitor whether people move, and a smart home device (for example, a buzzer) that can raise an alarm in smart home devices that can provide the security protection function. A trigger condition of the skill may be that a person stays at the door, and a trigger result is that a smart home device having an alarm ability raises an alarm. A method for determining whether a person stays at the door is not limited in embodiments of this application. For example, the service cloud server 300 may determine, based on a video shot by a camera, whether a time for which a person located at the door stops at the door exceeds a preset time. If the time for which a person located at the door stops at the door exceeds the preset time, the service cloud server 300 may determine that a person stays at the door.

The skill configuration 2473 may include the following skill: intelligent air purification. This skill requires a smart home device having an air quality monitoring ability and a smart home device having an air purification ability smart home devices that are in smart home devices that can provide the environment monitoring function. A trigger condition of this skill may be that air quality is detected to be lower than preset air quality, and a trigger result may be that the smart home device having the air purification ability is turned on.

A skill included in the skill configuration 2473 is not limited in embodiments of this application. For example, the skill configuration 2473 may further include a child growth recording skill, an energy consumption collection skill, and the like.

In the child growth recording skill, the service cloud server 300 may integrate child data collected by a device that has one or more of a photographing ability, a video recording ability, a height measurement ability, a weight measurement ability, and a positioning ability, and present the integrated child data to the user. The child growth recording skill can help parents to record changes in child's growth.

In the energy consumption collection skill, the service cloud server 300 may integrate energy consumption data like electricity consumption data, home gas consumption data, and home water consumption data of smart home devices, and present the integrated energy consumption data to a user. In this way, the user can quickly learn about the energy consumption in the home. Optionally, the service cloud server 300 may further push an energy saving suggestion to the user based on the energy consumption data, to help the user reduce unnecessary energy consumption.

### (4) Home cloud server 302

The home cloud server 302 may be configured to interconnect with the third-party device cloud server 303 to obtain multimedia data. The multimedia data may include data monitored by the smart home device. The multimedia data may be data in representation forms such as a text, a picture, an image, a sound, an animation, and the like.

The home cloud server 302 may include an authorization and authentication module 2481 and a multimedia data obtaining module 2482.

The authorization and authentication module 2481 may be configured to perform identity authentication between the home cloud server 302 and the third-party device cloud server 303. When the identity authentication succeeds, the third-party device cloud server 303 may send the multimedia data requested by the home cloud server 302 to the home cloud server 302. An implementation of performing identity authentication between the home cloud server 302 and the third-party device cloud server 303 is not limited in embodiments of this application. For example, identity authentication may be implemented between the home cloud server 302 and the third-party device cloud server 303 by using an OAUTH authentication service.

The multimedia data obtaining module 2482 may be configured to request the multimedia data from the third-party device cloud server 303. In a possible implementation, the smart home device may send the monitored data to a third-party device cloud server 303 corresponding to a manufacturer of the smart home device. A service party (for example, the electronic device 100 or the service cloud server 300) may not be able to directly access the third-party device cloud server 303. In this case, the electronic device 100 or the service cloud server 300 may obtain, by using the home cloud server 302, the multimedia data stored in the third-party device cloud server 303. The electronic device 100 or the service cloud server 300 may send a uniform resource identifier (uniform resource identifier, URI) of multimedia data that needs to be obtained to the home cloud server 302. The home cloud server 302 may request the multimedia data from the third-party device cloud server 303 based on the URI.

It can be learned from FIG. 24 that the basic service 2450 may communicate with the home cloud server 302 through a communication interface ⑤. The communication interface ⑤ may be an HTTPS interface. The basic service 2450 may send, through the communication interface ⑤, the URI of the required multimedia data to the home cloud server 302, and receive the multimedia data sent by the home cloud server 302.

The home cloud server 302 may communicate with the third-party device cloud server 303 through a communication interface ④. The communication interface ④ may be an HTTPS interface. Identity authentication may be performed between the home cloud server 302 and the third-party device cloud server 303 through the communication interface ④. In addition, the home cloud server 302 may send the URI of the required multimedia data to the home cloud server 302, and receive the multimedia data sent by the third-party device cloud server 303.

Not limited to the foregoing multimedia data, the home cloud server 302 may further obtain another type of home device information from the third-party device cloud server 303.

### (5) Third-party device cloud server 303

The third-party device cloud server 303 may include an authorization and authentication module 2491 and a multimedia data storage module 2492.

The authorization and authentication module 2491 may be configured to perform identity authentication between the third-party device cloud server 303 and the home cloud server 302.

When the identity authentication between the third-party device cloud server 303 and the home cloud server 302 succeeds, the third-party device cloud server 303 may query, based on the URI sent by the home cloud server 302, the multimedia data storage module 2492 for the multimedia data indicated by the URI. The third-party device cloud server 303 may send the multimedia data indicated by the URI to the home cloud server 302.

It may be understood that, not limited to the modules shown in FIG. 24, the service cloud server 300, the static resource server 301, the home cloud server 302, and the third-party device cloud server 303 may further include more or fewer modules.

In FIG. 24, a process of communication between the electronic device 100 and the service cloud server 300, the static resource server 301, and the home cloud server 302 may be implemented by using a communication module (not shown in FIG. 24) in the electronic device 100. A data transmission process is simplified for a data source and a final data processing module. In other words, in a process in which the basic service 2450 communicates with the service cloud server 300, the static resource server 301, and the home cloud server 302 through the communication interface shown in FIG. 24, another communication module participates. A specific data transmission process is not described in embodiments of this application.

**Based on the communication system 240 shown in** **FIG. 24****, the following describes a device control method according to an embodiment of this application.**

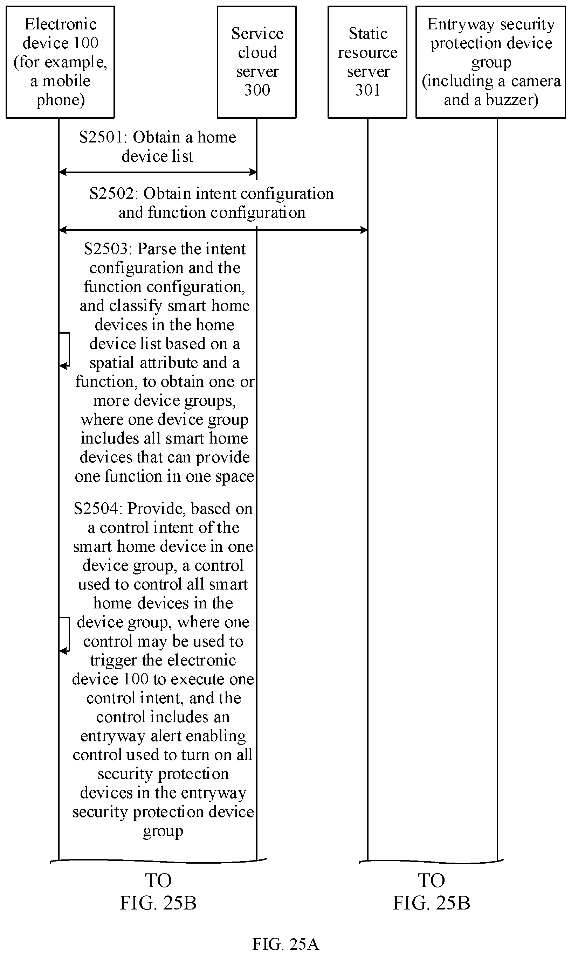

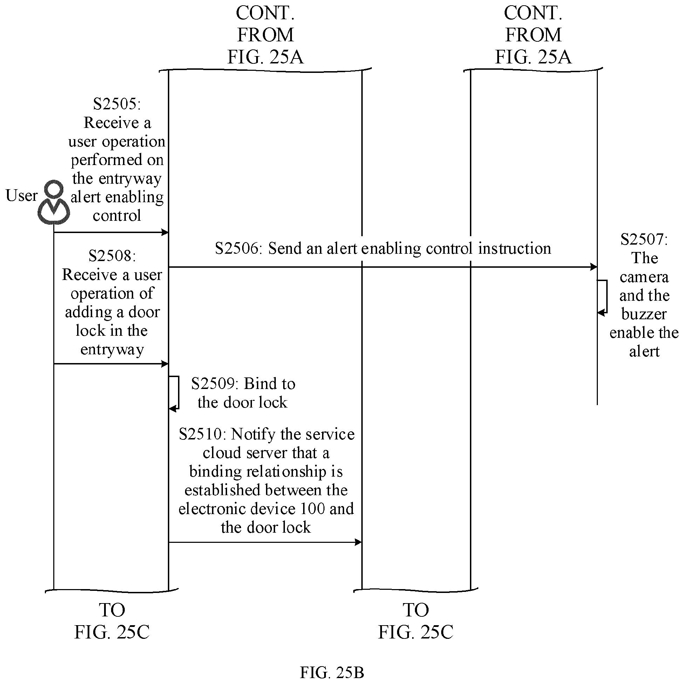

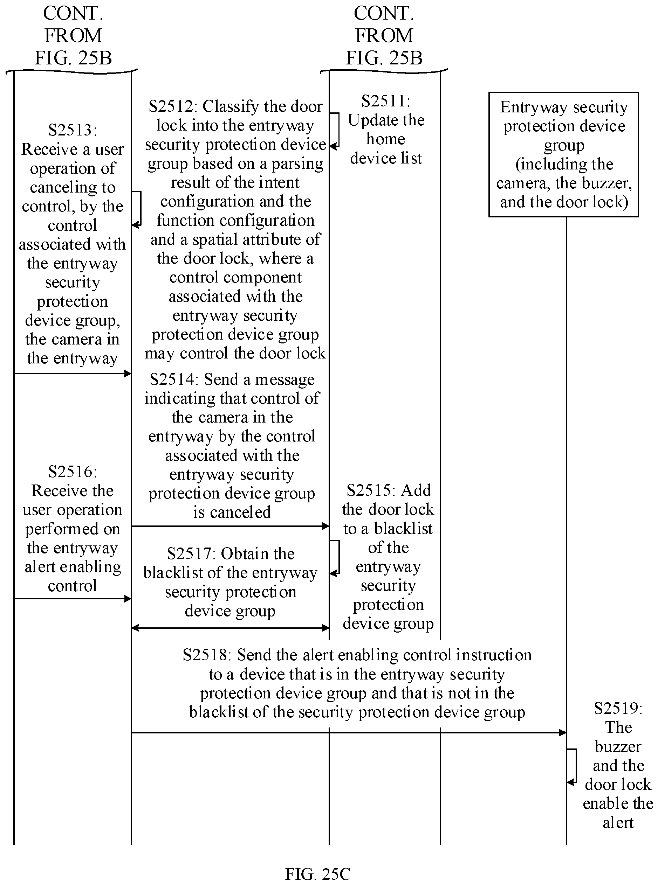

FIG. 25A to FIG. 25C are an example of a flowchart of a device control method according to an embodiment of this application. The method may include steps S2501 to S2507.
(1) Step S2501 to S2504: The electronic device 100 classifies smart home devices into a device group, and determines a control associated with each device group.

S2501: The electronic device 100 (for example, a mobile phone) may obtain a home device list from the service cloud server 300.

The electronic device 100 may manage and control a smart home device in a home by using a smart home app (for example, the AI Life app) installed on the electronic device 100. The electronic device 100 may establish a binding relationship with a smart home device in a home. The service cloud server 300 may store a home device list including a smart home device bound to the electronic device 100. The device retrieval module 2453 of the basic service 2450 in the electronic device 100 may request the home device list from the service cloud server 300. When receiving the request for the home device list, the service cloud server 300 may send, to the electronic device 100, the home device list that is in the device list management module 2462 and that includes the smart home device bound to the electronic device 100.

The home device list may indicate the smart home device bound to the electronic device 100 and a spatial attribute (for example, a kitchen, a living room, or a primary bedroom) of each smart home device.

S2502: The electronic device 100 may obtain the intent configuration and the function configuration from the static resource server 301.

An order of performing step S2501 and step S2052 is not limited in embodiments of this application.

S2503: The electronic device 100 may parse the intent configuration and the function configuration, and classify smart home devices in the home device list based on the spatial attribute and a function, to obtain one or more device groups, where one device group includes all smart home devices that can provide one function in one space.

When receiving the intent configuration and the function configuration, the configuration parsing module 2452 of the basic service 2450 in the electronic device 100 may parse the intent configuration and the function configuration.

In a possible implementation, the function abstraction module 2454 may create a function instance based on the smart home devices included in the device list, the spatial attribute of each smart home device, and the parsing results of the intent configuration and the function configuration.

Specifically, the function abstraction module 2454 may determine, based on the parsing results of the intent configuration and the function configuration, functions that can be provided by the smart home devices in a home and smart home devices included for each function. Further, the function abstraction module 2454 may classify, based on the spatial attribute, the smart home devices included for each function into different device groups. In this way, one device group includes all smart home devices that can provide one function in one space.

Herein, a specific description is provided by using an example of creating a security protection function instance and creating an environment monitoring function instance.

For the home device list obtained by the function abstraction module 2454, refer to the following Table 5.

**Table 5**

| Smart home device | Space attribute |
|---|---|
| Camera | Entryway |
| Buzzer | Entryway |
| Infrared sensor | Balcony |
| Environment sensor | Living room |
| Air purifier | Living room |

The function abstraction module 2454 may determine that the home smart home device in the home may provide a security protection function and an environment monitoring function.

### (a) Creating a security protection instance

The function abstraction module 2454 may create the security protection function instance shown in Table 6 below.

**Table 6**

| | | |
|---|---|---|
| Security protection function instance | Smart home device | Ability of the smart home device |
| | Camera | Photographing/video recording and alerting |
| | Buzzer | Alarming |
| | Infrared sensor | Alerting |

It can be learned from Table 6 that the security protection function instance may indicate smart home devices that can provide the security protection function in the home and abilities of these smart home devices.

Based on a spatial attribute of the smart home device that can provide the security protection function, the function abstraction module 2454 may classify the camera and the buzzer into an entryway security protection device group, and classify the infrared sensor into a balcony security protection device group.

### (b) Creating an environment monitoring instance

The function abstraction module 2454 may create an environment monitoring function instance shown in Table 7 below.

**Table 7**

| | | |
|---|---|---|
| Environment monitoring function | Smart home device | Ability of the smart home device |
| | Environment sensor | Temperature and humidity monitoring and air quality monitoring |
| | Air purifier | Air quality monitoring and air purification |

It can be learned from Table 7 that the environment monitoring function instance may indicate smart home devices that can provide an environment monitoring function in the home and abilities of these smart home devices.

Based on the spatial attribute of the smart home device that can provide the environment monitoring function, the function abstraction module 2454 may classify the environment sensor and the air purifier into a living room environment monitoring device group.

In some embodiments, the function abstraction module 2454 may alternatively not classify the smart home device based on the spatial attribute. For example, the function abstraction module 2454 may classify all smart home devices that can provide a function in a home into a device group, for example, classify the camera, the buzzer, and the infrared sensor into an entire-house security protection device group.

S2504: The electronic device 100 may provide, based on a control intent of the smart home device in one device group, a control used to control all smart home devices in the device group, where one control may be used to trigger the electronic device 100 to execute one control intent, and the control includes an entryway alert enabling control used to turn on all security protection devices in the entry way security protection device group.

For example, a control intent of the smart home device in the entry way security protection device group may include: photographing/video recording, stopping photographing/video recording, enabling an alert, disabling an alert, raising an alarm, and ending an alarm. Based on the control intent, the electronic device 100 may provide a control (for example, an entry way alert enabling control) for turning on all devices in the entry way security protection device group by one tap and a control (for example, an entry way alert disabling control) for turning off all the devices in the entryway security protection device group by one tap. The basic service 2450 may send the classification of the smart home device group and the data indicating the control associated with each device group to the component kit 2440 in the AI Life app. The component kit 2440 may indicate the electronic device 100 to implement drawing and presenting of the control associated with each device group. A control associated with a device group is a control used to control all smart home devices in the device group.

For styles of the entry way alert enabling control and the entry way alert disabling control, refer to the alert enabling control 1913B and the alert disabling control 1913C shown in FIG. 19.

In addition, when determining a control associated with a device group, the electronic device 100 may determine, based on a quantity of smart home devices included in the device group, a style of the control associated with the device group. When a device group includes only one smart home device, an identifier (for example, a name) of the smart home device in the device group may be presented on a control associated with the device group, to indicate that the control is used to control the smart home device. In addition, different states (such as an on state and an off state) presented on the control may indicate states of the smart home device. When a device group includes a plurality of smart home devices, controls associated with the device group may appear in pairs (for example, the entryway alert enabling control and the entryway alert disabling control). In addition, the component that includes the pair of controls may further include an expansion control. The expansion control may be used to view a plurality of smart home devices included in the device group.

(2) Step S2505 to S2507: The electronic device 100 controls the smart home devices in batches in response to a user operation.

S2505: The electronic device 100 receives a user operation performed on the entryway alert enabling control.

S2506: The electronic device 100 sends an alert enabling control instruction to all security protection devices in the entryway security protection device group. The entryway security protection device group includes a camera and a buzzer.

For a manner in which the electronic device 100 sends the alert enabling control instruction to the camera and the buzzer, refer to the descriptions in the foregoing embodiments.

S2507: The camera and the buzzer enable the alert.

After the alert is enabled, the camera can shoot an image or record a video. In a possible implementation, the camera may send the shot image data to the third-party device cloud server 303. The electronic device 100 may obtain, from the third-party device cloud server 303 by using the home cloud server 302, the image data shot by the camera, and present the image data to the user.

After the buzzer enables the alarm, the buzzer can ring an alarm when receiving a ringing instruction.

(3) Steps S2508 to S2512: The electronic device 100 integrates a smart home device newly added to the home and a smart home device that already exists in the home.

S2508: The electronic device 100 receives a user operation that is of adding a door lock in the entry way and that is performed on the AI Life app.

S2509: The electronic device 100 is bound to the door lock.

For step S2508 and step S2509, refer to the process of binding the electronic device 100 to the light ③ in the embodiments shown in FIG. 8A to FIG. 8D.

S2510: The electronic device 100 notifies the service cloud server 300 that a binding relationship is established between the electronic device 100 and the door lock.

S2511: The service cloud server 300 updates the home device list.

The service cloud server 300 may add the door lock to a home device list that includes a smart home device bound to the electronic device 100.

S2512: The electronic device 100 classifies the door lock into the entry way security protection device group based on a parsing result of the intent configuration and the function configuration and a spatial attribute of the door lock, where a control component associated with the entry way security protection device group may control the door lock.

In other words, when receiving a user operation performed on the entryway alert enabling control, the electronic device 100 may send the alert enabling control instruction to the camera, the buzzer, and the door lock in the entry way. When receiving the alert enabling control instruction, the door lock may enable an alert function of the door lock. For example, the door lock has a human body movement sensor. The door lock enabling the alert may include enabling the human body movement sensor to detect whether a person stays at the door

(4) Step S2513 to S2519: The electronic device 100 modifies, in response to a user operation, a smart home device that can be controlled by a control.

S2513: The electronic device 100 receives a user operation of canceling to control, by the control associated with the entry way security protection device group, the camera in the entryway.

For the user operation in step S2513, refer to the user operation of removing the smart home device shown in FIG. 9A and FIG. 9B.

S2514: The electronic device 100 sends, to the service cloud server 300, a message indicating that control of the camera in the entry way by the control associated with the entryway security protection device group is canceled.

S2515: The service cloud server 300 adds the door lock to a blocklist of the entryway security protection device group

Specifically, the blocklist management module in the service cloud server 300 may add the door lock to the blocklist of the entryway security protection device group. A smart home device in the blocklist of the entry way security protection device group may be a device that is not controlled by a control (for example, the entry way alert enabling control or the entryway alert disabling control) associated with the entry way security protection device group.

S2516: The electronic device 100 receives the user operation performed on the entry way alert enabling control.

The user operation in step S2516 may be the same as the user operation in step S2505.

S2517: The electronic device 100 obtains the blocklist of the entryway security protection device group from the service cloud server 300.

It may be understood that the service cloud server 300 may consider that an electronic device used for logging in to an account in the AI Life app is bound to a smart home device associated with the account. However, the user may switch different electronic devices to log in to the account in the AI Life app. In this case, a blocklist of a device group is stored in the service cloud server 300, so that when the user switches the electronic device used for logging in to the account in the AI Life app, different electronic devices may synchronize a smart home device that can be controlled by the control.

In some embodiments, before step S2506, the electronic device 100 may first obtain the blocklist of the entryway security protection device group, to determine whether a device that is not controlled by the entry way alert enabling control exists in the entryway security protection device group.

S2518: The electronic device 100 may send the alert enabling control instruction to a device that is in the entry way security protection device group and that is not in the blocklist of the security protection device group.

It may be understood that, when the user operation in step S2516 is performed after the user operation in step S2508, the electronic device 100 may send the alert enabling control instruction to a device that is in the entryway security protection device group including the camera, the buzzer, and the door lock and that is not in the blocklist of the entry way security protection device group.

S2519: The buzzer and the door lock enable the alert.

After the foregoing steps S2513 to S2519, when the user performs an operation on the entry way alert enabling control or the entryway alert disabling control, the user may control only the buzzer and the door lock in the entryway security protection device group, and does not trigger the camera in the entryway to enable or disable the alert.

In some embodiments, the electronic device 100 may send a message to the service cloud server 300 in response to a user operation indicating that the camera in the entryway accepts control from the control associated with the entryway security protection device group. The service cloud server 300 may remove the camera in the entryway from the blocklist of the entry way security protection device group based on the message.

In a possible implementation, in response to the user operation in step S2513, the electronic device 100 may remove the camera in the entryway from the entryway security protection device group. The control associated with the entryway security protection device group is only used to control the device included in the entry way security protection device group. In this case, after the camera in the entryway is removed from the entryway security protection device group, when the user performs an operation on the entryway alert enabling control or the entry way alert disabling control, the user may control only the buzzer and the door lock in the entryway security protection device group, and does not trigger the camera in the entryway to enable or disable the alert.

Steps S2505 to S2507, steps S2508 to S2512, and steps S2516 to S2519 are all optional steps. An execution sequence of steps S2505 to S2507, steps S2508 to S2512, and steps S2516 to S2519 is not limited in embodiments of this application.

It can be learned that, in the foregoing method, the user may not manually group the smart home devices. After the electronic device groups the smart home devices based on the function of the smart home device, the user may control a plurality of smart home devices in batches. The plurality of smart home devices may be devices of a same type or different types. According to the foregoing method, difficulty in controlling the smart home devices in batches by the user is reduced, and a user operation of controlling the smart home devices by the user is simplified.

In addition, for a smart home device newly added to a home, the electronic device 100 may integrate the smart home device and another smart home device that can provide a same function into a device group, and provide a control used to control all smart home devices in the device group. In this way, the user does not need to group the newly added smart home device each time after newly adding the smart home device. This can help the user control the smart home device more efficiently, and simplify a user operation of controlling a plurality of smart home devices.

In addition, the user may manually modify a group of a smart home device that is already classified by the electronic device 100, for example, remove a smart home device from a device group. In this case, a control used to control smart home devices included in the device group may no longer be used to control the removed smart home device. According to the foregoing method, a control used to control smart home devices included in a device group can better meet a user requirement, and a user operation of controlling a plurality of smart home devices by the user can be simplified.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A device control method, wherein the method comprises:
displaying, by an electronic device, a first control, wherein the first control is associated with a first device group, the first device group comprises X home devices that are in a first space and that can provide a first function, the first device group is classified by the electronic device based on a spatial attribute of the home device and a function that can be provided by the home device, and X is a positive integer; and
receiving, by the electronic device, a first user operation performed on the first control, and sending a first control instruction to the X home devices in the first device group, wherein the first control instruction enables a home device that receives the first control instruction to perform an operation indicated by the first control instruction.

2. The method according to claim 1, wherein the method further comprises:
displaying, by the electronic device, a second control; and
receiving, by the electronic device, a second user operation performed on the second control, and displaying a first user interface, wherein the first user interface comprises device information of Y home devices in the first space, device information of one home device in the device information of the Y home devices comprises one or more of the following: a control used to control the one home device, a working status of the one home device, and data monitored by the one home device, Y is a positive integer greater than or equal to X, and the Y home devices comprise the X home devices.

3. The method according to claim 1 or 2, wherein there are a plurality of home devices in the first device group, and the method further comprises:
displaying, by the electronic device, a third control; and
receiving, by the electronic device, a third user operation performed on the third control, and displaying a second user interface, wherein the second user interface comprises device information of the X home devices, and device information of one home device in the device information of the X home devices comprises one or more of the following: a control used to control the one home device, a working status of the one home device, and data monitored by the one home device.

4. The method according to any one of claims 1 to 3, wherein the method further comprises:
obtaining, by the electronic device, data monitored by a home device managed by the electronic device;
determining, by the electronic device based on a function that can be provided by the home device, a category of the data monitored by the home device, wherein the category of the data monitored by the home device comprises one or more of the following: environment monitoring data, network data, water use data, and security protection data; and
displaying, by the electronic device, a third user interface, wherein the third user interface comprises one component or a plurality of components, and one component displays one category of data monitored by the home device.

5. The method according to any one of claims 2 to 4, wherein the method further comprises:
displaying, by the electronic device, a fourth control, wherein the fourth control is associated with a second device group, the second device group comprises Z home devices that are in the first space and that can provide a second function, the second device group is classified by the electronic device based on a spatial attribute of the home device and a function that can be provided by the home device, Z is a positive integer, and the Z home devices are comprised in the Y home devices; and
receiving, by the electronic device, a fourth user operation performed on the fourth control, and sending a second control instruction to the Z home devices in the second device group, wherein the second control instruction enables a home device that receives the second control instruction to perform an operation indicated by the second control instruction.

6. The method according to claim 5, wherein the method further comprises:
receiving, by the electronic device, a fifth user operation, and combining the first control and the fourth control into a fifth control;
displaying, by the electronic device, the fifth control, wherein the fifth control is associated with the first device group and the second device group; and
receiving, by the electronic device, a sixth user operation performed on the fifth control, sending the first control instruction to the X home devices in the first device group, and sending the second control instruction to the Z home devices in the second device group.

7. The method according to claim 6, wherein the method further comprises:
receiving, by the electronic device, a seventh user operation performed on the fifth control, and separating the fifth control into the first control and the fourth control, wherein the sixth user operation and the seventh user operation are user operations performed on the fifth control in different manners.

8. The method according to any one of claims 2 to 7, wherein the first control and the second control are displayed on a first card, and the method further comprises:
displaying, by the electronic device, a second card, wherein a sixth control and a seventh control are displayed on the second card, wherein
the sixth control is associated with a third device group, the third device group comprises M home devices that are in a second space and that can provide the first function, the third device group is classified by the electronic device based on a spatial attribute of the home device and a function that can be provided by the home device, M is a positive integer, the sixth control is used to trigger the electronic device to send a third control instruction to the M home devices in the third device group, and the third control instruction enables a home device that receives the third control instruction to perform an operation indicated by the third control instruction; and
the seventh control is used to trigger the electronic device to display a fourth user interface, the fourth user interface comprises device information of W home devices in the second space, and device information of one home device in the device information of the W home devices comprises one or more of the following: a control used to control the one home device, a working status of the one home device, and data monitored by the one home device.

9. The method according to claim 8, wherein the method further comprises:
receiving, by the first electronic device, an eighth user operation, and combining the first card and the second card into a third card;
displaying, by the electronic device, the third card, wherein an eighth control is displayed on the third card, and the eighth control is associated with the first device group and the third device group; and
receiving, by the electronic device, a ninth user operation performed on the eighth control, sending the first control instruction to the X home devices in the first device group, and sending the third control instruction to the M home devices in the third device group.

10. The method according to claim 9, wherein a ninth control is further displayed on the third card, and the method further comprises:
receiving, by the electronic device, a tenth user operation performed on the ninth control, and displaying a fifth user interface, wherein the fifth user interface comprises the device information of the Y home devices in the first space and the device information of the W home devices in the second space.

11. The method according to claim 9 or 10, wherein the method further comprises:
receiving, by the electronic device, an eleventh user operation performed on the eighth control, and sending the first control instruction to the X home devices in the first device group; and
receiving, by the electronic device, a twelfth user operation performed on the eighth control, and sending the third control instruction to the M home devices in the third device group, wherein the ninth user operation, the eleventh user operation, and the twelfth user operation are user operations performed on the eighth control in different manners.

12. The method according to any one of claims 9 to 11, wherein the method further comprises:
receiving, by the electronic device, a thirteenth user operation performed on the eighth control, and separating the eighth control into a ninth control and a tenth control, wherein
the ninth control is used to trigger the electronic device to send the first control instruction to the X home devices in the first device group; and
the tenth control is used to trigger the electronic device to send the third control instruction to the M home devices in the third device group.

13. The method according to any one of claims 9 to 12, wherein the method further comprises:
receiving, by the electronic device, a fourteenth user operation performed on the third card, and separating the third card into the first card and the second card.

14. The method according to any one of claims 1 to 13, wherein the method further comprises:
receiving, by the electronic device, a fifteenth user operation, wherein the fifteenth user operation is used to add a first home device as a home device managed by the electronic device, and the first home device is a home device that is in the first space and that can provide the first function; and
receiving, by the electronic device, a sixteenth user operation performed on the first control, and sending the first control instruction to the X home devices in the first device group and the first home device, wherein the first device group comprises the first home device.

15. The method according to any one of claims 1 to 14, wherein before the displaying, by an electronic device, a first control, the method further comprises:
displaying, by the electronic device, an eleventh control, wherein the eleventh control is associated with a fourth device group, the fourth device group comprises X+1 home devices that are in the first space and that can provide the first function, the fourth device group is classified by the electronic device based on a spatial attribute of the home device and a function that can be provided by the home device, and the X+1 home devices comprise the X home devices and a second home device, wherein
the eleventh control is used to trigger the electronic device to send the first control instruction to the X+1 home devices in the fourth device group; and
receiving, by the electronic device, a seventeenth user operation, and removing the second home device from the fourth device group, to obtain the first device group.

16. An electronic device, wherein the electronic device comprises a communication apparatus, a memory, and a processor, the memory is configured to store a computer program, and the processor is configured to invoke the computer program, so that the electronic device performs the method according to any one of claims 1 to 15.

17. A computer-readable storage medium, comprising instructions, wherein when the instructions are run on an electronic device, the electronic device is enabled to perform the method according to any one of claims 1 to 15.

18. A computer program product, wherein the computer program product comprises computer instructions, and when the computer instructions are run on an electronic device, the electronic device is enabled to perform the method according to any one of claims 1 to 15.
